# EUROPEAN PATENT SPECIFICATION

(11) **EP 4 409 357 B1**
(45) Date of publication and mention of the grant of the patent: **04.11.2026**
(21) Application number: 22877250.5
(22) Date of filing: 28.09.2022
(51) Int. Cl.: G02F 1/13, G02F 1/01, G02F 1/13363, G02F 1/1347, G09G 3/36

(54) **MARKS FOR PRIVACY DISPLAY**
MARKIERUNGEN FÜR DATENSCHUTZANZEIGE
MARQUES POUR AFFICHAGE DE CONFIDENTIALITÉ

(30) Priority: 30.09.2021 US 202163250580 P
(43) Date of publication of application: 07.08.2024
(73) Proprietor: RealD Spark, LLC, Boulder CO 80301 (US)
(72) Inventor: HARROLD, Jonathan, Beverly Hills, California 90212 (US); WOODGATE, Graham, Beverly Hills, California 90212 (US); ROBINSON, Michael, Beverly Hills, California 90212 (US); RAMSEY, Robert, Beverly Hills, California 90212 (US); IHAS, Ben, Beverly Hills, California 90212 (US)
(74) Representative: J A Kemp LLP
(86) International application number: PCT/US2022/045030
(87) International publication number: WO 2023/055795

(56) References cited:
- US-A1- 2005 243 265
- US-A1- 2005 243 265
- US-A1- 2019 250 458
- US-A1- 2020 110 301
- US-A1- 2020 110 301
- US-A1- 2020 185 590

## Description

### TECHNICAL FIELD

This disclosure generally relates to illumination from light modulation devices, and more specifically relates to control of privacy display.

### BACKGROUND

Privacy displays provide image visibility to a primary user that is typically in an on-axis position and reduced visibility of image content to a snooper, that is typically in an off-axis position. A privacy function may be provided by micro-louvre optical films that transmit some light from a display in an on-axis direction with low luminance in off-axis positions. However such films have high losses for head-on illumination and the micro-louvres may cause Moiré artefacts due to beating with the pixels of the spatial light modulator. The pitch of the micro-louvre may need selection for panel resolution, increasing inventory and cost.

Switchable privacy displays may be provided by control of the off-axis optical output.

Control may be provided by means of luminance reduction, for example by means of switchable backlights for a liquid crystal display (LCD) spatial light modulator. Display backlights in general employ waveguides and edge emitting sources. Certain imaging directional backlights have the additional capability of directing the illumination through a display panel into viewing windows. An imaging system may be formed between multiple sources and the respective window images. One example of an imaging directional backlight is an optical valve that may employ a folded optical system and hence may also be an example of a folded imaging directional backlight. Light may propagate substantially without loss in one direction through the optical valve while counter-propagating light may be extracted by reflection off tilted facets as described in U.S. Patent No. 9,519,153. US 2020/110301 A1 discloses a display device for use in ambient illumination comprising a spatial light modulator arranged to output light, wherein the spatial light modulator comprises an output polariser arranged on the output side of the spatial light modulator, the output polariser being a linear polariser, a view angle control arrangement comprising: an additional polariser arranged on the output side of the output polariser, the additional polariser being a linear polariser, a reflective polariser arranged between the output polariser and the additional polariser, the reflective polariser being a linear polariser, and at least one polar control retarder arranged between the reflective polariser and the additional polariser, the at least one polar control retarder including a switchable liquid crystal retarder comprising a layer of liquid crystal material, and first and second transmissive electrodes on opposite sides of the layer of liquid crystal material, and a control system arranged to control the spatial light modulator and to apply voltages across the first and second transmissive electrodes for driving the layer of liquid crystal material, wherein the control system is arranged to be operable in plural modes of operation, including: a wide-angle operational display mode ("public mode"), in which the control system controls the spatial light modulator to display an operational image and applies voltages across the first and second transmissive electrodes that drive the layer of liquid crystal material such that the operational image is visible at a wide angle and a narrow angle, at least one narrow-angle operational display mode, in which the control system controls the spatial light modulator to display an operational image and applies voltages across the first and second transmissive electrodes that drive the layer of liquid crystal material such that the operational image is visible at the narrow angle but not at the wide angle. US 2005/243265 A1 discloses a display device enabling privacy modes using components that block or obscure light outside a narrow viewing angle. This includes patterns like chequerboards, optical illusions, or logos superimposed on the image to reduce legibility from wider angles. Patterned electrodes can apply voltage to create fixed or selectable patterns that enhance privacy by masking content for off-angle viewers.

In a known privacy display the privacy mode is provided by the addition of a removable louver film, such as marketed by 3M Corporation, which may not be fitted or removed by users reliably and therefore in practice, is not assiduously attached by the user every time they are outside the office. In another known privacy display the control of privacy mode is electronically activated but control is vested in the user who must execute a keystroke to enter privacy mode.

### BRIEF SUMMARY

According to a first aspect of the present disclosure. there is provided a display device for use in ambient illumination comprising: a spatial light modulator arranged to output light, wherein the spatial light modulator comprises an output polariser arranged on the output side of the spatial light modulator, the output polariser being a linear polariser, a view angle control arrangement comprising: an additional polariser arranged on the output side of the output polariser, the additional polariser being a linear polariser; a reflective polariser arranged between the output polariser and the additional polariser, the reflective polariser being a linear polariser, and at least one polar control retarder arranged between the reflective polariser and the additional polariser, the at least one polar control retarder including a switchable liquid crystal retarder comprising a layer of liquid crystal material, and first and second transmissive electrodes on opposite sides of the layer of liquid crystal material, wherein at least one of the first and second transmissive electrodes is patterned in areas separated by gaps to provide plural addressable regions of the layer of liquid crystal material, at least one of the plural regions being in a shape of a mark for display to an observer; and a control system arranged to control the spatial light modulator and to apply voltages across the first and second transmissive electrodes for driving the layer of liquid crystal material, wherein the control system is arranged to be operable in plural modes of operation, including: a wide-angle operational display mode, in which the control system controls the spatial light modulator to display an operational image and applies voltages across the first and second transmissive electrodes that drive the layer of liquid crystal material into the same state in different regions such that the operational image is visible at a wide angle and a narrow angle, and the mark is not visible at the narrow angle or the wide angle; at least one narrow-angle operational display mode, in which the control system controls the spatial light modulator to display an operational image and applies voltages across the first and second transmissive electrodes that drive the layer of liquid crystal material into states in different regions such that the operational image is visible at the narrow angle but not at the wide angle, and the mark is not visible at the narrow angle: and at least one mark display mode in which the control system applies voltages across the first and second transmissive electrodes that drive the layer of liquid crystal material into different states in different regions such that the mark is visible.

A display device may further be provided with a share mode wherein the display may be observed by multiple observers with high image visibility and high image uniformity. The display device may further be provided with a privacy mode in which the display may be observed with high image visibility with high uniformity by a display user and provide an image with advantageously high security factor to a display snooper (that in an automotive vehicle may be a driver of the vehicle). The privacy mode of the display device may further be provided as a privacy mark mode in which the snooper may observe a mark and the displayed image data is not visible; and the user may observe no mark and the displayed image data is clearly visible. The display device may be provided with a sleep mode in which the mark is visible from some viewing positions when the spatial light modulator does not output light. The mark may provide desirable information about the display such as being an icon or text. The icon or text may be used to at least promote a brand, indicate useful information and/or provide an improved aesthetic appearance of the display.

The at least one mark display mode may include a mark display mode in which the control system controls the spatial light modulator to display no image and applies voltages across the first and second transmissive electrodes that drive the layer of liquid crystal material into different states in different regions such that the mark may be visible at the wide angle but may not be visible at the narrow angle. Advantageously the power consumption of the mark display mode may be significantly reduced while the mark may be displayed.

The at least one mark display mode may include a mark display mode in which the control system controls the spatial light modulator to display an illumination image for illuminating the mark and applies voltages across the first and second transmissive electrodes that drive the layer of liquid crystal material into the different states in different regions such that the mark may be visible at the wide angle and at the narrow angle. The illumination image may be a still image. The illumination image may be aligned with the mark. Advantageously multiple users may observe the mark and the mark may have desirable colours.

The at least one narrow-angle operational display mode may include a narrow-angle operational display mode in which the control system controls the spatial light modulator to display an operational image and applies voltages across the first and second transmissive electrodes that drive the layer of liquid crystal material into the same state in different regions such that the mark may not be visible at the wide angle. Advantageously high uniformity of security factor across the display may be provided to the snooper.

The at least one narrow-angle operational display mode may include a narrow-angle operational display mode in which the control system controls the spatial light modulator to display an operational image and applies voltages across the first and second transmissive electrodes that drive the layer of liquid crystal material into different states in different regions such that the mark may be visible at the wide angle.

Advantageously the mark may be visible while the image may not be visible to the snooper.

The gaps may have a width of at most the twice the thickness of the layer of liquid crystal material, and preferably at most the thickness of the layer of liquid crystal material. Advantageously the visibility of the gaps may be reduced for the display observers.

Each of the first and second transmissive electrodes may be patterned to provide plural areas separated by gaps. Advantageously distal marks may be provided without visibility of connection electrodes.

The gaps that are aligned across the layer of liquid crystal material may be offset. The offset may be at least the thickness of the layer of liquid crystal material, and preferably at least twice the thickness of the layer of liquid crystal material. Advantageously the visibility of gaps between the plural regions may be reduced.

The plural regions may include at least one island region and at least one peripheral region extending around the island region, and areas of the first and second transmissive electrodes that are aligned with the at least one peripheral region may have bridging slit that may be aligned across the layer of liquid crystal material and through which may extend bridging tracks connected to areas of the first and second transmissive electrodes that are aligned with the at least one island region. Advantageously distal marks with island regions may be provided with reduced visibility of connection electrodes.

The plural regions may include at least one distal region that may not be adjacent to an outer edge of the first and second transmissive electrodes and at least one proximal region that may be adjacent to the outer edge of the first and second transmissive electrodes, and areas of the first and second transmissive electrodes that are aligned with the at least one proximal region may have at least one connection slit through which may extend at least one connection track connected to areas of the first and second transmissive electrodes that are aligned with the at least one distal region, the at least one connection track extending to the outer edge of the first and second transmissive electrodes, the control system being connected to the at least one connection track at the outer edge for applying voltages to the at least one distal region. Advantageously the distal regions may be driven with desirable voltages.

The at least one connection track connected to the areas of the first and second transmissive electrodes that are aligned with the at least one distal region may not be aligned with each other across the layer of liquid crystal material. The visibility of the connection tracks may be reduced so that advantageously the distal region may appear away from the edge of the electrode with no visible connection to the distal mark region.

The control system may be arranged to apply respective voltage signals to the at least one connection track and to the at least one proximal region having amplitude and phase that may be selected to apply voltages across the first and second transmissive electrodes that drive the plural regions of the layer of liquid crystal material into a desired state in accordance with the mode of operation in each of the at least one distal region, the parts of the at least one proximal region aligned with the at least one connection track, and the remainder of the proximal regions. The layer of liquid crystal material in the mark region may be driven differently to the layer of liquid crystal material in the background region, being the inverse of the mark region. The electrodes may overlap with areas in the mark region to provide a first state of the layer of liquid crystal material. The electrodes may overlap with areas in the background region to provide at a second state of the layer of the liquid crystal material that is different to the first state.

The at least one connection track may have a neck of reduced width adjacent to the at least one distal region to which it may be connected. Advantageously the resistance of the connection electrode may be reduced, and the visibility of at least part of the connection electrode near to the distal region reduced. Alignment tolerances between the first and second electrodes may be relaxed advantageously reducing cost.

One of the first and second transmissive electrodes may be patterned to provide plural regions separated by gaps, and the other of the first and second transmissive electrodes may not be patterned. Advantageously cost and complexity may be reduced.

The plural regions may include at least one distal region that may not be adjacent to an outer edge of the first and second transmissive electrodes and at least one proximal region that may be adjacent to the outer edge of the first and second transmissive electrodes, wherein areas of at least one of the first and second transmissive electrodes that are aligned with the at least one distal region may be connected to areas of the same transmissive electrode that are aligned with the at least one proximal region by a connector that may be configured to provide a resistance between the connected areas. Advantageously cost and complexity of at least one of the first and second electrodes may be reduced.

According to a second aspect of the present disclosure, there is provided a display device for use in ambient illumination comprising: a spatial light modulator arranged to output light, wherein the spatial light modulator comprises a display polariser arranged on a side of the spatial light modulator, the display polariser being a linear polariser, a view angle control arrangement comprising: an additional polariser arranged on the same side of the of the spatial light modulator as the display polariser outside the display polariser, the additional polariser being a linear polariser, and at least one polar control retarder arranged between the display polariser and the additional polariser, the at least one polar control retarder including a switchable liquid crystal retarder comprising a layer of liquid crystal material, and first and second transmissive electrodes on opposite sides of the layer of liquid crystal material, wherein at least one of the first and second transmissive electrodes is patterned in areas separated by gaps to provide plural addressable regions of the layer of liquid crystal material, at least one of the plural regions being in a shape of a mark for display to an observer, and a control system arranged to control the spatial light modulator and to apply voltages across the first and second transmissive electrodes for driving the layer of liquid crystal material, wherein the control system is arranged to be operable in plural modes of operation, including: a wide-angle operational display mode, in which the control system controls the spatial light modulator to display an operational image and applies voltages across the first and second transmissive electrodes that drive the layer of liquid crystal material into the same state in different regions such that the operational image is visible at a wide angle and at a narrow angle, and the mark is not visible at the narrow angle or the wide angle: and at least one narrow-angle operational display mode, in which the control system controls the spatial light modulator to display an operational image and applies voltages across the first and second transmissive electrodes that drive the layer of liquid crystal material into different states in different regions such that the operational image is visible at the narrow angle but not at the wide angle, and the mark is not visible at the narrow angle, but is visible at the wide angle.

The mark may be visible to the snooper in the privacy mode of operation. The snooper may see a desirable image such as a logo or text that indicates that the display is in use by the user but the image seen by the display user is advantageously not visible. The aesthetic appearance of the display may be improved.

The display polariser may be an input polariser arranged on an input side of the spatial light modulator, and the additional polariser may be arranged on the input side of the display polariser.

The frontal reflectivity of the display may be reduced, advantageously achieving an improved 'black' image appearance which may be perceived as having higher aesthetic quality.

The display polariser may be an output polariser arranged on an output side of the spatial light modulator, and the additional polariser may be arranged on the output side of the display polariser. The view angle control arrangement may further comprise a reflective polariser arranged between the output polariser and the additional polariser, the reflective polariser being a linear polariser, and the at least one polar control retarder may be arranged between the reflective polariser and the additional polariser. The security factor may advantageously be increased for a given ratio of display illuminance to display maximum luminance. The aesthetic appearance and the contrast of the mark to the snooper may be increased.

The operational image may be visible, or may not be visible, when a security factor Sₙ defined at the angle in question is, for all the regions, less than 1.0. or at least 1.0, respectively, where the security factor Sₙ is given by the equation: ${S}_{n} = {log}_{10} \left[1+{ρ}_{n}.α/\left(π.{P}_{n}\right)\right]$ wherein: *ρₙ* is the reflectivity of the display device at the angle in question: *Pₙ* is the ratio of the luminance of the display device at the angle in question to the maximum luminance of the display device; π is a solid angle in units of steradians; and α is a factor having a value of 4.0 steradians. The mark may be visible, or may not be visible when the security factor Sₙ defined at the angle in question may be different, or may be the same, respectively, in the at least one of the plural regions in a shape of a mark and in the other regions. The wide angle may be a polar angle of 45° from a normal to the display device at a predetermined azimuth angle around the normal to the display device. The narrow angle may be in a range of polar angles of from 0° to 20° from a normal to the spatial light modulator at the predetermined azimuth angle. Advantageously human factors measurements and illumination measurements may be used to achieve desirable image security to the snooper while providing visibility of the mark in at least mark display mode and privacy mark display mode of operation.

According to a third aspect of the present disclosure, there is provided a display device for use in ambient illumination comprising: a spatial light modulator arranged to output light, wherein the spatial light modulator comprises a display polariser arranged on a side of the spatial light modulator, the display polariser being a linear polariser; a view angle control arrangement comprising: an additional polariser arranged on the same side of the spatial light modulator as the display polariser outside the display polariser, the additional polariser being a linear polariser; and at least one polar control retarder arranged between the display polariser and the additional polariser, the at least one polar control retarder including a switchable liquid crystal retarder comprising a layer of liquid crystal material, and first and second transmissive electrodes on opposite sides of the layer of liquid crystal material, wherein each of the first and second transmissive electrodes is patterned in areas separated by gaps to provide plural addressable regions of the layer of liquid crystal material, at least one of the plural regions being in a shape of a mark for display to an observer. Advantageously share mode, privacy mode, and privacy mark modes of operation may be provided as described hereinabove. Further distal mark regions may be provided without visibility of connection electrodes.

According to a fourth aspect of the present disclosure, there is provided a display device for use in ambient illumination comprising: a spatial light modulator arranged to output light, wherein the spatial light modulator comprises a display polariser arranged on a side of the spatial light modulator, the display polariser being a linear polariser, a view angle control arrangement comprising: an additional polariser arranged on the same side of the spatial light modulator as the display polariser outside the display polariser, the additional polariser being a linear polariser; and at least one polar control retarder arranged between the display polariser and the additional polariser, the at least one polar control retarder including a switchable liquid crystal retarder comprising a layer of liquid crystal material, and first and second transmissive electrodes on opposite sides of the layer of liquid crystal material, wherein at least one of the first and second transmissive electrodes is patterned areas separated by gaps to provide plural addressable regions of the layer of liquid crystal material, at least one of the regions being in a shape of a mark for display to an observer, wherein the plural regions include at least one distal region that is not adjacent to an outer edge of the first and second transmissive electrodes and at least one proximal regions that is adjacent to the outer edge, wherein areas of at least one of the first and second transmissive electrodes that are aligned with the at least one distal region are connected to areas of the same transmissive electrode that are aligned with the at least one proximal region by a connector that is configured to provide a resistance between the connected areas. Advantageously the complexity and cost of at least one of the first and second transmissive electrodes may be reduced.

The at least one polar control retarder may further comprise a passive retarder. Advantageously the size of the polar region for which reduced luminance or increased reflectance is provided in the narrow angle mode or in at least part of the mark region or background region may be increased.

The spatial light modulator may be a transmissive spatial light modulator and the display device may further comprise a backlight arranged to supply light to the spatial light modulator. Advantageously the profile of luminous intensity with polar angle for backlight may be modified so that the off-axis luminance may be reduced and security factor may be increased.

The spatial light modulator may be an emissive spatial light modulator. Advantageously the thickness of the display device may be reduced.

According to a fifth aspect of the present disclosure, there is provided a privacy display apparatus comprising: a display device for use in ambient illumination comprising: a spatial light modulator arranged to output light, wherein the spatial light modulator comprises an output polariser arranged on the output side of the spatial light modulator, the output polariser being a linear polariser; a view angle control arrangement comprising: an additional polariser arranged on the output side of the output polariser, the additional polariser being a linear polariser; a reflective polariser arranged between the output polariser and the additional polariser, the reflective polariser being a linear polariser; and at least one polar control retarder arranged between the reflective polariser and the additional polariser, the at least one polar control retarder including a switchable liquid crystal retarder comprising a layer of liquid crystal material, and first and second transmissive electrodes on opposite sides of the layer of liquid crystal material, wherein at least one of the first and second transmissive electrodes is patterned to provide plural regions separated by gaps, at least one of the plural regions being in a shape of a mark for display to an observer; and a control system arranged to control the spatial light modulator and to apply voltages across the first and second transmissive electrodes for driving the layer of liquid crystal material, wherein the control system is arranged to be operable in plural modes of operation, including: a wide-angle operational display mode, in which the control system controls the spatial light modulator to display an operational image and applies voltages across the first and second transmissive electrodes that drive the layer of liquid crystal material into the same state in different regions; a narrow-angle operational display mode, in which the control system controls the spatial light modulator to display an operational image and applies voltages across the first and second transmissive electrodes that drive the layer of liquid crystal material into the same state in different regions; and at least one mark display mode in which the control system applies voltages across the first and second transmissive electrodes that drive the layer of liquid crystal material into different states in different regions such that the mark is visible. Advantageously a display device may be provided with a privacy mode in which the display may be observed with high image visibility with high uniformity by a user and provide an image with high security factor with high uniformity to a snooper. The display device may be provided with a share mode wherein the display may be observed by multiple observers with high image visibility and high uniformity. The display device may further be provided with a mode in which a mark may be observed for at least some observers. The mark may provide desirable information about the display such as being an icon or text.

The at least one mark display mode may include a mark display mode in which the control system controls the spatial light modulator to display no image and applies voltages across the first and second transmissive electrodes that drive the layer of liquid crystal material into different, states in different regions such that the mark may be visible at wide angles but not narrow angles. Advantageously the power consumption of the mark display mode may be significantly reduced.

The at least one mark display mode may include a mark display mode in which the control system controls the spatial light modulator to display an illumination image for illuminating the mark and applies voltages across the first and second transmissive electrodes that drive the layer of liquid crystal material into the different states in different regions such that the mark may be visible at wide and narrow angles. The illumination image may be a still image. The illumination image may be aligned with the mark.

Advantageously multiple users may observe the mark and the mark may have desirable colours.

Each of the first and second transmissive electrodes may be patterned to provide plural regions separated by gaps, the plural regions of the first and second transmissive electrodes being aligned across the layer of liquid crystal material. Advantageously distal marks may be provided without visibility of connection electrodes.

The gaps separating plural regions of the first and second transmissive electrodes that are aligned across the layer of liquid crystal material may be offset. The offset may be at least twice the thickness of the layer of liquid crystal material. Advantageously the visibility of gaps between the plural regions may be reduced.

The plural regions may include island regions and peripheral regions extending around the island regions, and the peripheral regions that are aligned across the layer of liquid crystal material have bridging slits that may be aligned and through which extend bridging tracks connected to the island regions that may be aligned across the layer of liquid crystal material. Advantageously marks with island regions may be conveniently provided while achieving high uniformity in narrow angle and wide angle operational modes.

The plural regions may include at least one distal region that is not adjacent to an edge of the first and second transmissive electrodes and at least one proximal region that is adjacent to an edge of the first and second transmissive electrodes, and the first and second transmissive electrodes may be further patterned to provide at least one connection track connected to the at least one distal regions and extending to an edge of the first and second transmissive electrodes, at which edge the control system may be connected to the connection tracks for applying voltages to the at least one distal region. The connection tracks connected to distal regions of the first and second transmissive electrodes that are aligned across the layer of liquid crystal material may not be aligned with each other across the layer of liquid crystal material. The control system may be arranged to apply respective voltage signals to each of the at least one connection track connected to the distal regions of the first and second transmissive electrodes and to each of the at least one proximal region having amplitude and phase that are selected to apply voltages across the first and second transmissive electrodes that drive the layer of liquid crystal material into a desired state in accordance with the mode of operation in each of the distal region, the overlap between the connection tracks and the respective proximal regions and in the remainder of the proximal regions. Advantageously distal marks may be provided without visibility of connection electrodes. The resistance of the connection electrodes may be reduced and uniformity of operational modes may be increased.

The at least one connection track may have a neck of reduced width adjacent to the at least one distal region to which it may be connected. Advantageously the resistance of the connection electrode may be reduced, and the visibility of at least part of the connection electrode reduced.

One of the first and second transmissive electrodes may be patterned to provide plural regions separated by gaps, and the other of the first and second transmissive electrodes may not be patterned. Advantageously cost and complexity may be reduced.

The plural regions may include at least one distal region that is not adjacent to an edge of the first and second transmissive electrodes and at least one proximal region that is adjacent to an edge of the first and second transmissive electrodes, wherein the at least one distal region may be connected to the at least one proximal region by a connector that may be configured to provide a resistance between the at least one distal region and the at least one proximal region. Advantageously cost and complexity may be reduced.

According to a sixth aspect of the present disclosure, there is provided a display device for use in ambient illumination comprising: a spatial light modulator arranged to output light, wherein the spatial light modulator comprises an output polariser arranged on the output side of the spatial light modulator, the output polariser being a linear polariser, a view angle control arrangement comprising: an additional polariser arranged on the output side of the output polariser, the additional polariser being a linear polariser; a reflective polariser arranged between the output polariser and the additional polariser, the reflective polariser being a linear polariser, and at least one polar control retarder arranged between the reflective polariser and the additional polariser, the at least one polar control retarder including a switchable liquid crystal retarder comprising a layer of liquid crystal material, and first and second transmissive electrodes on opposite sides of the layer of liquid crystal material, wherein each of the first and second transmissive electrodes is patterned to provide plural regions separated by gaps, the plural regions of the first and second transmissive electrodes being aligned across the layer of liquid crystal material and at least one of the plural regions being in a shape of a mark for display to an observer.

The plural regions may include at least one distal region that is not adjacent to an edge of the first and second transmissive electrodes and at least one proximal region that is adjacent to an edge of the first and second transmissive electrodes, and the first and second transmissive electrodes may be further patterned to provide at least one connection track connected to the at least one distal region and extending to an edge of the first and second transmissive electrodes for connection to a control system.

The at least one connection track connected to the at least one distal region of the first and second transmissive electrodes that are aligned across the layer of liquid crystal material may not be aligned with each other across the layer of liquid crystal material.

The display device may further comprising a control system arranged to control the spatial light modulator and to apply voltages across the first and second transmissive electrodes for driving the layer of liquid crystal material, wherein the control system may be arranged to apply respective voltage signals to each of the at least one connection track connected to the distal regions of the first and second transmissive electrodes and to each of the at least one proximal region having amplitude and phase that may be selected to apply voltages across the first and second transmissive electrodes for driving the layer of liquid crystal material into a desired state in accordance with a mode of operation in each of the distal regions, the overlap between the at least one connection track and the at least one proximal region and in the remainder of the at least one proximal region.

According to a seventh aspect of the present disclosure, there is provided display device for use in ambient illumination comprising: a spatial light modulator arranged to output light, wherein the spatial light modulator comprises an output polariser arranged on the output side of the spatial light modulator, the output polariser being a linear polariser, a view angle control arrangement comprising: an additional polariser arranged on the output side of the output polariser, the additional polariser being a linear polariser; a reflective polariser arranged between the output polariser and the additional polariser, the reflective polariser being a linear polariser, and at least one polar control retarder arranged between the reflective polariser and the additional polariser, the at least one polar control retarder including a switchable liquid crystal retarder comprising a layer of liquid crystal material, and first and second transmissive electrodes on opposite sides of the layer of liquid crystal material, wherein at least one of the first and second transmissive electrodes is patterned to provide plural regions separated by gaps, at least one of the regions being in a shape of a mark for display to an observer, wherein the plural regions include at least one distal region that is not adjacent to an edge of the first and second transmissive electrodes and at least one proximal regions that is adjacent to an edge, wherein the at least one distal region is connected to the at least one proximal region by a connector that is configured to provide a resistance between the at least one distal region and the at least one proximal region.

Embodiments of the present disclosure may be used in a variety of optical systems. The embodiments may include or work with a variety of projectors, projection systems, optical components, displays, microdisplays, computer systems, processors, self-contained projector systems, visual and/or audio-visual systems and electrical and/or optical devices. Aspects of the present disclosure may be used with practically any apparatus related to optical and electrical devices, optical systems, presentation systems or any apparatus that may contain any type of optical system. Accordingly, embodiments of the present disclosure may be employed in optical systems, devices used in visual and/or optical presentations, visual peripherals and so on and in a number of computing environments.

These and other advantages and features of the present disclosure will become apparent to those of ordinary skill in the art upon reading this disclosure in its entirety.

### BRIEF DESCRIPTION OF THE DRAWINGS

Embodiments are illustrated by way of example in the accompanying FIGURES. in which like reference numbers indicate similar parts, and in which:
**FIGURE 1A** is a schematic diagram illustrating a front perspective view of a privacy display arranged to operate in ambient illumination and comprising a transmissive spatial light modulator illuminated by a backlight, a reflective polariser and a polar control retarder comprising a liquid crystal polar control retarder comprising patterned electrodes;
**FIGURE 1B** is a schematic diagram illustrating a front perspective view of a privacy display arranged to operate in ambient illumination and comprising an emissive spatial light modulator, a reflective polariser and a polar control retarder comprising a liquid crystal polar control retarder comprising patterned electrodes and further comprising a colour filter layer,
**FIGURE 1C** is a schematic diagram illustrating a front perspective view of a view angle control optical element comprising a reflective polariser and a polar control retarder comprising a liquid crystal polar control retarder comprising patterned electrodes and further comprising a colour filter layer,
**FIGURE 1D** is a schematic diagram illustrating a front perspective view of a privacy display device comprising a transmissive spatial light modulator illuminated by a backlight an absorptive output display polariser and a polar control retarder comprising a liquid crystal polar control retarder comprising patterned electrodes;
**FIGURE 1E** is a schematic diagram illustrating a front perspective view of a privacy display device comprising a backlight a polar control retarder comprising a liquid crystal polar control retarder comprising patterned electrodes and a transmissive spatial light modulator comprising an absorptive input display polariser,
**FIGURE 1F** is a schematic graph illustrating the polar variation of reflectivity for a polar control retarder of FIGURE 1A when the electrodes are arranged to drive the liquid crystal retarder layer for high off-axis reflectivity:
**FIGURE 1G** is a schematic graph illustrating the polar variation of reflectivity for a polar control retarder of FIGURE 1A when the electrodes are arranged to drive the liquid crystal retarder layer for low off-axis reflectivity:
**FIGURE 1H** is a schematic graph illustrating the polar variation of luminance of an illustrative backlight of FIGURE 1A;
**FIGURE 1I** is a schematic graph illustrating the polar variation of security factor for the display of FIGURE 1A and TABLE 1 operating in privacy mode for a lux per nit ratio α of 4.0;
**FIGURE 1J** is a schematic graph illustrating the polar variation of security factor for the display of FIGURE 1A and TABLE 1 operating in privacy mode for a lux per nit ratio α of 1.0;
**FIGURE 1K** is a schematic graph illustrating the polar variation of security factor for the display of FIGURE 1A and TABLE 1 operating in share mode for a lux per nit ratio α of 1.0;
**FIGURE 1L** is a schematic graph illustrating the polar variation of security factor for the display of FIGURE 1E and TABLE 1 operating in privacy mode for a lux per nit ratio α of 4.0;
**FIGURE 2A** is a schematic diagram illustrating a front perspective view of a laptop illuminated by an ambient light source comprising a switchable privacy display device comprising a patterned electrode liquid crystal polar control retarder wherein no light is output from the spatial light modulator;
**FIGURE 2B** is a schematic diagram illustrating a look-down off-axis perspective view of a laptop illuminated by an ambient light source comprising a switchable privacy display device comprising a patterned electrode liquid crystal polar control retarder wherein no light is output from the spatial light modulator;
**FIGURE 3A** is a schematic diagram illustrating a front perspective view of a laptop illuminated by an ambient light source comprising a switchable privacy display device comprising a patterned electrode liquid crystal polar control retarder wherein light is output from the spatial light modulator and an image is provided on the spatial light modulator,
**FIGURE 3B** is a schematic diagram illustrating a look-down off-axis perspective view of a laptop illuminated by an ambient light source comprising a switchable privacy display device comprising a patterned electrode liquid crystal polar control retarder wherein light is output from the spatial light modulator and an image is provided on the spatial light modulator;
**FIGURE 4A** is a schematic diagram illustrating a front perspective view of a laptop illuminated by an ambient light source comprising a switchable privacy display operating in privacy mode comprising a patterned electrode liquid crystal polar control retarder wherein the patterned electrodes are driven with a common voltage and wherein light is output from the spatial light modulator and an image is provided on the spatial light modulator;
**FIGURE 4B** is a schematic diagram illustrating a look-down off-axis perspective view of a laptop illuminated by an ambient light source comprising a switchable privacy display operating in privacy mode comprising a patterned electrode liquid crystal polar control retarder wherein the patterned electrodes are driven with a common voltage and wherein light is output from the spatial light modulator and an image is provided on the spatial light modulator.
**FIGURE 4C** is a schematic diagram illustrating a front perspective view of a laptop illuminated by an ambient light source comprising a switchable privacy display operating in share mode comprising a patterned electrode liquid crystal polar control retarder wherein the patterned electrodes are driven with a common voltage and wherein light is output from the spatial light modulator and an image is provided on the spatial light modulator,
**FIGURE 4D** is a schematic diagram illustrating a look-down off-axis perspective view of a laptop illuminated by an ambient light source comprising a switchable privacy display operating in share mode comprising a patterned electrode liquid crystal polar control retarder wherein the patterned electrodes are driven with a common voltage and wherein light is output from the spatial light modulator and an image is provided on the spatial light modulator,
**FIGURE 5A** is a schematic diagram illustrating a front perspective view of a laptop computer comprising a switchable privacy display operating in mark privacy mode comprising a patterned electrode liquid crystal polar control retarder wherein the patterned electrodes are driven with different voltages and wherein image data is provided on the spatial light modulator;
**FIGURE 5B** is a schematic diagram illustrating a look-down off-axis perspective view of a laptop illuminated by an ambient light source comprising a switchable privacy display operating in mark privacy mode comprising a patterned electrode liquid crystal polar control retarder wherein the patterned electrodes are driven with different voltages and wherein image data is provided on the spatial light modulator;
**FIGURE 5C** is a schematic diagram illustrating a look-down off-axis perspective view of a laptop computer comprising a switchable privacy display operating in full screen privacy mode:
**FIGURE 5D** is a schematic diagram illustrating a look-down off-axis perspective view of a laptop computer comprising a switchable privacy display operating in mark privacy mode comprising a pattemed electrode liquid crystal polar control retarder with no reflective polariser wherein the patterned electrodes are driven with different voltages and wherein image data is provided on the spatial light modulator.
**FIGURE 6A** is a schematic diagram illustrating a top view of an automotive vehicle comprising a switchable privacy passenger infotainment display operating in privacy mode;
**FIGURE 6B** is a schematic diagram illustrating a top view of an automotive vehicle comprising a switchable privacy passenger infotainment display operating in share mode:
**FIGURE 6C** is a schematic diagram illustrating a top view of an automotive vehicle comprising an alternative switchable privacy passenger infotainment display operating in share mode;
**FIGURE 7A** is a schematic diagram illustrating a front perspective view of a privacy display for use in the automotive display of FIGURE 6C:
**FIGURE 7B** is a schematic diagram illustrating a side view of the backlight angle control element of FIGURE 7A;
**FIGURE 7C** is a schematic graph illustrating the polar variation of transmission for a backlight angle control element of FIGURE 7B;
**FIGURE 7D** is a schematic graph illustrating the polar variation of luminance for a backlight and backlight angle control element of FIGURE 7A;
**FIGURE 7E** is a schematic graph illustrating the polar variation of transmission for a further polar control retarder of FIGURE 7A in low driver distraction mode;
**FIGURE 7F** is a schematic graph illustrating the polar variation of transmission for a polar control retarder of FIGURE 7A in low driver distraction mode;
**FIGURE 7G** is a schematic graph illustrating the polar variation of reflectivity for a polar control retarder of FIGURE 7A in low driver distraction mode;
**FIGURE 7H** is a schematic graph illustrating the polar variation of security factor, S for the illustrative embodiment of TABLE 2 in a privacy mode of operation for the display device of FIGURE 7A with luminance profile of FIGURE 7D, transmission profile of FIGURES 7E-F and reflectivity profile of FIGURE 7G with a display head-on luminance, of value Yₘₐₓ measured in nits that is half of the illuminance of value I measured in lux;
**FIGURE 7I** is a schematic graph illustrating the polar variation of transmissive for a further polar control retarder of FIGURE 7A in share mode:
**FIGURE 7J** is a schematic graph illustrating the polar variation of transmissive for a polar control retarder of FIGURE 7A in share mode;
**FIGURE 7K** is a schematic graph illustrating the polar variation of reflectivity for a polar control retarder of FIGURE 7A in share mode;
**FIGURE 7L** is a schematic graph illustrating the polar variation of luminance for the display of FIGURE 7A in share mode;
**FIGURE 8A** is a schematic diagram illustrating a top view of the electrodes of the switchable liquid crystal polar control retarder and the driving of the top electrode pattern region A by a voltage VFA;
**FIGURE 8B** is a schematic diagram illustrating a top view of the electrodes of the switchable liquid crystal polar control retarder and the driving of the top electrode pattern region B by a voltage V_{FB};
**FIGURE 8C** is a schematic diagram illustrating a top view of the electrodes of the switchable liquid crystal polar control retarder and the driving of the bottom electrode pattern region A by a voltage V_{RA};
**FIGURE 8D** is a schematic diagram illustrating a top view of the electrodes of the switchable liquid crystal polar control retarder and the driving of the bottom electrode pattern region B by a voltage V_{RB};
**FIGURE 8E** is a schematic diagram illustrating in front view aligned first and second electrodes of FIGURES 8A-8D arranged to provide distal and proximal regions;
**FIGURE 8F** is a schematic diagram illustrating a perspective side view of alternative top and bottom electrodes for a switchable liquid crystal polar control retarder,
**FIGURE 9A** is a schematic diagram illustrating a top view of alternative electrodes of the switchable liquid crystal polar control retarder and the driving of the top electrode pattern region A by a voltage V_{FA};
**FIGURE 9B** is a schematic diagram illustrating a top view of alternative electrodes of the switchable liquid crystal polar control retarder and the driving of the top electrode pattern region B by a voltage V_{FB;}
**FIGURE 9C** is a schematic diagram illustrating a top view of alternative electrodes of the switchable liquid crystal polar control retarder and the driving of the bottom electrode pattern region A by a voltage V_{RA};
**FIGURE 9D** is a schematic diagram illustrating a top view of alternative electrodes of the switchable liquid crystal polar control retarder and the driving of the bottom electrode pattern region B by a voltage V_{RB};
**FIGURE 10A** is a schematic diagram illustrating an electrical circuit for the addressing of the patterned electrodes of FIGURES 7A-B and FIGURES 8A-B:
**FIGURE 10B** is a schematic diagram illustrating exemplary voltage signals for the addressing of the patterned electrodes of FIGURES 8A-D;
**FIGURE 10C** is a schematic diagram illustrating a look-down off-axis perspective view of a display illuminated by an ambient light source wherein the patterned electrode liquid crystal polar control retarder is addressed with the voltage signals of FIGURE 10B;
**FIGURE 10D** is a schematic diagram illustrating exemplary voltage signals for the addressing of the patterned electrodes of FIGURES 8A-D;
**FIGURE 10E** is a schematic diagram illustrating a look-down off-axis perspective view of a display illuminated by an ambient light source wherein the patterned electrode liquid crystal polar control retarder is addressed with the voltage signals of FIGURE 10D;
**FIGURE 11A** is a schematic phase diagram of the respective phases for driving the arrangement of FIGURES 8A-D in the mark display mode by means of phase control;
**FIGURE 11B** is a schematic diagram illustrating exemplary voltage signals for the addressing of the patterned electrodes of FIGURES 8A-D comprising constant amplitude voltages and phase shift control;
**FIGURE 11C** is a schematic graph illustrating the ratio of the normalised RMS voltage ratio as a function of phase step;
**FIGURE 11D** is a schematic diagram illustrating exemplary digital voltage signals for the addressing of the patterned electrodes of FIGURES 8A-D;
**FIGURE 11E** is a schematic graph illustrating the resultant applied voltage across switchable liquid crystal retarder for the arrangement of FIGURE 11D;
**FIGURE 11F** is a schematic graph illustrating the rms voltage as a function of the phase step Δ for the arrangement of FIGURE 11D;
**FIGURE 11G** is a circuit block diagram illustrating an exemplary implementation of a digital phase shift circuit to produce phase shifts of Δ as illustrated in FIGURE 11D;
**FIGURE 12A** is a schematic diagram illustrating a top view of the top electrode of the switchable liquid crystal polar control retarder for a mark with an island region;
**FIGURE 12B** is a schematic diagram illustrating a top view of the bottom electrode of the switchable liquid crystal polar control retarder for a mark with an island region;
**FIGURE 12C** is a schematic diagram illustrating a top view of the alignment of top and bottom electrodes of FIGURES 12A-B of the switchable liquid crystal polar control retarder for a mark with an island region;
**FIGURE 12D** is a schematic diagram illustrating a top view of the bottom electrode of the switchable liquid crystal polar control retarder for a mark with an island region:
**FIGURE 12E** is a schematic diagram illustrating a top view of the alignment of top and bottom electrodes of FIGURE 12A and FIGURE 12D of the switchable liquid crystal polar control retarder for a mark with an island region;
**FIGURE 13A** is a schematic diagram illustrating a top view of misalignment of top and bottom electrodes for a switchable liquid crystal polar control retarder;
**FIGURE 13B** is a schematic diagrams illustrating a top view of alternative top and bottom electrodes for a switchable liquid crystal polar control retarder,
**FIGURE 14A** is a schematic diagram illustrating a top view of an arrangement of marks and connection tracks;
**FIGURE 14B** is a schematic diagram illustrating a top view of an arrangement of marks and connection tracks wherein the display device is arranged in an automotive dashboard;
**FIGURE 14C** is a schematic diagram illustrating a top view of an arrangement of marks and connection tracks comprising first and second proximal regions;
**FIGURE 14D** is a schematic diagram illustrating a top view of the electrodes of a switchable liquid crystal polar control retarder comprising a segmented array of addressable electrodes;
**FIGURE 14E** is a schematic diagram illustrating the operation of a display device comprising a segmented array of addressable electrodes comprising a mark and a touch screen;
**FIGURE 14F** is a schematic diagram illustrating the operation of a display device comprising a segmented array of addressable electrodes and a touch screen;
**FIGURE 15A** is a schematic diagram illustrating a side view of a polar control retarder operating in zero volts mode and comprising offset gaps for top and bottom electrodes;
**FIGURE 15B** is a schematic diagram illustrating a side view of a polar control retarder operating in privacy mode and comprising offset gaps for top and bottom electrodes;
**FIGURE 15C** is a schematic diagram illustrating a side view of a polar control retarder operating in privacy mode and comprising aligned gaps for top and bottom electrodes;
**FIGURE 15D** is a schematic diagram illustrating a perspective front view of the alignment directions of a polar control retarder comprising a passive retarder comprising negative C-plate retarder;
**FIGURE 15E** is a schematic diagram illustrating a perspective front view of the alignment directions of a polar control retarder comprising a passive retarder comprising crossed positive A-plate retarders;
**FIGURE 15F** is a schematic diagram illustrating a perspective front view of the alignment directions of a polar control retarder comprising twisted alignment layers;
**FIGURE 15G** is a schematic diagram illustrating a perspective front view of the alignment directions of a polar control retarder comprising rotated alignment layers;
**FIGURE 16** is a schematic diagram illustrating a top view of alternative electrodes of the switchable liquid crystal polar control retarder;
**FIGURE 17A, FIGURE 17B, and FIGURE 17C** are schematic diagrams illustrating a top view of connector of the top electrode of FIGURE 16;
**FIGURE 18** is a schematic circuity diagram illustrating the driving of the voltages across the electrodes of FIGURE 16;
**FIGURE 19A** is a schematic diagram illustrating a top view of the electrodes of the switchable liquid crystal polar control retarder and the driving of the top electrode pattern region A by a voltage V_{FA} for a proximal mark;
**FIGURE 19B** is a schematic diagram illustrating a top view of the electrodes of the switchable liquid crystal polar control retarder and the driving of the top electrode pattern region B by a voltage V_{FB} for a proximal mark;
**FIGURE 19C** is a schematic diagram illustrating exemplary voltage signals for the addressing of the patterned electrodes of FIGURES 7A-7B for a reflective background region;
**FIGURE 19D** is a schematic diagram illustrating exemplary voltage signals for the addressing of the patterned electrodes of FIGURES 7A-7B for a reflective mark region;
**FIGURE 20A** is a schematic diagram illustrating a perspective side view of alternative top and bottom electrodes for a switchable liquid crystal polar control retarder;
**FIGURE 20B** is a schematic diagram illustrating a top view of the electrodes of the switchable liquid crystal polar control retarder of FIGURE 20A;
**FIGURE 20C** is a schematic diagram illustrating a look-down off-axis perspective view of a laptop illuminated by an ambient light source comprising a switchable privacy display device comprising the patterned electrode liquid crystal polar control retarder of FIGURE 20A and FIGURE 20B wherein no light is output from the spatial light modulator;
**FIGURE 21A** is a schematic diagram illustrating in side view the operation of the arrangement of FIGURE 1A for transmitted light from the spatial light modulator in the share mode of operation;
**FIGURE 21B** is a schematic diagram illustrating in side view the operation of the arrangement of FIGURE 1A for transmitted light from the spatial light modulator in a privacy mode of operation with high reflectivity of ambient light;
**FIGURE 21C** is a schematic diagram illustrating in side view the operation of the arrangement of FIGURE 1A for ambient light in the share mode of operation; and
**FIGURE 21D** is a schematic diagram illustrating in side view the operation of the arrangement of FIGURE 1A for ambient light in a privacy mode of operation with high reflectivity of ambient light.

### DETAILED DESCRIPTION

Terms related to optical retarders for the purposes of the present disclosure will now be described.

In a layer comprising a uniaxial birefringent material there is a direction governing the optical anisotropy whereas all directions perpendicular to it (or at a given angle to it) have equivalent birefringence.

The optical axis of an optical retarder refers to the direction of propagation of a light ray in the uniaxial birefringent material in which no birefringence is experienced. This is different from the optical axis of an optical system which may for example be parallel to a line of symmetry or normal to a display surface along which a principal ray propagates.

For light propagating in a direction orthogonal to the optical axis, the optical axis is the slow axis when linearly polarized light with an electric vector direction parallel to the slow axis travels at the slowest speed. The slow axis direction is the direction with the highest refractive index at the design wavelength. Similarly the fast axis direction is the direction with the lowest refractive index at the design wavelength.

For positive dielectric anisotropy uniaxial birefringent materials the slow axis direction is the extraordinary axis of the birefringent material. For negative dielectric anisotropy uniaxial birefringent materials the fast axis direction is the extraordinary axis of the birefringent material.

The terms half a wavelength and quarter a wavelength refer to the operation of a retarder for a design wavelength λ₀ that may typically be between 500nm and 570nm. In the present illustrative embodiments exemplary retardance values are provided for a wavelength of 550nm unless otherwise specified.

The retarder provides a phase shift between two perpendicular polarization components of the light wave incident thereon and is characterized by the amount of relative phase, Γ, that it imparts on the two polarization components; which is related to the birefringence Δn and the thickness d of the retarder by $Γ = 2 . π . Δn . d / {λ}_{0}$ eqn. 1

In eqn. 1, Δn is defined as the difference between the extraordinary and the ordinary index of refraction, i.e. $Δn = {n}_{e} - {n}_{o}$ eqn. 2

For a half-wave retarder, the relationship between d, Δn, and λ₀ is chosen so that the phase shift between polarization components is Γ = π. For a quarter-wave retarder, the relationship between *d*, Δn, and λ₀ is chosen so that the phase shift between polarization components is Γ = π/2.

The term half-wave retarder herein typically refers to light propagating normal to the retarder and normal to the spatial light modulator.

Some aspects of the propagation of light rays through a transparent retarder between a pair of polarisers will now be described.

The state of polarisation (SOP) of a light ray is described by the relative amplitude and phase shift between any two orthogonal polarization components. Transparent retarders do not alter the relative amplitudes of these orthogonal polarisation components but act only on their relative phase. Providing a net phase shift between the orthogonal polarisation components alters the SOP whereas maintaining net relative phase preserves the SOP. In the current description, the SOP may be termed the polarisation state.

A linear SOP has a polarisation component with a non-zero amplitude and an orthogonal polarisation component which has zero amplitude.

A linear polariser transmits a unique linear SOP that has a linear polarisation component parallel to the electric vector transmission direction of the linear polariser and attenuates light with a different SOP. The term "electric vector transmission direction" refers to a non-directional axis of the polariser parallel to which the electric vector of incident light is transmitted, even though the transmitted "electric vector" always has an instantaneous direction. The term "direction" is commonly used to describe this axis.

Absorbing polarisers are polarisers that absorb one polarisation component of incident light and transmit a second orthogonal polarisation component. Examples of absorbing linear polarisers are dichroic polarisers.

Reflective polarisers are polarisers that reflect one polarisation component of incident light and transmit a second orthogonal polarisation component. Examples of reflective polarisers that are linear polarisers are multilayer polymeric film stacks such as DBEF^{™} or APF^{™} from 3M Corporation, or wire grid polarisers such as ProFlux^{™} from Moxtek. Reflective linear polarisers may further comprise cholesteric reflective materials and a quarter waveplate arranged in series.

A retarder arranged between a linear polariser and a parallel linear analysing polariser that introduces no relative net phase shift provides full transmission of the light other than residual absorption within the linear polariser.

A retarder that provides a relative net phase shift between orthogonal polarisation components changes the SOP and provides attenuation at the analysing polariser.

In the present disclosure an 'A-plate' refers to an optical retarder utilizing a layer of birefringent material with its optical axis parallel to the plane of the layer.

A 'positive A-plate' refers to positively birefringent A-plates, i.e. A-plates with a positive Δn.

In the present disclosure a 'C-plate' refers to an optical retarder utilizing a layer of birefringent material with its optical axis perpendicular to the plane of the layer. A 'positive C-plate' refers to positively birefringent C-plate, i.e. a C-plate with a positive Δn. A 'negative C-plate' refers to a negatively birefringent C-plate. i.e. a C-plate with a negative Δn.

'O-plate' refers to an optical retarder utilizing a layer of birefringent material with its optical axis having a component parallel to the plane of the layer and a component perpendicular to the plane of the layer. A 'positive O-plate' refers to positively birefringent O-plates. i.e. O-plates with a positive Δn.

Achromatic retarders may be provided wherein the material of the retarder is provided with a retardance Δn . *d* that varies with wavelength λ as $Δn . d / λ = κ$ eqn. 3
where κ is substantially a constant.

Examples of suitable materials include modified polycarbonates from Teijin Films. Achromatic retarders may be provided in the present embodiments to advantageously minimise colour changes between polar angular viewing directions which have low luminance reduction and polar angular viewing directions which have increased luminance reductions as will be described below.

Various other terms used in the present disclosure related to retarders and to liquid crystals will now be described.

A liquid crystal cell has a retardance given by Δn. d where Δn is the birefringence of the liquid crystal material in the liquid crystal cell and d is the thickness of the liquid crystal cell, independent of the alignment of the liquid crystal material in the liquid crystal cell.

Homogeneous alignment refers to the alignment of liquid crystals in switchable liquid crystal displays where molecules align substantially parallel to a substrate. Homogeneous alignment is sometimes referred to as planar alignment. Homogeneous alignment may typically be provided with a small pre-tilt such as 2 degrees. so that the molecules at the surfaces of the alignment layers of the liquid crystal cell are slightly inclined as will be described below. Pretilt is arranged to minimise degeneracies in switching of cells.

In the present disclosure, homeotropic alignment is the state in which rod-like liquid crystalline molecules align substantially perpendicularly to the substrate. In discotic liquid crystals homeotropic alignment is defined as the state in which an axis of the column structure, which is formed by disc-like liquid crystalline molecules, aligns perpendicularly to a surface. In homeotropic alignment, pretilt is the tilt angle of the molecules that are close to the alignment layer and is typically close to 90 degrees and for example may be 88 degrees.

In a twisted liquid crystal layer, a twisted configuration (also known as a helical structure or helix) of nematic liquid crystal molecules is provided. The twist may be achieved by means of a non-parallel alignment of alignment layers. Further, cholesteric dopants may be added to the liquid crystal material to break degeneracy of the twist direction (clockwise or anti-clockwise) and to further control the pitch of the twist in the relaxed (typically undriven) state. A supertwisted liquid crystal layer has a twist of greater than 180 degrees. A twisted nematic layer used in spatial light modulators typically has a twist of 90 degrees.

Liquid crystal molecules with positive dielectric anisotropy are switched from a homogeneous alignment (such as an A-plate retarder orientation) to a homeotropic alignment (such as a C-plate or O-plate retarder orientation) by means of an applied electric field.

Liquid crystal molecules with negative dielectric anisotropy are switched from a homeotropic alignment (such as a C-plate or O-plate retarder orientation) to a homogeneous alignment (such as an A-plate retarder orientation) by means of an applied electric field.

Rod-like molecules have a positive birefringence so that nₑ > nₒ as described in eqn. 2. Discotic molecules have negative birefringence so that nₑ < nₒ.

Positive retarders such as A-plates, positive O-plates and positive C-plates may typically be provided by stretched films or rod-like liquid crystal molecules. Negative retarders such as negative C-plates may be provided by stretched films or discotic like liquid crystal molecules.

Parallel liquid crystal cell alignment refers to the alignment direction of homogeneous alignment layers being parallel or more typically antiparallel. In the case of pre-tilted homeotropic alignment, the alignment layers may have components that are substantially parallel or antiparallel. Hybrid aligned liquid crystal cells may have one homogeneous alignment layer and one homeotropic alignment layer Twisted liquid crystal cells may be provided by alignment layers that do not have parallel alignment, for example oriented at 90 degrees to each other.

Transmissive spatial light modulators may further comprise retarders between the input display polariser and the output display polariser for example as disclosed in U.S. Patent No. 8,237,876. Such retarders (not shown) are in a different place to the passive retarders of the present embodiments. Such retarders compensate for contrast degradations for off-axis viewing locations, which is a different effect to the luminance reduction for off-axis viewing positions of the present embodiments.

A private mode of operation of a display is one in which an observer sees a low contrast sensitivity such that an image is not clearly visible. Contrast sensitivity is a measure of the ability to discern between luminances of different, levels in a static image. Inverse contrast sensitivity may be used as a measure of visual security, in that a high visual security level (VSL) corresponds to low image visibility.

For a privacy display providing an image to an observer, visual security may be given as: $V = \left(Y+R\right) / \left(Y-K\right)$ eqn. 4
where V is the visual security level (VSL), *Y* is the luminance of the white state of the display at a snooper viewing angle. K is the luminance of the black state of the display at the snooper viewing angle and R is the luminance of reflected light from the display.

Panel contrast ratio is given as: $C = Y / i$ eqn. 5 so the visual security level may be further given as: $V = \left(P.{Y}_{max}+I.ρ/π\right) / \left(P.\left({Y}_{max}-{Y}_{max}/C\right)\right)$ eqn. 6 where: *Yₘₐₓ* is the maximum luminance of the display: *P* is the off-axis relative luminance typically defined as the ratio of luminance at the snooper angle to the maximum luminance *Yₘₐₓ*; *C* is the image contrast ratio; *ρ* is the surface reflectivity; π is a solid angle factor (with units steradians) and *I* is the illuminance. The units of *Yₘₐₓ* are the units of *I* divided by solid angle in units of steradian.

The luminance of a display varies with angle and so the maximum luminance of the display Yₘₐₓ occurs at a particular angle that depends on the configuration of the display.

In many displays, the maximum luminance Yₘₐₓ occurs head-on, i.e. normal to the display. Any display device disclosed herein may be arranged to have a maximum luminance Yₘₐₓ that occurs head-on, in which case references to the maximum luminance of the display device Yₘₐₓ may be replaced by references to the luminance normal to the display device.

Alternatively, any display described herein may be arranged to have a maximum luminance Yₘₐₓ that occurs at a polar angle to the normal to the display device that is greater than 0°. By way of example, the maximum luminance Yₘₐₓ may occur may at a non-zero polar angle and at an azimuth angle that has for example zero lateral angle so that the maximum luminance is for an on-axis user that is looking down on to the display device. The polar angle may for example be 10 degrees and the azimuthal angle may be the northerly direction (90 degrees anti-clockwise from easterly direction). The viewer may therefore desirably see a high luminance at typical non-normal viewing angles.

The off-axis relative luminance. P is sometimes referred to as the privacy level. However, such privacy level P describes relative luminance of a display at a given polar angle compared to head-on luminance, and in fact is not a measure of privacy appearance.

The illuminance, I is the luminous flux per unit area that is incident on the display and reflected from the display towards the observer location. For Lambertian illuminance, and for displays with a Lambertian front diffuser illuminance I is invariant with polar and azimuthal angles. For arrangements with a display with non-Lambertian front diffusion arranged in an environment with directional (non-Lambertian) ambient light, illuminance I varies with polar and azimuthal angle of observation.

Thus in a perfectly dark environment, a high contrast display has VSL of approximately 1.0, As ambient illuminance increases, the perceived image contrast degrades. VSL increases and a private image is perceived.

For typical liquid crystal displays the panel contrast C is above 100:1 for almost all viewing angles. allowing the visual security level to be approximated to: $V = 1 + I . ρ / \left(π.P.{Y}_{max}\right)$ eqn. 7

In the present embodiments, in addition to the exemplary definition of eqn. 4. other measurements of visual security level, V may be provided, for example to include the effect on image visibility to a snooper of snooper location, image contrast, image colour and white point and subtended image feature size. Thus the visual security level may be a measure of the degree of privacy of the display but may not be restricted to the parameter V.

The perceptual image security may be determined from the logarithmic response of the eye, such that a Security Factor, S is given by $S = {log}_{10} \left(V\right)$ eqn. 8 $S = {log}_{10} \left(1+α.ρ/\left(π.P\right)\right)$ eqn. 9 where α is the ratio of illuminance *I* to maximum luminance *Yₘₐₓ*.

Desirable limits for S were determined in the following manner. In a first step a privacy display device was provided. Measurements of the variation of privacy level, P(θ) of the display device with polar viewing angle and variation of reflectivity ρ(θ) of the display device with polar viewing angle were made using photopic measurement equipment. A light source such as a substantially uniform luminance light box was arranged to provide illumination from an illuminated region that was arranged to illuminate the privacy display device along an incident direction for reflection to a viewer positions at a polar angle of greater than 0° to the normal to the display device. The variation I(θ) of illuminance of a substantially Lambertian emitting lightbox with polar viewing angle was determined by and measuring the variation of recorded reflective luminance with polar viewing angle taking into account the variation of reflectivity ρ(θ). The measurements of P(0), ρ(θ) and I(θ) were used to determine the variation of Security Factor S(θ) with polar viewing angle along the zero elevation axis.

In a second step a series of high contrast images were provided on the privacy display including (i) small text images with maximum font height 3mm, (ii) large text images with maximum font height 30mm and (iii) moving images.

In a third step each observer (with eyesight correction for viewing at 1000mm where appropriate) viewed each of the images from a distance of 1000mm, and adjusted their polar angle of viewing at zero elevation until image invisibility was achieved for one eye from a position near on the display at or close to the centre-line of the display. The polar location of the observer's eye was recorded. From the relationship S(θ), the security factor at said polar location was determined. The measurement was repeated for the different images, for various display luminance Yₘₐₓ, different lightbox illuminance I(θ=0), for different background lighting conditions and for different observers.

From the above measurements S < 1.0 provides low or no visual security, and S ≥ 1 makes the image not visible. In the range 1.0 ≤ S < 1.5. even though the image is not visible for practical purposes, some features of the image may still be perceived dependent on the contrast, spatial frequency and temporal frequency of image content, whereas in the range 1.5 ≤ S < 1.8, the image is not visible for most images and most observers and in the range S ≥ 1.8 the image is not visible, independent of image content for all observers.

In practical display devices, this means that it is desirable to provide a value of S for an off-axis viewer who is a snooper that meets the relationship S ≥ *Sₘᵢₙ*, where: *Sₘᵢₙ* has a value of 1.0 or more to achieve the effect that in practical terms the displayed image is not visible to the off-axis viewer.

At an observation angle *θ* in question, the security factor Sₙ for a region of the display labelled by the index n is given from eqn. 8 and eqn. 9 by: ${S}_{n} \left(θ\right) = {log}_{10} \left[1+{ρ}_{n}\left(θ\right).α\left(θ\right)/\left(π.{P}_{n}\left(θ\right)\right)\right]$ eqn. 10 where: *α* is the ratio of illuminance *I*(*θ*) onto the display that is reflected from the display to the angle in question and with units lux (lumen.m⁻²), to maximum luminance *Yₘₐₓ* with units of nits (lumen.m ⁻².sr⁻¹) where the units of *α* are steradians, π is a solid angle in units of steradians, *ρₙ*(*θ*) is the reflectivity of the display device along the observation direction in the respective n^{th} region, and *Pₙ*(*θ*) is the ratio of the luminance of the display device along the observation direction in the respective n^{th} region.

In human factors measurement, it has been found that desirable privacy displays of the present embodiments described hereinbelow typically operate with security factor *Sₙ* ≥ 1.0 at the observation angle when the value of the ratio α of illuminance *I* to maximum luminance *Yₘₐₓ* is 4.0. For example the illuminance *I*(*θ* = -45°) that illuminates the display and is directed towards the snooper at the observation direction (*θ* = +45°) after reflection from the display may be 1000lux and the maximum display illuminance *Yₘₐₓ* that is provided for the user may be 250nits. This provides an image that is not visible for a wide range of practical displays.

More preferably, the display may have improved characteristics of reflectivity *ρₙ*(*θ* = 45°) and privacy *Pₙ*(*θ* = 45°) by operating with security factor *Sₙ* ≥ 1.0 at the observation angle when the ratio α is 2.0. Such an arrangement desirably improves the relative perceived brightness and contrast of the display to the primary user near to the direction of *Yₘₐₓ* while achieving desirable security factor, *Sₙ* ≥ 1.0, Most preferably, the display may have improved characteristics of reflectivity *ρₙ*(*θ* = 45°) and privacy *Pₙ*(*θ* = 45°) by operating with security factor *Sₙ* ≥ 1.0 at the observation angle when the ratio α is 1.0. Such an arrangement achieves desirably high perceived brightness and contrast of the display to the primary user near to the direction of *Yₘₐₓ* in comparison to the brightness of illuminated regions around the display, while achieving desirable security factor, *Sₙ* ≥ 1.0 for an off-axis observer 47 at the observation direction.

The above discussion focusses on reducing visibility of the displayed image to an off-axis viewer who is a snooper, but similar considerations apply to visibility of the displayed image to the intended user of the display device who is typically on-axis. In this case, decrease of the level of the visual security level (VSL) V corresponds to an increase in the visibility of the image to the viewer. During observation S < 0.2 may provide acceptable visibility (perceived contrast ratio) of the displayed image and more desirably S < 0.1. In practical display devices, this means that it is desirable to provide a value of S for an on-axis viewer who is the intended user of the display device that meets the relationship S ≤ *S*_{*max*,} where *Sₘₐₓ* has a value of 0.2.

In the present discussion the colour variation Δε of an output colour (u_{w}' + Δu', v_{w}' +Δv') from a desirable white point (u_{w}', v_{w}') may be determined by the CIELUV colour difference metric, assuming a typical display spectral illuminant and is given by: $Δε = {\left(Δu{′}^{2}+Δv{′}^{2}\right)}^{1 / 2}$ eqn. 11

The structure and operation of various directional display devices will now be described. In this description, common elements have common reference numerals. It is noted that the disclosure relating to any element applies to each device in which the same or corresponding element is provided. Accordingly, for brevity such disclosure is not repeated.

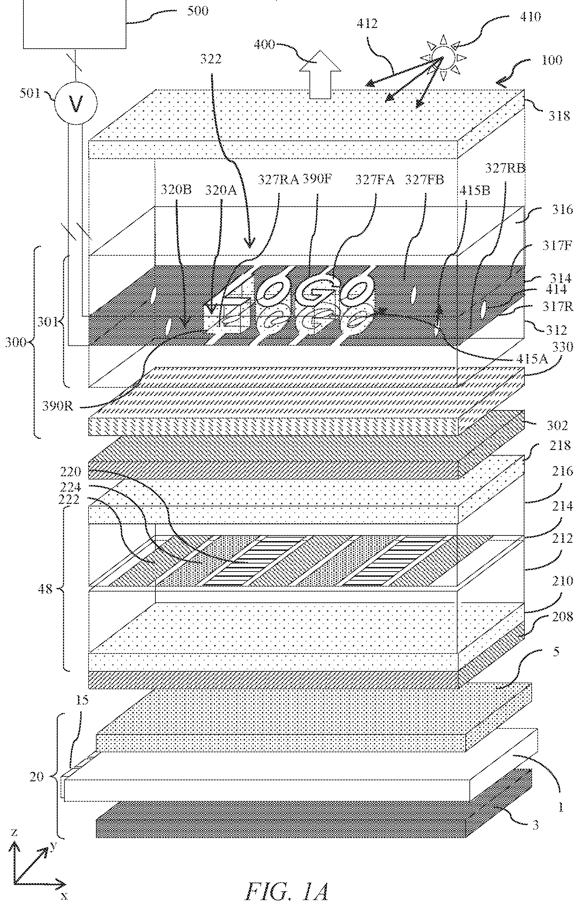

**FIGURE 1A** is a schematic diagram illustrating a front perspective view of a privacy display device 100 arranged to operate (in various modes as will be described) when illuminated by an ambient light source 410 and comprising a transmissive spatial light modulator 48 illuminated by a backlight 20, a reflective polariser 302 and a polar control retarder 300 comprising passive retarder 330, and a liquid crystal polar control retarder 301 comprising patterned electrodes 317F, 317R.

A display device 100 for use in ambient illumination 410 comprises: a spatial light modulator 48 arranged to output light, wherein the spatial light modulator 48 comprises an output polariser 218 arranged on the output side of the spatial light modulator 48, the output polariser 218 being a linear polariser, a view angle control arrangement comprising: an additional polariser 318 arranged on the output side of the output polariser 218. the additional polariser 318 being a linear polariser, a reflective polariser 302 arranged between the output polariser 218 and the additional polariser 318, the reflective polariser 302 being a linear polariser; and at least one polar control retarder 300 arranged between the reflective polariser 302 and the additional polariser 318, the at least one polar control retarder 300 including a switchable liquid crystal retarder 301 comprising a layer 314 of liquid crystal material 414, and first and second transmissive electrodes 317F. 317R on opposite sides of the layer 314 of liquid crystal material 414.

At least one of the first and second transmissive electrodes 317F, 317R is patterned in areas 327A, 327B separated by gaps 390. In the embodiment of FIGURE 1A, the first transmissive electrode 317F is patterned with areas 327FA, 327FB and the second transmissive electrode 317R is patterned with areas 327RA, 327RB.

The electrodes 317F. 317R provide plural addressable regions 320A, 320B of the layer 314 of liquid crystal material 414, being plural addressable mark regions 320A (or in a more general case at least one addressable mark region 320A) in a shape of a mark 322 for display to an off-axis observer 47, and plural addressable background regions 320B in the shape of the background to the mark 322 (i.e. the inverse of the mark 322). In at least one of the modes of operation of the display device 100, the regions 320A, 320B are addressed with a desirable drive scheme, illustrative examples of which will be described hereinbelow, such that the alignment direction 415A of the liquid crystal material 414 in the mark region 320A is different to the alignment direction 415B of the liquid crystal material 414 in the background region 320B.

In the embodiment of FIGURE 1A, both of the first and second transmissive electrodes 317F, 317R are patterned with areas 327FA, 327FB, 327RA. 327RB that are in the shape of a mark 322 that comprises the text '*LOGO*'. More generally the mark 322 may be an icon or text or some other graphical image.

A control system 500 is arranged to control the spatial light modulator 48 and to apply voltages across the first and second transmissive electrodes 317F, 317R for driving the layer 314 of liquid crystal material 414.

The at least one polar control retarder 300 further comprises a passive retarder 330.

The spatial light modulator 48 is a transmissive spatial light modulator 48 and the display device 100 further comprises a backlight 20 arranged to supply light to the spatial light modulator 48.

The structure of the display device 100 will now be described in further detail.

The display device 100 comprises a backlight 20 arranged to output light 400 and a transmissive spatial light modulator 48 arranged to receive output light from the backlight 20.

The backlight apparatus 20 comprises a rear reflector 3 and a waveguide arrangement comprising waveguide 1, light sources 15, and light control components 5 that may comprise optical elements such as light turning films or brightness enhancement films, as well as diffusers and arranged to receive light exiting from the waveguide 1 and direct through the spatial light modulator 48.

In an alternative embodiment, the light sources 15 may comprise a mini-LED array, the waveguide 1 may be omitted and colour conversion films and light scattering films may be provided to illuminate the spatial light modulator 48. Advantageously increased dynamic range and brightness may be achieved.

In the embodiment of FIGURE 1A, the spatial light modulator 48 may comprise a liquid crystal display device comprising substrates 212, 216, and liquid crystal layer 214 having red, green and blue pixels 220, 222, 224. The spatial light modulator 48 has an input display polariser 210 and an output display polariser 218 on opposite sides thereof. The output display polariser 218 is arranged to provide high extinction ratio for light from the pixels 220. 222, 224 of the spatial light modulator 48. Typical polarisers 210, 218 may be absorbing polarisers such as dichroic polarisers such as an iodine polariser on stretched PVA.

Optionally a reflective polariser 208 may be provided between the backlight 20 and the input polariser 210 to improve the efficiency of output light from the backlight 20. The reflective polariser 208 is different to the reflective polariser 302 described hereinbelow. Reflective polarisers 208, 302 may be provided by materials such as DBEF^{™} or APF^{™} from 3M Corporation.

Additional polariser 318 is arranged on the output side of the spatial light modulator 48 as the additional polariser 318 being a linear polariser. Reflective polariser 302 is arranged between the additional polariser 318 and the output polariser 218. The display output polariser 218. reflective polariser 302 and the additional polariser 318 have electric vector transmission directions respectively that are parallel, and orthogonal to the input polariser 218 transmission direction. Advantageously transmission efficiency is increased.

Polar control retarder 300 is arranged between the reflective polariser 302 and the display polariser 218, the polar control retarder 300 including a switchable liquid crystal retarder 301 comprising a layer 314 of liquid crystal material 414 arranged between substrates 312, 316 that are provided with transparent electrodes 317F, 317R.

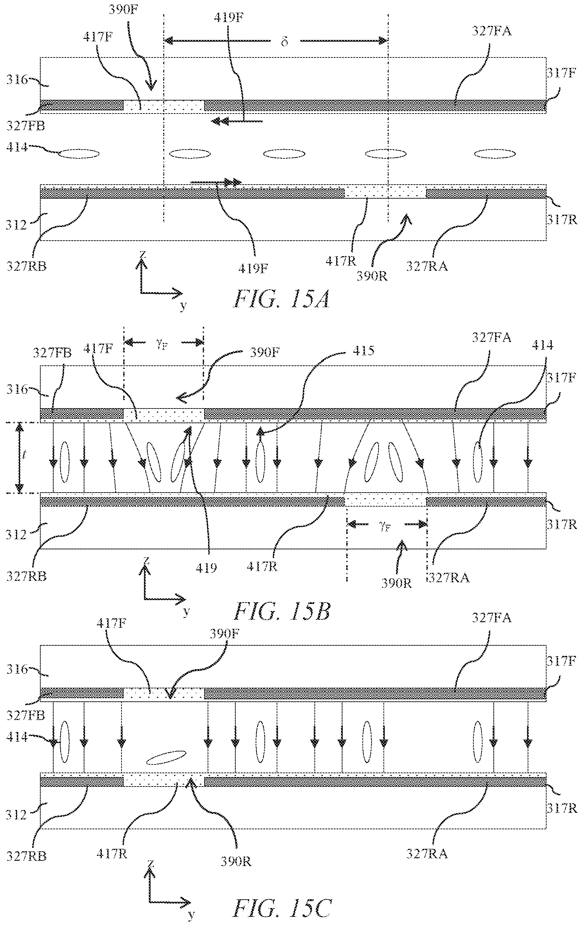

The structure of the switchable liquid crystal retarder 301 will be further described with reference to FIGURES 15A-C hereinbelow.

The polar control retarder of FIGURE 1A further comprises at least one passive compensation retarder 330. Such passive compensation retarder 330 may comprise C-plates, A-plates or combination thereof and advantageously achieves an increased size of polar region over which reduced luminance and increased reflectivity can be achieved as will be described hereinbelow.

The display device 100 is illuminated by light rays 412 from an ambient light source 410.

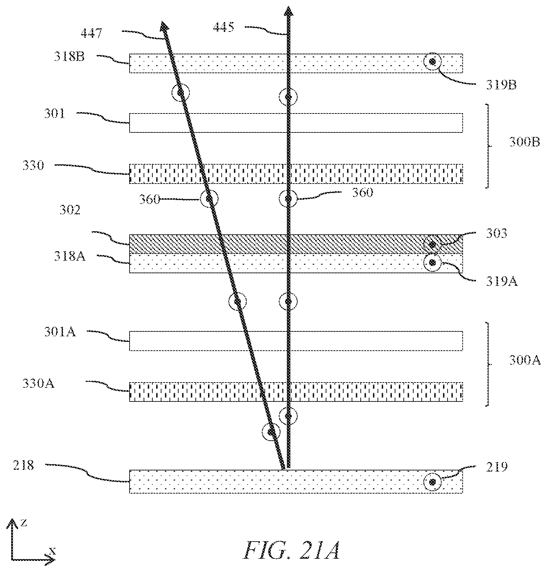

The structure and operation of the polar control retarder 300. additional polariser 318 and reflective polariser is described further hereinbelow with respect to FIGURES 21A-D and in U.S. Patent No. 10,976,578.

The electrode 317F comprises first and second areas 327FA, 327FB separated by gaps 390F and the electrode 317R comprises first and second areas 327RA, 327RB separated by gaps 390R. In the embodiment of FIGURE 1A, the electrode 317F is shown as between the electrode 317R and the additional polariser 318. In an alternative embodiment of FIGURE 1A and in alternative embodiments of those described hereinbelow, the electrode 317R may be arranged between the electrode 317F and the additional polariser 318.

Control system 500 is arranged to provide control of voltage driver 501 that is arranged drive the voltage to the electrode areas 327FA, 327FB, 327RA, 327RB respectively, as will be described hereinbelow.

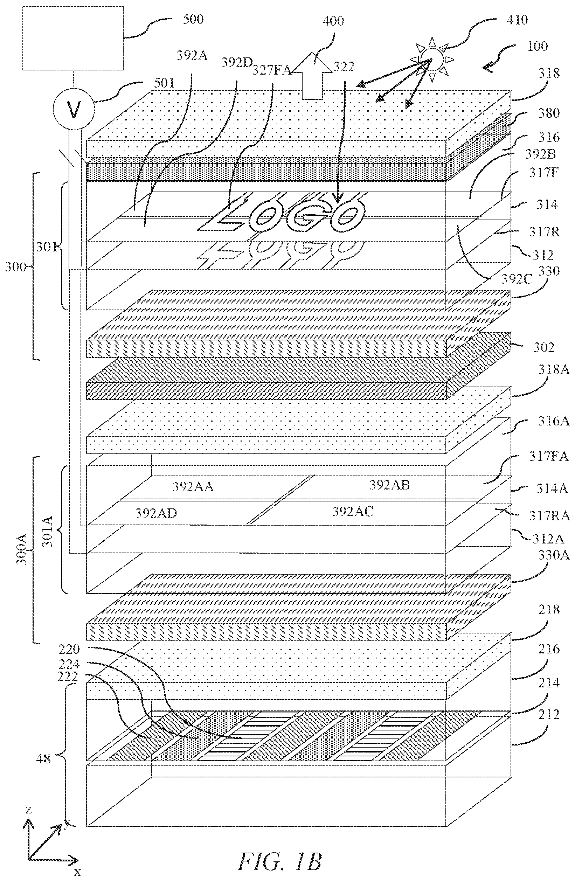

**FIGURE 1B** is a schematic diagram illustrating a front perspective view of a privacy display device 100 arranged to operate when illuminated by an ambient light source 410 and comprising an emissive spatial light modulator 48. a reflective polariser 302 and a polar control retarder 300 comprising a liquid crystal polar control retarder 301 comprising patterned electrodes 317F, 317R and further comprising an optional colour filter layer 380. Features of the embodiment of FIGURE 1B not discussed in further detail may be assumed to correspond to the features with equivalent reference numerals as discussed above, including any potential variations in the features.

The alternative embodiment of FIGURE 1B differs from the arrangement of FIGURE 1A in several respects. In a first aspect spatial light modulator 48 is an emissive spatial light modulator 48 and has no input polariser 210.

A further additional polariser 318A is provided between the reflective polariser 302 and the output polariser 218. Further polar control retarder 300A comprising further liquid crystal retarder 301A and passive compensation retarder 330A is provided between the further additional polariser 318A and the output polariser 218. Further liquid crystal retarder 301 comprises transparent substrates 312A. 316A and liquid crystal layer 314A between uniform electrodes 317FA, 317RA.

In comparison to the arrangement of FIGURE 1A, the spatial light modulator 48 may provide a light cone that has higher luminance in off-axis positions, such that the security factor, S is lower than that which may be achievable by a directional backlight 20. The additional polar control retarder 300A may advantageously achieve reduced off-axis luminance in privacy mode and image visibility from wide viewing positions in share mode. Advantageously security factor may be increased for privacy display operation.

In the alternative embodiment of FIGURE 1B, the electrodes 317F may further comprise segmented regions 392A-D respectively as will be described further hereinbelow. The additional polar control retarder 301A may comprise one of the electrodes 317AF. 317AR that is also segmented in regions 392AA-AD. although may not have the mark 322. The segments 392A-D and 392AA-AD may be aligned respectively. Advantageously a display device comprising mixed wide angle and privacy regions may be provided. The segments may be quadrants as shown, may be linear stripes or may have some other shapes.

In the alternative embodiment of FIGURE 1B a colour filter 380 is provided between the reflective polariser 302 and the additional polariser 318. The reflected light rays may have a colour that is modified by the double pass through the colour filter 380 to provide a colour that matches the aesthetics of the environment or to match a brand colour for example. The colour of light output from the spatial light modulator 48 that has a single pass through the colour filter 380 may be modified to provide an appropriate white point.

The alternatives of FIGURE 1B may further be applied to the arrangement of FIGURE 1A. The further additional polariser 318A may be provided between the backlight 20 and the input display polariser 210. The polar control retarder 300A may be provided between the input display polariser 210 and the further additional polariser 318A. Advantageously increased off-axis luminance control may be achieved.

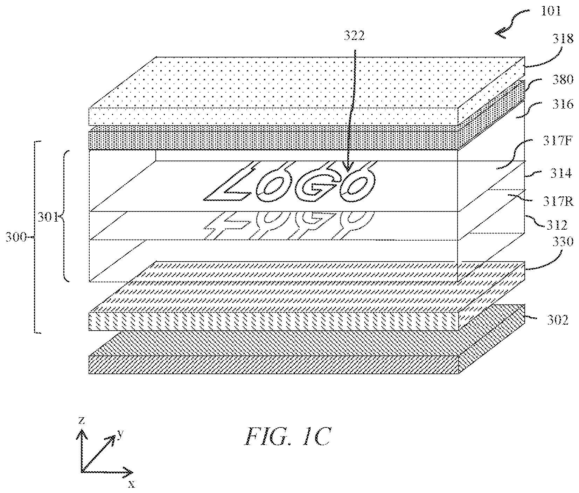

**FIGURE 1C** is a schematic diagram illustrating a front perspective view of a view angle control optical clement 101 comprising a reflective polariser 302 and a polar control retarder 300 comprising at least one passive retarder 330 and a liquid crystal polar control retarder 301 comprising patterned electrodes 317F, 317R and further comprising a colour filter layer 380. Features of the embodiment of FIGURE 1C not discussed in further detail may be assumed to correspond to the features with equivalent reference numerals as discussed above, including any potential variations in the features.

In the alternative embodiment of FIGURE 1C, a view angle control element 101 may be provided for use with a spatial light modulator 48. Advantageously a switchable privacy function may be achieved.

An illustrative arrangement of polar control retarder 300 is provided in TABLE 1 comprising a liquid crystal layer 314 with anti-parallel homogeneous alignment layers 417F, 417R (as described further hereinbelow). The alignment directions oriented parallel to the y-axis (rotated with respect to the horizontal display axis). A passive control retarder 330 comprising crossed A-plates 330A. 330B, and with share mode voltage that is approximately three times greater than privacy mode voltage. The voltage signals 520 are DC balanced and have square, sinusoidal or other shapes. Typically in operation the liquid crystal material 414 of the liquid crystal layer 314 responds to the rms voltage of the addressing voltages.

**TABLE 1**

| Layer | Alignment type | LC layer 314 retardance | Additional passive retarder 330 type | Additional passive retarder 330 retardance | Addressing voltage (privacy) | Addressing voltage (share) |
|---|---|---|---|---|---|---|
| 417F | Homogeneous | 750nm | | | 2.3V | >5V e.g. 6.9V |
| 417R | Homogeneous | | | | | |
| 330 | | | Negative C-plate | +450nm | | |

In the illustrative embodiment of TABLE 1 the addressing voltage for the privacy mode is desirably 2.3V. The addressing voltage for the share mode is typically >5V above which the realignment of the liquid crystal material 414 of the layer 314 is substantially saturated. An addressing voltage of three times the privacy voltage for share mode is thus a desirable level.

Structures with no reflective polariser 302 will now be described.

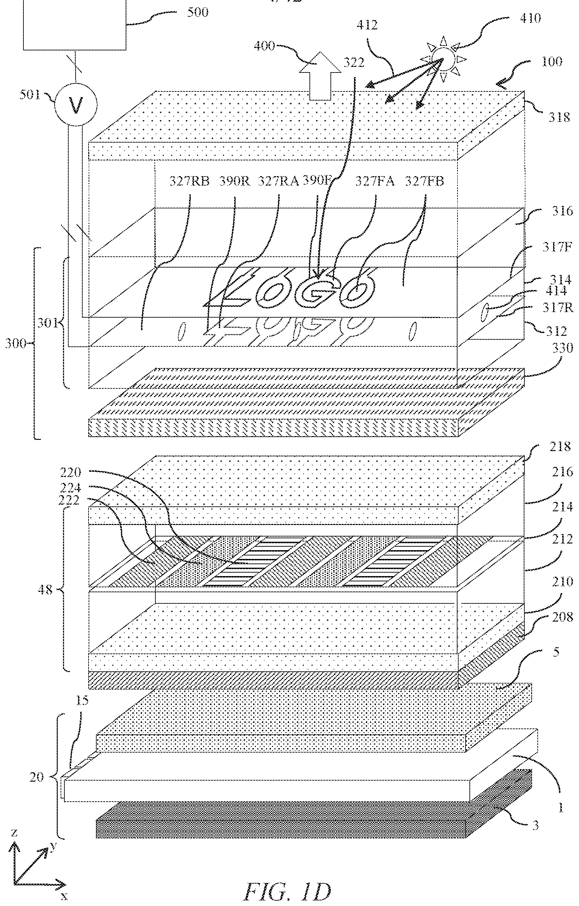

**FIGURE 1D** is a schematic diagram illustrating a front perspective view of a privacy display device 100 comprising a transmissive spatial light modulator 48 illuminated by a backlight 20, an absorptive output display polariser 218 and a polar control retarder 300 comprising a liquid crystal polar control retarder 301 comprising patterned electrodes 317F. 317R. Features of the embodiment of FIGURE 1D not discussed in further detail may be assumed to correspond to the features with equivalent reference numerals as discussed above, including any potential variations in the features.

A display device 100 for use in ambient illumination 410 comprises a spatial light modulator 48 arranged to output light, wherein the spatial light modulator 48 comprises a display polariser arranged on a side of the spatial light modulator 48. the display polariser being a linear polariser and in FIGURE 1D being the output polariser 218 arranged on the output side of the spatial light modulator 48. A view angle control arrangement comprises: an additional polariser 318 arranged on the same side of the spatial light modulator 48 as the display polariser, the additional polariser 318 being a linear polariser. At least one polar control retarder 300 is arranged between the display polariser 218 and the additional polariser 318, the at least one polar control retarder 300 including a switchable liquid crystal retarder 301 comprising a layer 314 of liquid crystal material 414, and first and second transmissive electrodes 317F, 317R on opposite sides of the layer 314 of liquid crystal material 414, wherein at least one of the first and second transmissive electrodes 317F, 317R is patterned in areas 327FA. 327FB, 327RA. 327RB separated by gaps 390F, 390R to provide plural addressable regions 320A, 320B of the layer 314 of liquid crystal material 414, at least one of the plural regions 320A, 320B being in a shape of a mark 322 for display to an observer 47.

The arrangement of FIGURE 1D may further be provided by an alternative embodiment in which the spatial light modulator 48 comprises an emissive display and the backlight 20 is omitted.

In comparison to the embodiment of FIGURE 1A, the alternative embodiment of FIGURE 1D illustrates that the reflective polariser 302 may be omitted. Light 412 from the ambient light source 410 is reflected by the front surface of the additional polariser 318, however the display reflectivity ρ is determined by Fresnel reflections and modulated by surface roughness in the case a front surface diffusion is provided. Advantageously the stack complexity and cost is reduced. Display device 100 reflectivity may be reduced so that in the share mode increased image contrast is achieved for the display observers 45, 47; and to provide a blacker appearance display in the off-mode of operation. Advantageously an improved aesthetic appearance may be achieved.

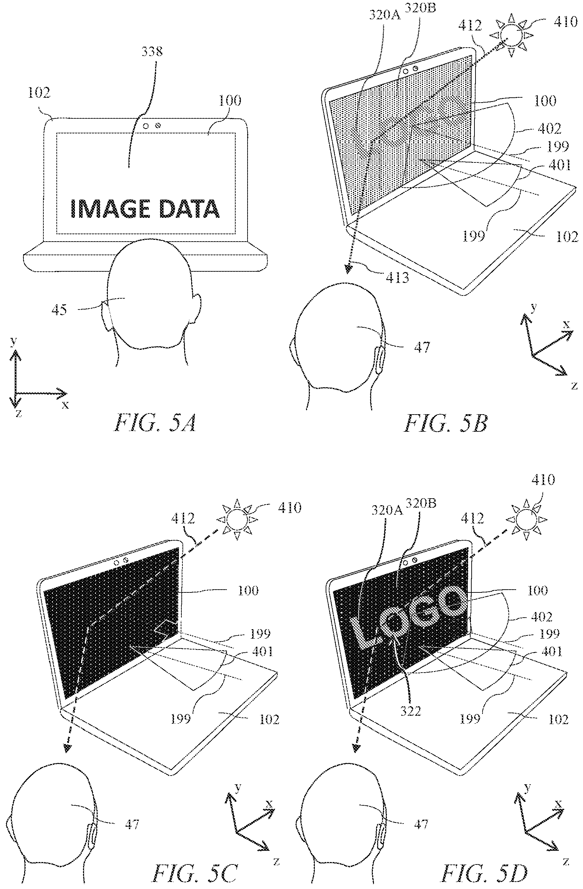

As will be described in FIGURE 5D hereinbelow, in operation in a mark privacy mode, then the security factor *S_{A}* provided by the distal mark regions 320A may be provided to be different to the security factor *S_{B}* provided by the proximal distal background regions 320B such that the mark 322 may be visible in mark privacy mode as difference in contrast of the outputted luminance between the distal mark region 320A and proximal background region 320B.

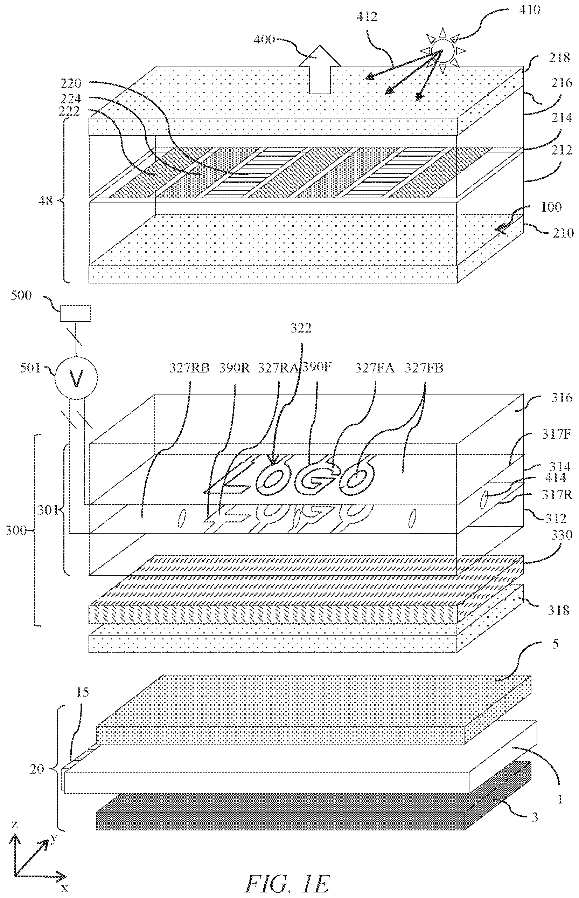

**FIGURE 1E** is a schematic diagram illustrating a front perspective view of a privacy display device 100 comprising a backlight 20, a polar control retarder 300 comprising a liquid crystal polar control retarder 301 comprising patterned electrodes 317F. 317R and a transmissive spatial light modulator 48 comprising an absorptive input display polariser 210. Features of the embodiment of FIGURE 1E not discussed in further detail may be assumed to correspond to the features with equivalent reference numerals as discussed above, including any potential variations in the features.

In comparison to the embodiment of FIGURE 1D, in the alternative embodiment of FIGURE 1E the display polariser is a linear polariser being the input polariser 210 arranged on the input side of the spatial light modulator 48. The additional polariser 318 is arranged on the input side of the spatial light modulator 48. The at least one polar control retarder 300 is arranged between the input polariser 210 and the additional polariser 318.

In comparison to the embodiment of FIGURE 1D, in the alternative embodiment of FIGURE 1E, the display polariser is the input polariser 210 of the spatial light modulator 48 and the liquid crystal polar control retarder 301 comprising the patterned electrodes 317F, 317R is arranged between the additional polariser 318 and the input polariser 210.

Advantageously the visibility of residual reflections from the patterned electrodes 317F. 317R that may be visible in the arrangement of FIGURE 1D may be reduced and an improved black appearance for the display device 100 achieved.

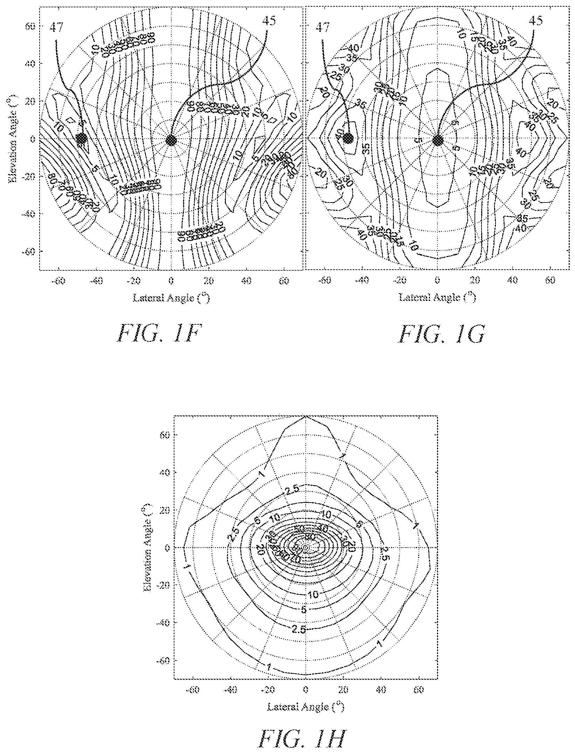

**FIGURE 1F** is a schematic graph illustrating the polar variation of reflectivity for a polar control retarder 300A of FIGURE 1A and the illustrative embodiment of TABLE 1 when the electrodes 317F, 317R are arranged to drive the liquid crystal layer 314 for high off-axis reflectivity: **FIGURE 1G** is a schematic graph illustrating the polar variation of reflectivity for a polar control retarder 300A of FIGURE 1A and the illustrative embodiment of TABLE 1 when the electrodes 317F, 317R are arranged to drive the liquid crystal layer 314 for low off-axis reflectivity; and **FIGURE 1H** is a schematic graph illustrating the polar variation of luminance of an illustrative backlight 20 of FIGURE 1A. Polar locations 445, 447 of exemplary observers 45, 47 are illustrated.

Variation of security factor with polar angle for different arrangements will now be described.

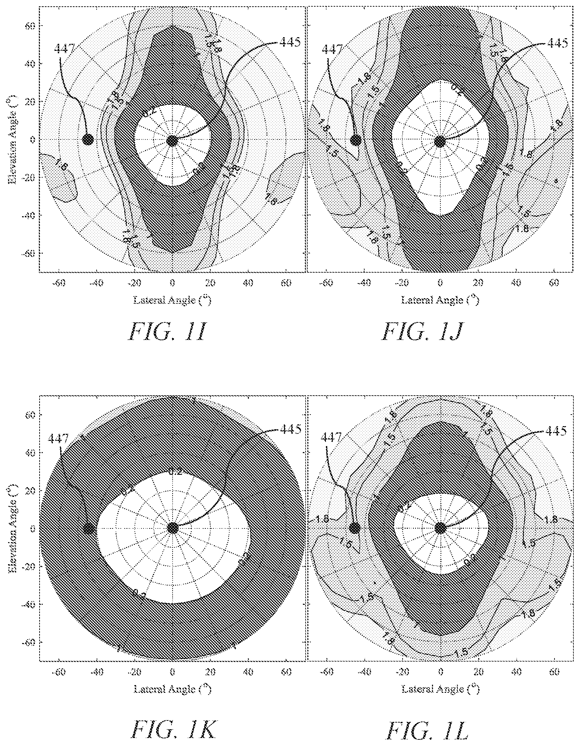

**FIGURE 1I** is a schematic graph illustrating the polar variation of security factor S for the display of FIGURE 1A and TABLE 1 with the backlight 20 profile of FIGURE 1H operating in privacy mode for a lux per nit ratio α of 4.0; **FIGURE 1J** is a schematic graph illustrating the polar variation of security factor S for the display of FIGURE 1A and TABLE 1 with the backlight 20 profile of FIGURE 1H operating in privacy mode for a lux per nit ratio α of 1.0: **FIGURE 1K** is a schematic graph illustrating the polar variation of security factor S for the display of FIGURE 1A and TABLE 1 with the backlight 20 profile of FIGURE 1H operating in share mode for a lux per nit ratio α of 1.0; and **FIGURE 1L** is a schematic graph illustrating the polar variation of security factor S for the display of FIGURE 1E and TABLE 1 with the backlight 20 profile of FIGURE 1H operating in privacy mode for a lux per nit ratio α of 4.0. Features of the embodiment of FIGURES 1H-K not discussed in further detail may be assumed to correspond to the features with equivalent reference numerals as discussed above, including any potential variations in the features.

In the present description, the term 'polar angle' refers to the direction of viewing of the display by an observer 45, 47. In the following description, the polar angle is described using a coordinate convention having an elevation coordinate angle and a lateral coordinate angle. In an alternative coordinate convention the polar angle may have a polar coordinate angle (which is different to the polar angle referred to herein) which is the angle of inclination from the normal direction to a plane, and the azimuthal coordinate angle which is the rotation angle in the said plane from a reference direction in said plane.

Referring to FIGURES 1H-K, the nominal polar angle for an on-axis observer 45 is marked by polar angle 445 and the nominal polar angle for an on-axis observer 47 is marked by polar angle 447. Contours of iso-security factor are illustrated that indicate the size of the polar regions for which various levels of image security are achieved as established by human factors measurement described hereinabove.

FIGURES 1H-I illustrate the variation in security factor, *S* of the privacy mode (light cone 401) for different illumination conditions. In the narrow angle mode of operation, the size of the narrow angle light cone 401 may be illustrated by the polar area for which S < 0.2 so that the observer 45 at polar angle 445 sees the image. Reducing the ratio α of illuminance to maximum display luminance (which in FIGURES 1H-K is in the normal direction to the plane of the display device 100) reduces the size of the polar region for which *S* ≥ 1.

FIGURE 1K illustrates the security factor, *S* in the share mode of operation, that is for the light cone 402. In the share mode of operation, the wide angle light cone 402 may be the polar area for which S < 1.0. In the embodiment of FIGURE 1K. the security factor *S* at the observer 47 polar angle 447 is close to 0.2, and thus the image will be clearly visible although perhaps not with the most desirable contrast ratio.

By way of comparison with FIGURE 1I, FIGURE IL illustrates the effect of removing the reflective polariser 302 from the optical stack, reducing the display reflectivity ρ. Thus the security factor *S* at the observer 47 is not as high as achievable with the optical stack of FIGURE 1A.

The control system 500 is arranged to be operable in plural modes of operation as will now be described.

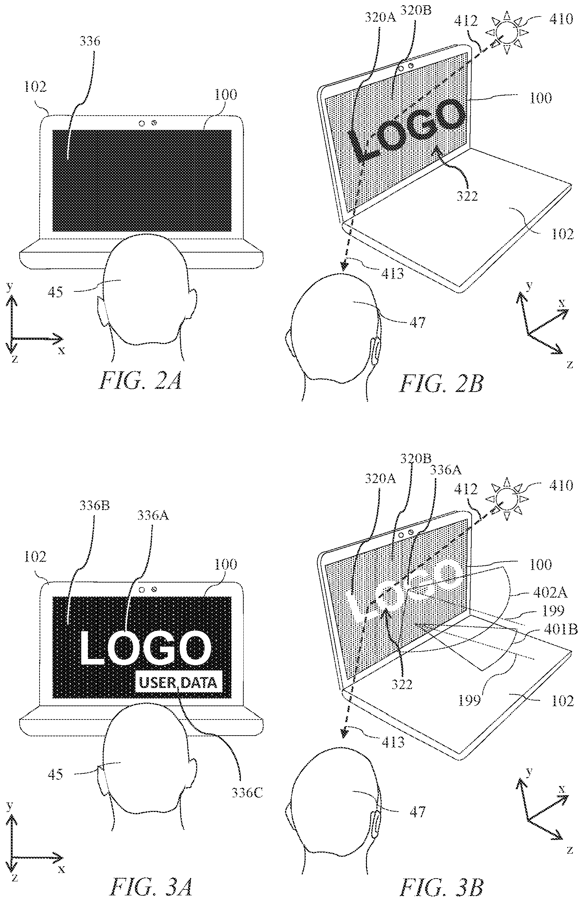

**FIGURE 2A** is a schematic diagram illustrating a front perspective view of a laptop computer 102 illuminated by an ambient light source 410 comprising a switchable privacy display device 100 comprising a liquid crystal polar control retarder 301 with patterned electrodes 317F, 317R wherein no light 400 is output from the spatial light modulator 48; and **FIGURE 2B** is a schematic diagram illustrating a look-down off-axis perspective view of a laptop computer 102 illuminated by an ambient light source 410 comprising a switchable privacy display device 100 comprising a liquid crystal polar control retarder 301 with patterned electrodes 317F. 317R wherein no light 400 is output from the spatial light modulator 48. Features of the embodiment of FIGURES 2A-B not discussed in further detail may be assumed to correspond to the features with equivalent reference numerals as discussed above, including any potential variations in the features.

FIGURES 2A-B illustrate the operation of a mark display mode that may be also termed a "Mark Sleep Mode". The display device 100 may comprise for example the display devices 100 of FIGURES 1A or FIGURE 1B. The control system 500 controls the spatial light modulator 48 to display no image (for example by switching off the spatial light modulator 48 and where present the backlight 20, and applies voltages V_{F}, V_{R} across the first and second transmissive electrodes 317F, 317R that drive the layer 314 of liquid crystal material 414 into different states in different regions 320A, 320B such that the mark 322 is not visible at the narrow angle to an observer 45 but is visible at a wide angle to the observer 47.

The control system 500 applies voltages V_{F}, V_{R} across the first and second transmissive electrodes 317F, 317R as will be described further hereinbelow. The respective voltages V_{F}, V_{R} drive the layer 314 of liquid crystal material 414 into different states in different regions 320A, 320B, that is voltages V_{FA}, V_{RA} may be provided in mark region 320A and voltages V_{FB}, V_{RB} may be provided in background region 320B.

The mark 322 comprises distal mark region 320A and proximal background region 320B, with typically the distal mark region 320A comprising the iconography, images, text or other mark information to be displayed.

The at least one mark display mode includes a mark display mode in which the control system 500 controls the spatial light modulator 48 to display no image 336 and applies voltages V_{F}, V_{R} across the first and second transmissive electrodes 317F, 317R that drive the layer 314 of liquid crystal material 414 into different states in different regions 320A, 320B such that the mark region 320A is visible at wide angles to off-axis observer 47 but not narrow angles to observer 45.

In the present embodiments, observer 45 may typically (but not necessarily) be located in or near to an on-axis position and is typically a display user. Observer 47 may typically be located in an off-axis position and may be a display snooper, that is an unwanted recipient of image data or in a vehicle may be a driver of the vehicle where received image data may present a distraction.

The operation of the display device 100 in the mark display mode will now be further described.

FIGURE 2A illustrates the appearance of the display to a head-on display observer 45 when no light is output from the spatial light modulator 48.

Considering transmitted light through the view angle control element 302, 300, 318, there is no output from the spatial light modulator 48 and thus no display output luminance. Such an arrangement may be provided in a sleep mode of operation. Advantageously the display device 100 power consumption is a very low power to drive only the polar control retarder 300 and not the spatial light modulator 48 or backlight 20. Such an arrangement may also be provided in a sales mode of operation, when the mark 322 is provided to achieve branding or other aesthetic appeal to prospective purchasers.

Considering incident ambient light rays 412 that may be seen by the head-on display observer 45 then the polar control retarder 300 operates to provide no phase shift for the incident polarisation state transmitted by the additional polariser 318 in both regions 320A. 320B, irrespective of the voltages V_{F}, V_{R} across the liquid crystal layer 314. Polarised ambient light that is incident onto the reflective polariser 302 is transmitted rather than reflected. The observer 45 thus sees low reflectivity from the display for both regions 320A, 320B and the mark is not visible.

FIGURE 2B illustrates the appearance of the display to an off-axis display off-axis observer 47 when no light is output from the spatial light modulator 48.

Considering transmitted light through the view angle control element 302, 300, 318. there is no output from the spatial light modulator 48 and thus no display output luminance.

Considering incident ambient light rays 412 that may be seen as reflected light rays 413 by the off-axis display off-axis observer 47 then the polar control retarder 300 operates to provide a first phase shift for the incident polarisation state transmitted by the additional polariser 318 in mark regions 320A that are driven by first drive voltages V_{FA}, V_{RA}; and a second, different phase shift for the incident polarisation state transmitted by the additional polariser 318 in background region 320B that is driven by second drive voltages V_{FB}, V_{RB}.

The different phase shifts provide different polarisation states that are incident onto the reflective polariser 302, and thus different reflectivity at the reflective polariser 302. The reflected light rays 413 are transmitted through the additional polariser 318 and reflected to the off-axis observer 47.

In one mark region 320A, a first reflectivity may be provided and a different reflectivity may be provided in background region 320B. For example, in the illustrative example of FIGURE 2B, the mark region 320A may have low reflectivity and the background region 320B may have high reflectivity such that the mark region 320A is visible to the off-axis observer 47 as a dark mark on a reflective background.

Returning to the illustrative embodiment of TABLE 1 and FIGURES 1D-1E. The mark region 320A is provided by the polar reflectivity profile of FIGURE 1G such that off-axis observer 47 sees a low reflectivity at a polar location of -45 degrees lateral angle with zero elevation. The background region 320B is provided by the polar reflectivity profile of FIGURE 1F such that off-axis observer 47 sees a high reflectivity at the same polar location. In both regions 320A, 320B then the observer 45 sees the same low reflectivity and no mark is observed or is observed with low contrast.

The mark may advantageously achieve the display of branding information, or safety information for example.

In comparison to the power consumption for providing light from the spatial light modulator 48. the power consumption to drive the regions 320A, 320B of the polar control retarder 300 may be substantially lower. In an illustrative example the power consumption of the polar control retarder 300 may be less than 250mW while the power consumption of the spatial light modulator in operation may be 5W for a typical laptop. The mark may be visible to off-axis observer 47 with advantageously low power consumption.

The operation of a further mark display mode will now be described. It may be desirable to provide mark information to the head-on display observer 45 while providing the off-axis display off-axis observer 47 with reflective mark region 320A.

**FIGURE 3A** is a schematic diagram illustrating a front perspective view of a laptop computer 102 illuminated by an ambient light source 410 comprising a switchable privacy display device 100 comprising a comprising a liquid crystal polar control retarder 301 with patterned electrodes 317F, 317R wherein light 400 is output from the spatial light modulator 48 and an image 336 is provided on the spatial light modulator 48; and **FIGURE 3B** is a schematic diagram illustrating a look-down off-axis perspective view of a laptop computer 102 illuminated by an ambient light source 410 comprising a switchable privacy display device 100 comprising a liquid crystal polar control retarder 301 with patterned electrodes 317F, 317R wherein light 400 is output from the spatial light modulator 48 and an image 336 is provided on the spatial light modulator 48. Features of the embodiment of FIGURES 3A-B not discussed in further detail may be assumed to correspond to the features with equivalent reference numerals as discussed above, including any potential variations in the features.

The alternative embodiments of FIGURES 3A-B illustrate a narrow-angle operational display mode that may be termed a "Mark Privacy Mode", in which the control system 500 controls the spatial light modulator 48 to display an operational image 338 and applies voltages V_{F}, V_{R} across the first and second transmissive electrodes 317F, 317R that drive the layer 314 of liquid crystal material 414 into different states in different regions 320A, 320B such that the operational background image 336B, 336C is not visible at a wide angle and is visible at a narrow angle (i.e. at an angle within the narrow angle light cone 401). The mark 322 provided by the illumination mark image 336A is visible at the narrow angle to the observer 45 and the mark 322 provided by the illumination mark image 336A and the regions 320A. 320B of the polar control retarder 300 is visible at the wide angle to the observer 47.

The operation of the display device 100 in the alternative mark display mode of FIGURES 3A-B will now be further described.

FIGURE 3A illustrates the appearance of the display to a head-on display observer 45 when an illumination image is output from the spatial light modulator 48. The observer 45 may see the mark illumination mark image 336A that is a still illumination image on a background image 336B. The mark illumination image 336A may be aligned with the mark region 320A of the polar control retarder 300. Advantageously visibility of the mark 322 may be provided in common location independent of viewing angle.

The image may further be provided with user data 336C that is visible to the observer 45 but is private for the off-axis observer 47, for example infotainment or control information.

Considering transmitted light through the view angle control element 302, 300. 318, the polar control retarder 300 operates to provide no phase shift for the incident polarisation state transmitted by the display polariser 218 and reflective polariser 302 in both regions 320A, 320B, irrespective of the voltages V_{F}, V_{R} across the liquid crystal layer 314. Polarised light from the spatial light modulator 48 that is incident onto the additional polariser 318 is transmitted. The observer thus sees the image regions 336A, 336B, 336C. In an alternative embodiment the mark illumination image 336A may not be illuminated and image data for the observer 45 may be provided in the regions 336B. 336C.

Considering incident ambient light rays 412 that may be seen by the head-on display observer 45, the operation is the same as that described with respect to FIGURE 2A.

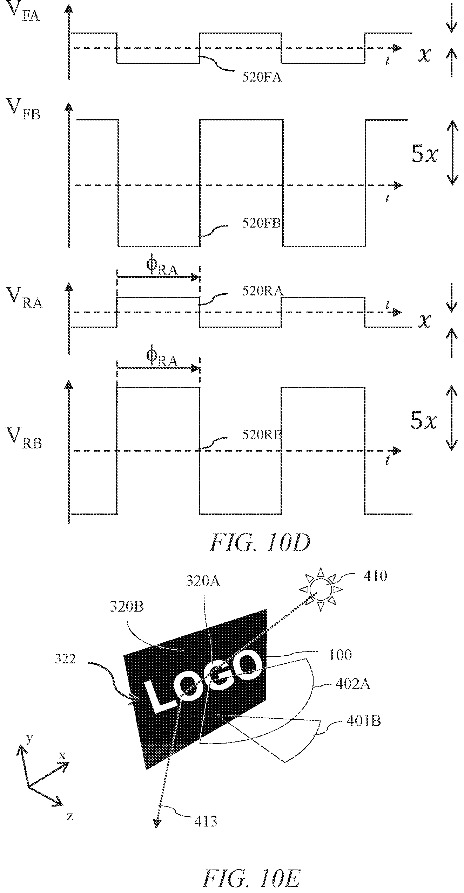

FIGURE 3B illustrates the appearance of the display to an off-axis display off-axis observer 47 when an image is output from the spatial light modulator 48. In mark region 320A. a wide angle light cone 402A is provided, and in background region 320B, a narrow angle light cone 401B is provided for output light from the spatial light modulator 48. In alternative embodiments including the embodiment of FIGURE 10E the mark region 320A may be provided with a narrow angle light cone 401A and the background region 320B may be provided with a wide angle light cone 402B.

Considering transmitted light through the view angle control element 302. 300, 318. the polar control retarder 300 operates to provide a first phase shift for the incident polarisation state transmitted by the display polariser 218 in mark regions 320A that are driven by first drive voltages V_{FA}, V_{RA}; and a second, different phase shift for the incident polarisation state transmitted by the display polariser 218 in background region 320B that are driven by second drive voltages V_{FB}, V_{RB}.

The different phase shifts provide different polarisation states that are incident onto the additional polariser 318, and thus different transmission at angles directed towards the off-axis observer 47. In background region 320B. the off-axis transmission to the off-axis observer 47 is reduced as illustrated by narrow angle light cone 401B. By comparison in mark region 320A a higher transmission is achieved and the size of wide angle light cone 402A is increased in comparison to narrow angle light cone 401B. In the illustrative example of FIGURE 3B. low transmission to off-axis observer 47 is provided in the background region 320B whereas high transmission is provided in the mark region 320A.

In an illustrative embodiment, the narrow angle light cone 401 is in a range of polar angles of from 0° to 20° from a normal to the spatial light modulator at the predetermined azimuth angle at which the image is visible in a narrow-angle operational mode. In this mode, the image is visible at angles within the narrow angle light cone 401, as a result of operating with security factor S < 1, desirably S < 0.2 and more desirably S < 0.1.

The display observer 45 may have a nominal viewing angle that is on-axis. that is normal to the centre of the display for example for a laptop computer 102. Alternatively, the observer 45 may have a nominal viewing angle that is off-axis, for example in an automotive vehicle, wherein the observer 45 may be on-axis or may have a nominal location of for example 0° to 10° off-axis location compared to the display centre and further depend on the sitting geometry in the automotive cabin.

In an illustrative embodiment, the wide angle light cone 402 is the range of angles from the display centre at which at which the image is visible in a wide-angle operational mode. In this mode, the image is visible at angles within the wide angle light cone 402 as a result of operating with security factor S < 1, desirably security factor S ≤ 0.2, and more desirably security factor S ≤ 0.1.

Considering incident ambient light rays 412 that may be seen as reflected light rays 413 by the off-axis display off-axis observer 47, the operation is the same as that described with respect to FIGURE 2B.

In the illustrative example of FIGURE 3B, the mark region 320A may have low reflectivity and the background region 320B may have high reflectivity such that the mark region 320A is visible to the off-axis observer 47 as an illuminated mark on a reflective background. Further the region 336C comprising image data is obscured with a security factor determined by the ambient illuminance, the display reflectivity and display luminance at the viewing angle of the off-axis observer 47.

In the present embodiments, the mark or logo region has an operational transparent electrode rather than being an area without a transparent conductive electrode. This means that the regions 320A, 320B have matched transmission which reduces the visibility of the mark electrode area which may occur because of the slight reduction in transmission though a conductive electrode compared to a nonelectrode region. Secondly the presence of an electrode in the mark or logo region enables a voltage to be applied to it which can tune the visibility or contrast of the logo and that of the electrode wiring to be visible from defined angles and invisible from different angles as appropriate. The mark region may be lower contrast than in the backlight of mode described with reference to FIGURE 2A.

The colour of the mark region 320A may advantageously be modified to match desired brand appearance and the observer 45 may further observe the mark region 336A.

A narrow angle operational display mode will now be described.

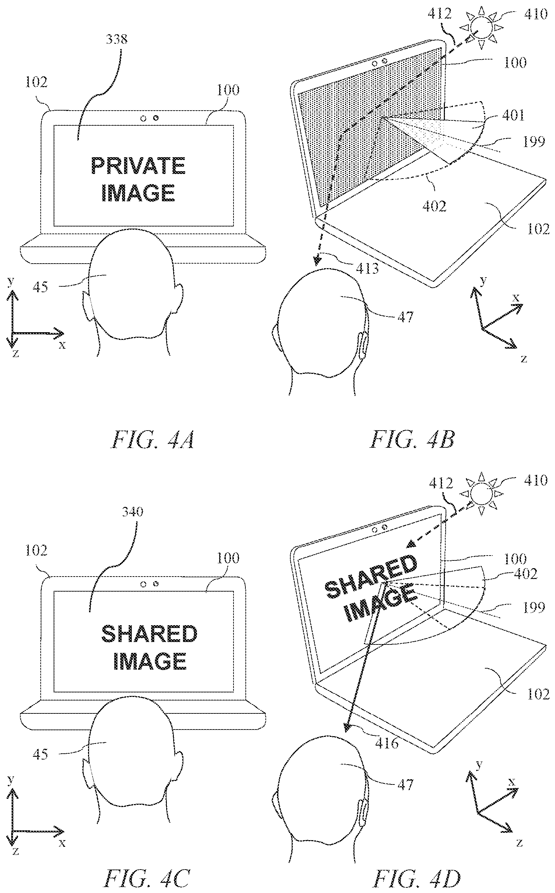

**FIGURE 4A** is a schematic diagram illustrating a front perspective view of a laptop computer 102 illuminated by an ambient light source 410 comprising a switchable privacy display device 100 operating in privacy mode comprising a liquid crystal polar control retarder 301 with patterned electrodes 317F, 317R wherein the patterned electrodes 317F, 317R are driven with a common voltage and wherein light 400 is output from the spatial light modulator 48 and an image 336 is provided on the spatial light modulator 48; and **FIGURE 4B** is a schematic diagram illustrating a look-down off-axis perspective view of a laptop computer 102 illuminated by an ambient light source 410 comprising a switchable privacy display device 100 operating in privacy mode comprising a liquid crystal polar control retarder 301 with patterned electrodes 317F, 317R wherein the patterned electrodes 317F, 317R are driven with a common voltage and wherein light 400 is output from the spatial light modulator 48 and an image 336 is provided on the spatial light modulator 48. Features of the embodiment of FIGURES 4A-B not discussed in further detail may be assumed to correspond to the features with equivalent reference numerals as discussed above, including any potential variations in the features.

FIGURES 4A-B illustrate a narrow-angle operational display mode that may be termed a "Uniform Privacy Mode", in which the control system 500 controls the spatial light modulator 48 to display an operational image 338 and applies voltages V_{F}, V_{R} across the first and second transmissive electrodes 317F, 317R that drive the layer 314 of liquid crystal material 414 into the same state in different regions 320A. 320B such that the operational image 338 is not visible at a wide angle and is visible at a narrow angle (i.e. at an angle within the narrow angle light cone 401). The mark 322 is not visible at the narrow angle to the observer 45 or at the wide angle to the observer 47.

In other words, the at least one narrow-angle operational display mode includes a narrow-angle operational display mode in which the control system 500 controls the spatial light modulator 48 to display an operational image 338 and applies voltages across the first and second transmissive electrodes 317F, 317R that drive the layer 314 of liquid crystal material 414 into the same state in different regions 320A. 320B such that the mark 322 is not visible at the wide angle.

Considering FIGURE 4A, transmitted light through the view angle control clement 302, 300, 318, the polar control retarder 300 operates to provide no phase shift for the incident polarisation state transmitted by the display polariser 218 and reflective polariser 302 in both regions 320A, 320B. Polarised light from the spatial light modulator 48 that is incident onto the additional polariser 318 is transmitted. The observer 45 thus sees the operational image 338.

Considering incident ambient light rays 412 that may be seen by the head-on display observer 45, the operation is the same as that described with respect to FIGURE 2A and the display device 100 has substantially low reflectivity across the display device 100.

FIGURE 4B illustrates the appearance of the display to an off-axis display off-axis observer 47 when the operational image 338 is output from the spatial light modulator 48.

Considering transmitted light through the view angle control element 302. 300, 318. the polar control retarder 300 operates to provide a phase shift for the incident polarisation state transmitted by the display polariser 218 in mark regions 320A that are driven by first drive voltages V_{FA}, V_{RA}; and the same phase shift for the incident polarisation state transmitted by the display polariser 218 in background region 320B that is driven by second drive voltages V_{FB}, V_{RB}.

The same polarisation state is incident onto the additional polariser 318 for both regions 320A, 320B. and thus the same transmission at angles directed towards the off-axis observer 47 as illustrated by wide angle light cone 402 that is reduced size in comparison to the narrow angle light cone 401 from the spatial light modulator 48.

Considering incident ambient light rays 412 that may be seen as reflected light rays 413 by the off-axis display off-axis observer 47 then the polar control retarder 300 operates to provide a phase shift for the incident polarisation state transmitted by the additional polariser 318 in mark regions 320A that are driven by drive voltages V_{FA}, V_{RA}; and the same phase shift for the incident polarisation state transmitted by the additional polariser 318 in background region 320B that is driven by drive voltages V_{FB}, V_{RB} that may be the same as drive voltages V_{FA}, V_{RA}.

The phase shifts provide the same polarisation states that are incident onto the reflective polariser 302, and thus the same reflectivity at the reflective polariser 302. The reflected light rays 413 are transmitted through the additional polariser 318 and reflected to the off-axis observer 47.

The same high reflectivity is provided in regions 320A, 320B for the off-axis observer 47. Image data from image 338 is obscured with a security factor determined by the ambient illuminance, the display reflectivity and display luminance at the viewing angle of the off-axis observer 47.

Observer 45 that is a user has high image visibility and off-axis observer 47 that is an unwanted snooper is provided with a high security factor so that the image 338 is difficult to discern or is invisible. A privacy display operation mode is advantageously achieved.

A wide angle operational display mode will now be described.

**FIGURE 4C** is a schematic diagram illustrating a front perspective view of a laptop computer 102 illuminated by an ambient light source 410 comprising a switchable privacy display device 100 operating in share mode comprising a liquid crystal polar control retarder 301 with patterned electrodes 317F, 317R wherein the patterned electrodes 317F. 317R are driven with a common voltage and wherein light 400 is output from the spatial light modulator 48 and an image 336 is provided on the spatial light modulator 48; and **FIGURE 4D** is a schematic diagram illustrating a look-down off-axis perspective view of a laptop computer 102 illuminated by an ambient light source 410 comprising a switchable privacy display device 100 operating in share mode comprising a liquid crystal polar control retarder 301 with patterned electrodes 317F, 317R wherein the patterned electrodes 317F. 317R are driven with a common voltage and wherein light 400 is output from the spatial light modulator 48 and an image 336 is provided on the spatial light modulator 48. Features of the embodiment of FIGURES 4C-D not discussed in further detail may be assumed to correspond to the features with equivalent reference numerals as discussed above, including any potential variations in the features.

FIGURES 4C-D illustrate a wide-angle operational display mode that may be termed a "Uniform Share Mode", in which the control system 500 controls the spatial light modulator 48 to display an operational image 338 and applies voltages V_{F}, V_{R} across the first and second transmissive electrodes 317F, 317R that drive the layer 314 of liquid crystal material 414 into the same state in different regions 320A, 320B such that the operational image 338 is visible at a wide angle (i.e. an angle within wide angle light cone 402) and is visible at a narrow angle (i.e. at an angle within the narrow angle light cone 401). The mark 322 is not visible at the narrow angle to the observer 45 or the wide angle to the observer 47.

In the embodiments of FIGURES 4C-D the control system 500 controls the spatial light modulator 48 to display an operational image 340 and applies voltages V_{F}, V_{R} across the first and second transmissive electrodes 317F, 317R that drive the layer 314 of liquid crystal material 414 into the same state in different regions 320A. 320B such that the operational image 338 is visible at the narrow angle and at the wide angle and the mark is not visible at the narrow angle or the wide angle.

Considering FIGURE 4C. transmitted light through the view angle control element 302. 300, 318, the polar control retarder 300 operates to provide no phase shift for the incident polarisation state transmitted by the display polariser 218 and reflective polariser 302 in both regions 320A, 320B. Polarised light from the spatial light modulator 48 that is incident onto the additional polariser 318 is transmitted. The observer 45 thus sees the operational image 340.

Considering incident ambient light rays 412 that may be seen by the head-on display observer 45, the operation is the same as that described with respect to FIGURE 4A and the display device 100 has substantially low reflectivity across the display device 100.

FIGURE 4D illustrates the appearance of the display to an off-axis display off-axis observer 47 when the operational image 340 is output from the spatial light modulator 48.

Considering transmitted light through the view angle control element 302. 300, 318. the polar control retarder 300 operates to provide substantially no phase shift for the incident polarisation state transmitted by the display polariser 218 in mark regions 320A that are driven by drive voltages V_{FA}, V_{RA}; and substantially no phase shift for the incident polarisation state transmitted by the display polariser 218 in background region 320B that is driven by drive voltages V_{FB}, V_{RB} that may be the same as voltages V_{FA}, V_{RA} but are different to the drive voltages of FIGURES 4A-B as will be described below.

The same polarisation state is incident onto the additional polariser 318 for both regions 320A, 320B. and thus the same transmission at angles directed towards the off-axis observer 47 as illustrated by wide angle light cone 402 that is the same size in comparison to the narrow angle light cone 401 from the spatial light modulator 48. Light rays 416 are output from the display device 100 to the off-axis observer 47.

Considering incident ambient light rays 412 that may be seen as reflected light rays 413 by the off-axis display off-axis observer 47 then the polar control retarder 300 operates to provide substantially no phase shift for the incident polarisation state transmitted by the additional polariser 318 in mark regions 320A that are driven by drive voltages V_{FA}, V_{RA}; and substantially no phase shift for the incident polarisation state transmitted by the additional polariser 318 in background region 320B that is driven by drive voltages V_{FB}, V_{RB} that may be the same as drive voltages V_{FA}, V_{RA}.

The polarisation states are incident onto the reflective polariser 302 are aligned to the electric vector transmission direction of the reflective polariser 302 and thus are not reflected.

The same low reflectivity is provided in regions 320A, 320B for the off-axis observer 47. Image data from image 340 is visible with high image visibility for the off-axis observer 47. A share display operation mode is advantageously achieved.

Operation of a mark privacy mode will now be described.

**FIGURE** 5A is a schematic diagram illustrating a front perspective view of a laptop computer 102 comprising a switchable privacy display device 100 operating in mark privacy mode comprising a patterned electrode liquid crystal polar control retarder 301 wherein the patterned electrodes 317F, 317R are driven with different voltages and wherein image data is provided on the spatial light modulator 48; and **FIGURE 5B** is a schematic diagram illustrating a look-down off-axis perspective view of a laptop computer 102 illuminated by an ambient light source 410 comprising a switchable privacy display device 100 operating in mark privacy mode comprising a patterned electrode liquid crystal polar control retarder 301 wherein the patterned electrodes 317F, 317R are driven with different voltages and wherein image data is provided on the spatial light modulator 48. Features of the embodiment of FIGURES 5A-B not discussed in further detail may be assumed to correspond to the features with equivalent reference numerals as discussed above, including any potential variations in the features.

The alternative embodiments of FIGURES 5A-B illustrate a narrow-angle operational display mode that may be termed a "Mark Privacy Mode", in which the control system 500 controls the spatial light modulator 48 to display an operational image 338 and applies voltages V_{F}, V_{R} across the first and second transmissive electrodes 317F, 317R that drive the layer 314 of liquid crystal material 414 into different states in different regions 320A, 320B such that the operational image 338 is not visible at a wide angle and is visible at a narrow angle (i.e. at an angle within the narrow angle light cone 401). The mark 322 is not visible at the narrow angle to the observer 45 and is visible at the wide angle to the observer 47.

The alternative embodiment of FIGURES 5A-5B illustrates a display device 100 for use in ambient illumination 410 for example of the type of FIGURE 1A, wherein the view angle control arrangement further comprises a reflective polariser 302 and wherein the control system 500 is arranged to be operable in plural modes of operation.

In a wide-angle operational display mode. for example as illustrated in FIGURE 4B wherein the control system 500 controls the spatial light modulator 48 to display an operational image 338 and applies voltages across the first and second transmissive electrodes 317F. 317R that drive the layer 314 of liquid crystal material 414 into the same state in different regions 320A, 320B such that the operational image 338 is visible at a wide angle in cone 402 and at a narrow angle, and the mark is not visible at the narrow angle or the wide angle.

In at least one narrow-angle operational display mode illustrated in FIGURE 5B, the control system 500 controls the spatial light modulator 48 to display an operational image 338 and applies voltages across the first and second transmissive electrodes 317F, 317R that drive the layer 314 of liquid crystal material 414 into different states in different regions 320A, 320B such that the operational image 338 is visible at the narrow angle (in narrow angle light cone 401) but not at the wide angle (in wide angle light cone 402), and the mark 322 is not visible at the narrow angle, but is visible at the wide angle.

Referring to eqn. 10 and associated description hereinabove, the security factor *Sₙ* is given by the equation: ${S}_{n} = {log}_{10} \left[1+{ρ}_{n}.α/\left(π.{P}_{n}\right)\right]$ eqn. 12 wherein: *ρₙ* is the reflectivity of the display device at the angle in question, *Pₙ* is the ratio of the luminance of the display device at the angle in question to the maximum luminance of the display device, π is a solid angle in units of steradians; and α is a factor having a value of 4.0 steradians, so that the measurement condition for eqn. 12 refers to a display illuminance *I* that is reflected towards the angle in question and measured in lux that is four times the peak display luminance *Yₘₐₓ* measured in nits.

The operational image 338 is visible when a security factor *Sₙ* defined at the angle in question is, for all the regions 320A, 320B, less than 1.0. More desirably for a high contrast image for the off-axis observer 47 acting as a display user, the security factor *Sₙ* defined at the angle in question is, for all the regions 320A, 320B. desirably 0.2 or less. For values of the security factor *Sₙ* greater than 0.2 and less than 1.0, an off-axis observer 47 acting as a display user will see the image with reduced contrast.

The operational image 338 is not visible, when a security factor *Sₙ* defined at the angle in question is, for all the regions 320A, 320B, at least 1.0. For values of the security factor *Sₙ* between 0.2 and 1.0 an off-axis observer 47 acting as a display snooper will experience some image visibility and as such the display device 100 may be considered as not private at the angle in question.

Further, the mark 322 is visible when the security factor *S_{320A}* defined at the angle in question in the plural mark region 320A (in a shape of a mark 322) is different to the security factor *S_{320B}* in the other region 320B respectively. The mark 322 is not visible when the security factor *S_{320A}* defined at the angle in question in the plural mark region 320A is the same as the security factor *S_{320B}* in the other of the background regions 320B.

In the present description, the wide angle is a polar angle of 45° from a normal to the display device at a predetermined azimuth angle around the normal to the display device 100: and the narrow angle is in a range of polar angles of from 0° to 20° from a normal to the spatial light modulator at the predetermined azimuth angle.

Illustrative examples of the embodiment of FIGURE 5B is given in TABLE 3D hereinbelow.

It may be desirable to reduce the cost and frontal reflectivity of the display device 100.

**FIGURE 5C** is a schematic diagram illustrating a look-down off-axis perspective view of a laptop computer 102 comprising a switchable privacy display device 100 operating in full screen privacy mode. Features of the embodiment of FIGURE 5C not discussed in further detail may be assumed to correspond to the features with equivalent reference numerals as discussed above, including any potential variations in the features.

The alternative embodiment of FIGURE 5C illustrates an embodiment wherein the display device 100 comprises no reflective polariser 302. for example as illustrated in FIGURE 1D or FIGURE 1E. The regions 320A, 320B are driven so the layer 314 of liquid crystal material is driven with the same state as described elsewhere herein. A privacy display with relatively low frontal reflectivity is provided. Advantageously aesthetic appearance maybe improved in some applications where that is considered desirable, and cost may be reduced.

**FIGURE 5D** is a schematic diagram illustrating a look-down off-axis perspective view of a laptop computer 102 comprising a switchable privacy display device 100 operating in mark privacy mode comprising a patterned electrode liquid crystal polar control retarder 301 with no reflective polariser wherein the patterned electrodes 317F, 317R are driven with different voltages and wherein image data is provided on the spatial light modulator 48. Features of the embodiment of FIGURE 5D not discussed in further detail may be assumed to correspond to the features with equivalent reference numerals as discussed above, including any potential variations in the features.

The alternative embodiment of FIGURE 5D illustrates a similar embodiment to that of FIGURE 5B, wherein both regions 320A. 320B are provided with a security factor *S_{320A}*, *S_{320B}* that is 1.0 or greater, but the respective security factors *S_{320A}*, *S_{320B}* are different.

The purpose of the privacy mark modes is to provide desirable security factor within both the mark regions 320A and the background regions 320B, and a contrast of security factor *S_{320A}*, *S_{320B}* as between the regions 320A and the background regions 320B such that the mark is visible.

By way of comparison with the present embodiments, some types of prior art privacy display provide a security factor that is insufficient for making the image not visible at wide angles in the privacy mode of operation at desirable levels of illuminance and maximum display luminance. To compensate for insufficient security factor S, prior art camouflage displays provide a disruptive structure which add an image disruption pattern to the image seen by an off-axis snooper. While some implementations may involve patterning of an electrode to form the disruptive pattern, the purpose is different from the techniques described herein, with the result that the shape of the pattern and the operation is different. Typically, in a narrow-angle operational display mode parts of the operational image seen by an off-axis observer are visible through regions of the display forming the disruptive pattern, but the shape of the disruptive pattern is chosen so that when the parts of the image are seen through it, then the content of the operational image is disrupted and so in principle the overall operational image is not difficult to perceive. The purpose and function of camouflage displays is thus different to the purpose of the mark modes of the present embodiments, and in the narrow-angle operational display mode a camouflage display is operated to allow the image to be visible through the disruptive pattern, which is not the case in the narrow-angle operational display mode described herein.

The display device 100 of the present embodiments may be provided in at least monitors, laptops, graphical terminals (such as point of sale terminals), mobile phones and other display devices including automotive display. An arrangement of the display device 100 in an automotive vehicle will now be described.

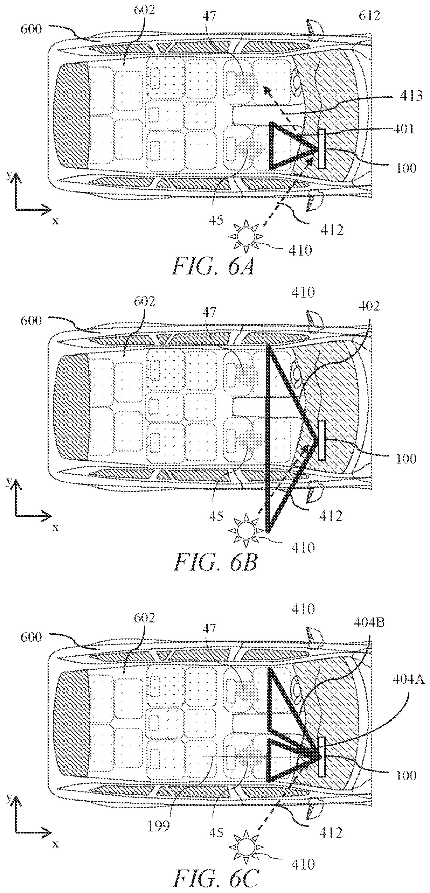

**FIGURE 6A** is a schematic diagram illustrating a top view of an automotive vehicle 600 comprising a switchable privacy passenger infotainment display device 100 operating in uniform privacy mode, mark sleep mode or mark privacy mode: **FIGURE 6B** is a schematic diagram illustrating a top view of an automotive vehicle 600 comprising a switchable privacy passenger infotainment display device 100 operating in a first uniform share mode; and **FIGURE 6C** is a schematic diagram illustrating a top view of an automotive vehicle 600 comprising an alternative switchable privacy passenger infotainment display device 100 operating in a second share mode. Features of the embodiments of FIGURES 6A-C not discussed in further detail may be assumed to correspond to the features with equivalent reference numerals as discussed above, including any potential variations in the features.

The display device 100 of FIGURES 6A-C may have at least the same modes as those described with respect to the laptop 102 of FIGURES 2A-B, FIGURES 3A-B, FIGURES 4A-D and FIGURES 5A-D.

In comparison to the laptop 102. the switchable privacy display device 100 for example for use as a passenger infotainment display device 100 may be arranged to minimise distraction to the observer 47 that is a driver and to provide high image visibility to the observer 45 that is a passenger or co-driver. In uniform privacy mode and mark privacy mode operation, the passenger observer 45 may advantageously view infotainment image. The visibility of user image 338 on the display device 100 at angles for which the driver observer 47 can lean towards the optical axis 199 of the display device 100 is advantageously reduced, and driver distraction reduced, advantageously increasing safety of operation of the display device 100.

Further the mark display mode may be provided as the mark sleep mode with low power consumption so that the driver observer 47 sees mark 322 at least: when no passenger observer 45 is viewing the display device 100; in a vehicle showroom; when the vehicle is configured in courtesy mode; or when the ambient illumination conditions and driver observer 47 location are unsuitable for desirable limits of security factor S to achieve low driver distraction, in which case a non-distracting image 338 may be presented on the display device 100 for viewing by the passenger observer 45.

In prior art non-private displays it is from time to time considered desirable to provide very low display reflectivity to achieve no driver distraction, for example a "piano-black" appearance can be considered aesthetically pleasing. Privacy displays typically rely on display reflectivity to achieve desirable security factors for low driver distraction and so privacy displays do not typically have a piano black appearance. Advantageously, the mark 322 appearance may achieve an enhanced aesthetic appearance for displays that use reflectivity to enhance display privacy performance, that is displays that do not have a piano-black appearance when no image is provided. For example, the driver observer 47 may perceive a display vehicle brand logo on the display surface while the passenger observer 45 does not see the logo. The brand logo mark region may have a higher reflectivity than the background region, or may have a lower reflectivity, depending on aesthetic preference that may be selected by the manufacturer or display user.

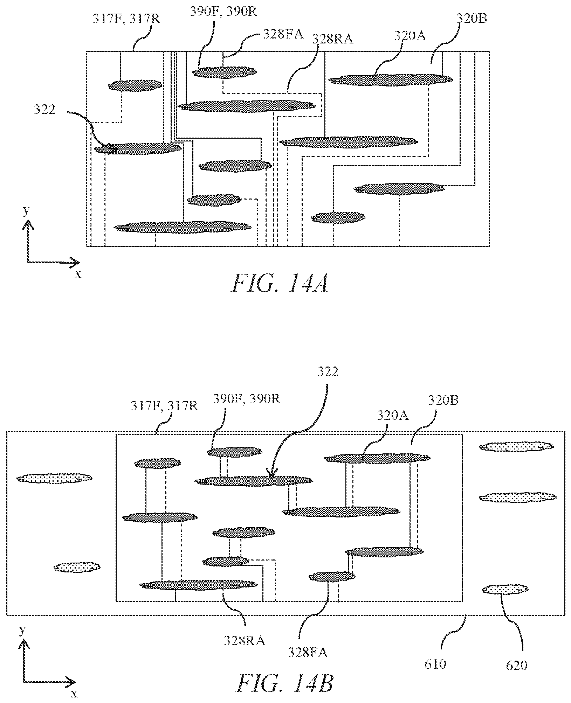

Further it may be desirable to provide matching to brand colouring, that can for example can be achieved by the mark display mode of FIGURES 3A-B. Further the appearance of the mark 320A in mark display mode may be arranged to be similar to that of the vehicles aesthetic environment such as the dashboard appearance, for example as illustrated in FIGURE 14B hereinbelow.

Further the colour of reflectivity of the display may be modified by insertion of colour filter 380, for example as illustrated in the alternative embodiment of FIGURE 1B. Alternatively the colour of reflectivity may be modified by selecting polarisers with a desirable transmission spectrum.

An alternative arrangement for a vehicle privacy display device 100 will now be described.

In the alternative embodiment of FIGURE 6C an alternative arrangement of illumination for share mode is illustrated.

In comparison to the arrangement of FIGURE 6B. two light cones 404A, 404B are provided directed to passenger observer 45 and driver observer 47 respectively. The illumination of light cones 404A, 404B may be independently controlled by means of a directional backlight 20. U.S. Patent No. 11,442,316, illustrates an enabling display backlight 20 comprising first and second arrays 15A. 15B of LEDs aligned to first and second waveguides 1A, 1B in place of the single waveguide 1 and single array 15 of LEDs of FIGURE 1A. In operation, one of the arrays 15A. 15B is controlled to illuminate the light cone 404A and the other of the arrays 15A, 15B is controlled to illuminate the light cone 404B. When both light cones 404A. 404B are illuminated then the display device 100 operates in a similar manner to the wide angle light cone 402; and when only light cone 404A is illuminated then the display device 100 operates in a similar manner to the narrow angle light cone 401, as described hereinabove. When only the light cone 404B is illuminated then the display device 100 achieves lower power consumption for illumination of the driver observer 47 only.

Such an arrangement of light cones 404A, 404B may achieve improved performance in privacy mode, as in comparison to the light cone 402, stray light from the backlight 20 that is directed into light cone 404B may be suppressed by the transmission and reflectivity of polar control retarder 300. The visibility of the display device 100 at angles for which the driver observer 47 leans into the optical axis 199 is advantageously reduced, and driver distraction reduced in comparison to the arrangement of FIGURE 6B. Complexity and cost of the display device 100 may advantageously be reduced.

The structure and operation of an illustrative passenger infotainment display device 100 of FIGURE 6C will now be described.

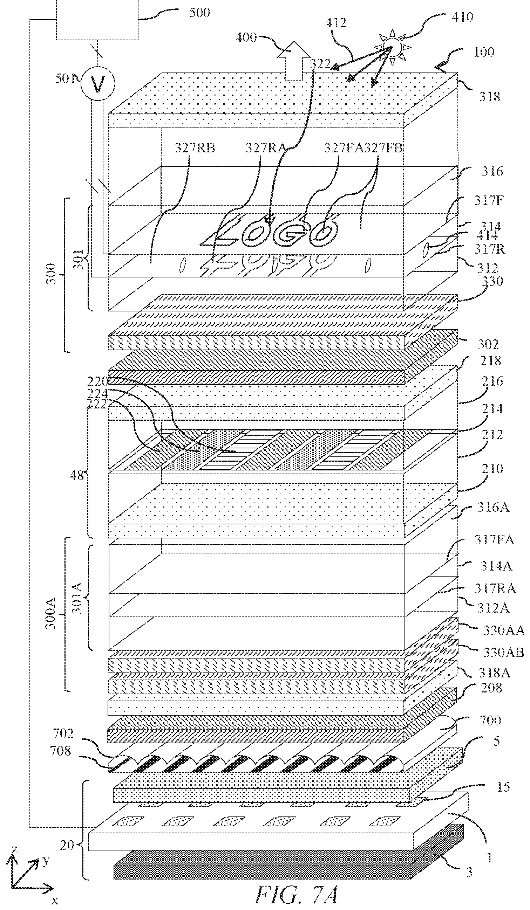

**FIGURE 7A** is a schematic diagram illustrating a front perspective view of a privacy display device 100 for use in the automotive display device 100 of FIGURE 6C. Features of the embodiment of FIGURE 7A not discussed in further detail may be assumed to correspond to the features with equivalent reference numerals as discussed above, including any potential variations in the features.

In comparison to the arrangement of FIGURE 1A, a further additional polariser 318A is provided between the backlight 20 and the input polariser 210. Further polar control retarder 300A comprises switchable liquid crystal retarder 301 and crossed A-plate passive compensation retarders 330A. 330B and is provided between the further additional polariser 318A and input polariser 210. In an illustrative embodiment the polar control retarder 300 and further polar control retarder 300A may be arranged as described in TABLE 2.

**TABLE 2**

| Item | Layer | Alignment type | LC layer 314 retardance | Additional passive retarder 330 type | Additional passive retarder 330 retardance |
|---|---|---|---|---|---|
| 300 | 417F | Homogeneous | 1000nm | | |
| | 417R | Homeotropic | | | |
| | 330 | | | Negative C-plate | -880nm |
| 300A | 417AA | Homogeneous | 1000nm | | |
| | 417AB | Homogeneous | | | |
| | 330AA | | | Positive A-plate @ 135° | +800nm |
| | 330AB | | | Positive A-plate @ 45° | +800nm |

In comparison to the waveguide 1 with edge input light sources 15 of FIGURE 1A, the backlight 20 comprises an array of mini-LED light sources 15. Light control components 5 may comprise colour conversion layers such as phosphor or quantum dot sheets, diffusers and prismatic films such as brightness enhancement films, BEF^{™} from 3M corporation. In alternative embodiments the light control components 15 may further comprise at least one waveguide or other catadioptric optical element.

The array of mini-LED light sources 15 may be controlled by controller 500 and provided with image data that is aligned to the pixels 220. 222, 224 of the spatial light modulator 48. Advantageously high dynamic range operation, power savings and high luminance may be achieved.

The optical stack may further comprise a backlight angle control element 700 arranged between the backlight 20 and the further additional polariser 318A. In alternative embodiments the further additional polariser 318A, further polar control retarder 300A may be omitted to advantageously achieve reduced cost and complexity.

The operation of the backlight angle control element 700 will now be described.

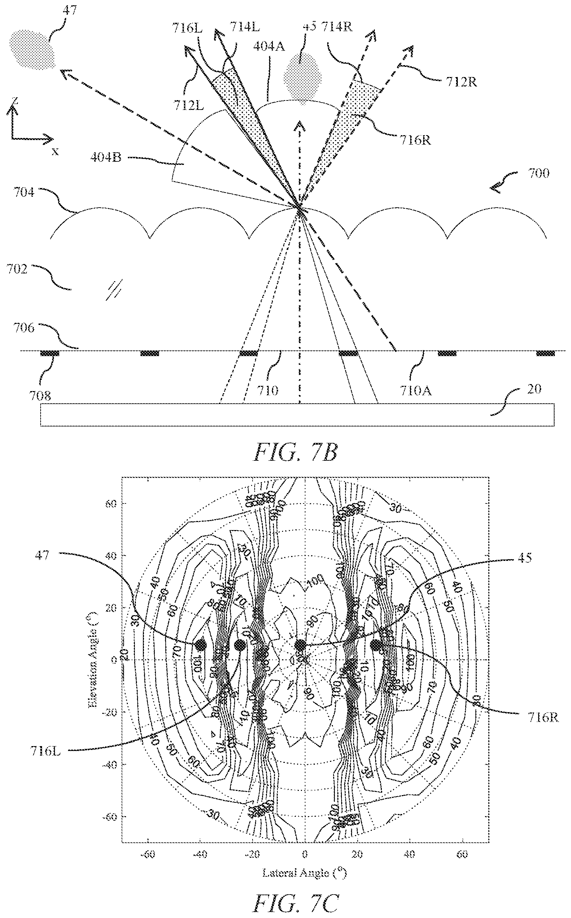

**FIGURE 7B** is a schematic diagram illustrating a side view of the backlight angle control element 700 of FIGURE 7A. Features of the embodiment of FIGURE 7B not discussed in further detail may be assumed to correspond to the features with equivalent reference numerals as discussed above, including any potential variations in the features.

The backlight control element 700 comprises a lens array 702 than comprises a structured front surface 704 and a rear surface 706 that comprises an array of light absorbing regions 708 and aperture regions 710. The structured front surface may comprise a lens array that may be two dimensional or may be one dimensional, such as a lenticular lens.

The lens array 704 is arranged to image the aperture region 710 that is aligned with the respective lens towards the passenger observer 45 and to image the aperture region 710A that is aligned with an adjacent lens towards the driver observer 47. Light cones 404A, 404B of FIGURE 6C are thus provided with intermediate light cones 716L with size 714L that are formed by light rays 712L.

**FIGURE 7C** is a schematic graph illustrating the polar variation of transmission for a backlight angle control element of FIGURE 7B. Nominal driver observer 47 and passenger observer 45 locations are marked, for a look-down viewing angle of about 10 degrees onto the display centre. Around the limit of driver observer 47 lean towards the passenger, the light cone 716L, has minimum transmission. Further on the side towards the passenger window then luminance is advantageously decreased, to prevent visibility in night-time operation.

The performance of the illustrative display stack of FIGURE 7A and TABLE 2 in privacy mode, that for the automotive display device 100 of FIGURE 6C in the privacy mode, which for a passenger infotainment display is the low driver distraction mode, will now be described.

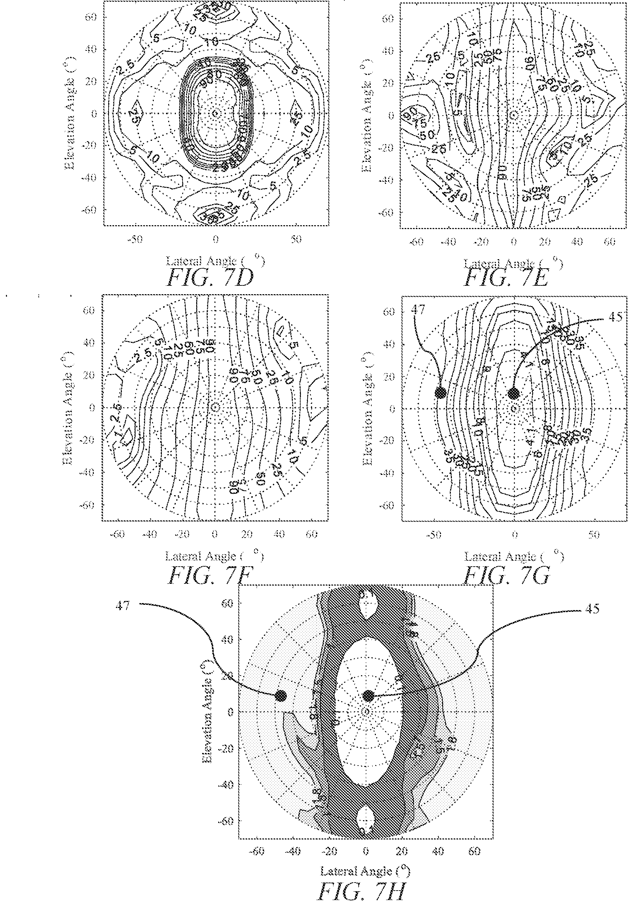

**FIGURE 7D** is a schematic graph illustrating the polar variation of luminance for a backlight 20 comprising a mini-LED array and brightness enhancement films, and a backlight angle control element 700 of FIGURE 7A and FIGURE 7C.

**FIGURE 7E** is a schematic graph illustrating the polar variation of transmission for a further polar control retarder 300A of FIGURE 7A and TABLE 2 in low driver distraction mode.

**FIGURE 7F** is a schematic graph illustrating the polar variation of transmission for a polar control retarder 300 of FIGURE 7A and TABLE 2 in low driver distraction mode; and **FIGURE 7G** is a schematic graph illustrating the polar variation of reflectivity for a polar control retarder 300 of FIGURE 7A and TABLE 2 in low driver distraction mode.

**FIGURE 7H** is a schematic graph illustrating the polar variation of security factor, S for the illustrative embodiment of TABLE 2 in a privacy mode of operation for the display device of FIGURE 7A with luminance profile of FIGURE 7D, transmission profile of FIGURES 7E-F and reflectivity profile of FIGURE 7G with a display head-on luminance, of value Yₘₐₓ measured in nits that is half of the illuminance of value I measured in lux. Advantageously the driver observer 47 is provided with high image security over a large angular range while the passenger observer 45 has high image visibility.

The performance of the illustrative display stack of FIGURE 7A and TABLE 2 in privacy mode, that for the automotive display device 100 of FIGURE 6C is the low driver distraction mode will now be described.

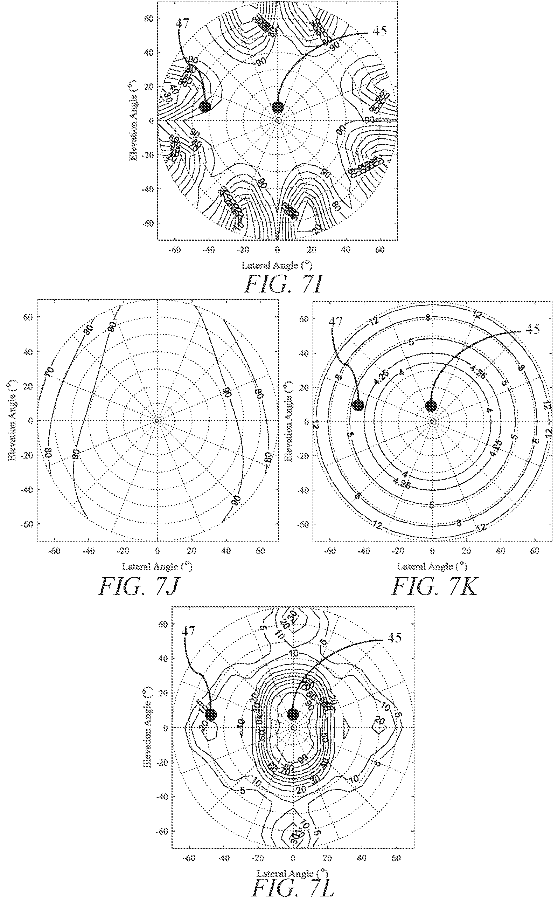

**FIGURE 7I** is a schematic graph illustrating the polar variation of transmissive for a further polar control retarder 300A of FIGURE 7A in share mode. High transmission is advantageously achieved for passenger observer 45 and driver 45.

**FIGURE 7J** is a schematic graph illustrating the polar variation of transmissive for a polar control retarder of FIGURE 7A in share mode; and **FIGURE 7K** is a schematic graph illustrating the polar variation of reflectivity for a polar control retarder of FIGURE 7A in share mode.

**FIGURE 7L** is a schematic graph illustrating the polar variation of luminance for the display of FIGURE 7A in share mode. Advantageously the driver observer 47 may observe the display with acceptable luminance while the passenger observer 45 sees a high luminance image.

Returning to the description of FIGURE 1A and FIGURE 2B for a display device 100 comprising the polar control retarder 300 of FIGURE 7A. the high reflectivity background region 320B for the off-axis observer 47 may be provided by the reflectivity illustrated in FIGURE 7G and the low reflectivity mark region 320A for the off-axis observer 47 may be provided by the reflectivity illustrated in FIGURE 7K. The difference in the reflectivity for the off-axis observer 47 at said location may provide high background region 320B visibility in ambient illumination 412.

It would be desirable to provide control of a switchable privacy display device 100. Some approaches providing control are implemented in the following examples. In the following examples, specific examples of electrode structures and control circuits are shown, but this is not limitative and in general any of the electrode structures and control circuits disclosed herein may alternatively be applied in the following examples.

The structure and addressing of illustrative electrodes 317F, 317R for the polar control retarder 300 will now be described.

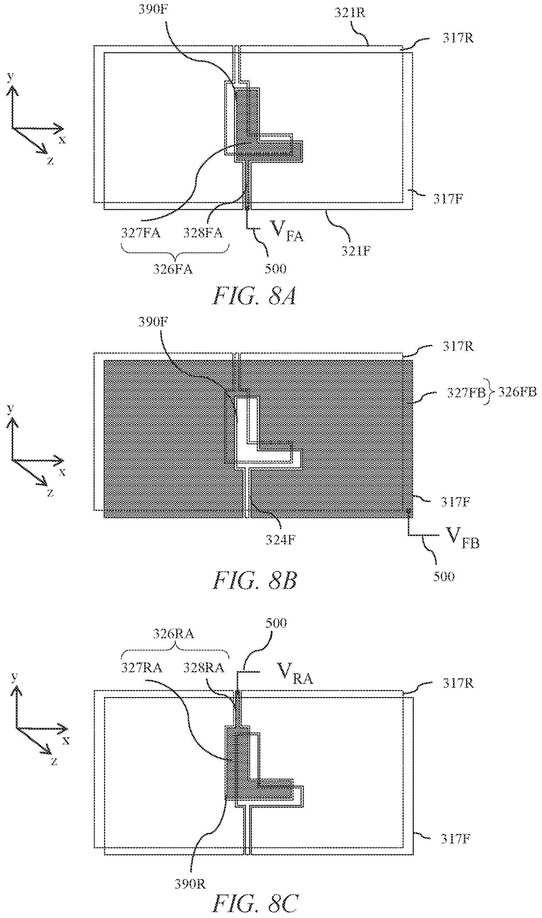

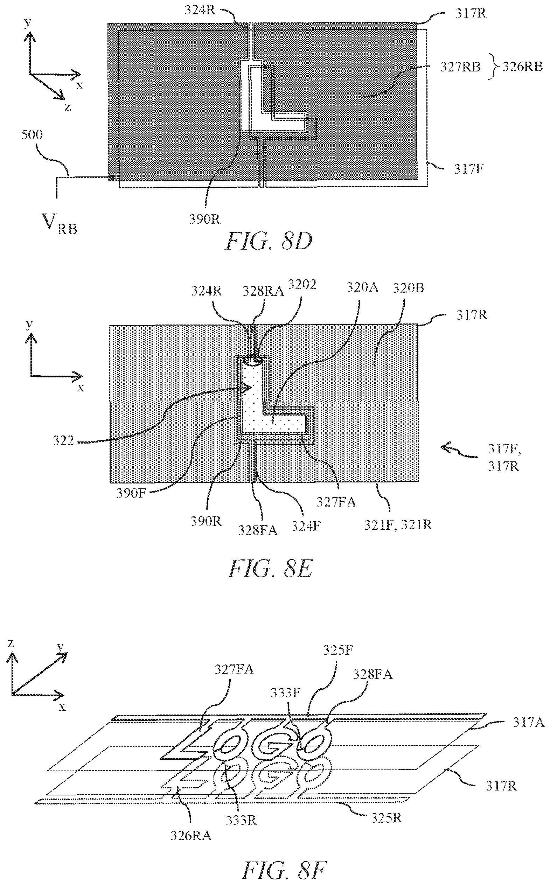

**FIGURE 8A** is a schematic diagram illustrating a top perspective view of the electrodes 317F, 317R of the switchable liquid crystal polar control retarder 301 and the driving of the shaded top electrode pattern region 326FA by a voltage V_{FA}; **FIGURE 8B** is a schematic diagram illustrating a top perspective view of the electrodes of the switchable liquid crystal polar control retarder 301 and the driving of the shaded top electrode pattern area 327FB by a voltage V_{FB}; **FIGURE 8C** is a schematic diagram illustrating a top perspective view of the electrodes of the switchable liquid crystal polar control retarder 301 and the driving of the shaded bottom electrode pattern region 326RA by a voltage V_{RA}; and **FIGURE 8D** is a schematic diagram illustrating a top perspective view of the electrodes of the switchable liquid crystal polar control retarder 301 and the driving of the shaded bottom electrode pattern area 327RB by a voltage V_{RB}. Features of the embodiment of FIGURES 8A-D not discussed in further detail may be assumed to correspond to the features with equivalent reference numerals as discussed above, including any potential variations in the features.

In the present description, in the case that an electrode feature is adjacent the outer edge 321F, 321R of the active area of the electrode 317F, 317R respectively then the electrode feature is termed proximal (i.e. situated near to the point of connection). In the case that the electrode feature is separated from the outeredge 321F, 321R of the active area of the electrode 317F, 317R then the electrode feature is termed distal (i.e. situated away from the point of connection).

Considering FIGURE 8A, the first transmissive electrode 317F is patterned to provide an electrode 326FA comprising a distal area 327FA that is not adjacent to an outer edge 321F of the first transmissive electrode 317F and a connection track 328FA that extends between the distal area 327FA and the outer edge 321F of the electrode 317F. Voltage V_{FA} is applied to the connection electrode 328FA at a location outside the active area (visible portion) of the display device 100.

Considering FIGURE 8B, the first transmissive electrode 317F is patterned to provide an electrode 326FB comprising a proximal area 327FB that is adjacent to an outer edge 321F of the first transmissive electrode 317F. The area 327FB is proximal, so connection track 328FB may be omitted and the electrode 326FB comprises the proximal area 327FB. Voltage V_{FB} is applied to the proximal area 327FB at a location outside the active area (visible portion) of the display device 100.

The distal area 327FA and proximal area 327FB, and the connection track 328FA, and proximal area 327FB are separated by gaps 390F. and the second transmissive electrode 317R is patterned to provide plural areas 327RA, 327RB separated by gaps 390R.

Considering FIGURE 8C, the second transmissive electrode 317R is patterned to provide an electrode 326RA comprising a distal area 327RA that is not adjacent to an outer edge 321R of the first transmissive electrode 317R and a connection track 328RA that extends between the distal area 327RA and the outer edge 321R of the electrode 317R. Voltage V_{RA} is applied to the connection electrode 328RA at a location outside the active area (visible portion) of the display device 100.

Considering FIGURE 8D, the first transmissive electrode 317R is patterned to provide an electrode 326RB comprising a proximal area 327RB that is adjacent to an outer edge 321R of the first transmissive electrode 317R. The area 327RB is proximal, so connection track 328RB may be omitted and the electrode 326RB comprises the proximal area 327RB. Voltage V_{RB} is applied to the proximal area 327RB at a location outside the active area (visible portion) of the display device 100.

The distal area 327RA and proximal area 327RB, and the connection track 328RA, and proximal area 327RB are separated by gaps 390R. and the second transmissive electrode 317R is patterned to provide plural areas 327RA, 327RB separated by gaps 390R.

The plural distal areas 327FA, 327RA are each in a shape of a mark 322A for display to an off-axis observer 47 of FIGURE 2B for example. The plural areas 327FA, 327RA of the first and second transmissive electrodes 317F, 317R are aligned across the layer 314 of liquid crystal material 414.

Thus referring again to the illustrative embodiment of FIGURE 1A, a display device 100 for use in ambient illumination 410 comprises: a spatial light modulator 48 arranged to output light, wherein the spatial light modulator 48 comprises an output polariser 218 arranged on the output side of the spatial light modulator 48. the output polariser 218 being a linear polariser; a view angle control arrangement comprising: an additional polariser 318 arranged on the output side of the output polariser 218, the additional polariser 318 being a linear polariser; a reflective polariser 302 arranged between the output polariser 218 and the additional polariser 318, the reflective polariser 302 being a linear polariser; and at least one polar control retarder 300 arranged between the reflective polariser 302 and the additional polariser 318, the at least one polar control retarder 300 including a switchable liquid crystal retarder 301 comprising a layer 314 of liquid crystal material 414. and first and second transmissive electrodes 317F. 317R on opposite sides of the layer 314 of liquid crystal material 414, wherein each of the first and second transmissive electrodes 317F. 317R is patterned to provide plural addressable areas 327A, 327B separated by gaps 390, and at least one of the plural addressable areas 327A. 327B being in a shape of a mark region 320A for display to an off-axis observer 47.

The plural regions each include at least one distal area 327FA, 327RA that is not adjacent to an outer edge 321F, 321R of the first and second transmissive electrodes 317F, 317R and at least one proximal area 327FB, 327RB that is adjacent to an outer edge 321F, 321R of the first and second transmissive electrodes 317F, 317R.

**FIGURE 8E** is a schematic diagram illustrating in front view aligned first and second electrodes of FIGURES 8A-8D arranged to provide distal and proximal regions 320A, 320B of the mark 322. Features of the embodiment of FIGURE 8E not discussed in further detail may be assumed to correspond to the features with equivalent reference numerals as discussed above, including any potential variations in the features.

The at least one connection tracks 328FA, 328RA connected to the areas 327FA, 327RA of the first and second transmissive electrodes 317F, 317R that are aligned with the at least one distal mark region 320A are not aligned with each other across the layer 314 of liquid crystal material 414. That is connection track 328FA is not aligned to connection track 328RA while distal area 327FA is aligned to distal area 327RA.

Areas of the first and second transmissive electrodes 317F, 317R that are aligned with the at least one proximal background region 320B have at least one connection slit 324F, 324R through which extend at least one connection track 328FA, 328RA connected to areas of the first and second transmissive electrodes317F, 317R that are aligned with the at least one distal mark region 320A, the at least one connection track 328FA, 328RA extending to the outer edge 321F, 321R of the first and second transmissive electrodes 317F, 317R, the control system 500 being connected to the at least one connection track 328FA. 328RA at the outer edge 321F, 321R for applying voltages V_{FA}, V_{RA} to the at least one distal mark region 320A. In other words, the first and second transmissive electrodes 317F. 317R are further patterned to provide connection tracks 328FA. 328RA connected to the at least one distal areas 327FA, 327RA and extending to an outer edge 321F, 321R of the first and second transmissive electrodes 317F, 317R. The control system 500 is connected to the connection tracks 328FA. 328RA at the outer edge 321F, 321R respectively for applying voltages V_{FA}, V_{RA} to the distal areas 327FA, 327RA.

FIGURE 8E illustrates that in the region of alignment of the distal areas 327FA. 327RA then the first mark region 320A is provided, and otherwise the second background region 320B is provided.

The plural regions 320A, 320B include at least one distal mark region 320A that is not adjacent to an outer edges 321F, 321R of the first and second transmissive electrodes 317F, 317R and at least one proximal background region 320B that is adjacent to the outer edge of the first and second transmissive electrodes 317F, 317R.

The mark 322 may comprise distal mark region 320A advantageously without visibility of connection tracks 328FA. 328RA in the pattern of the mark 322.

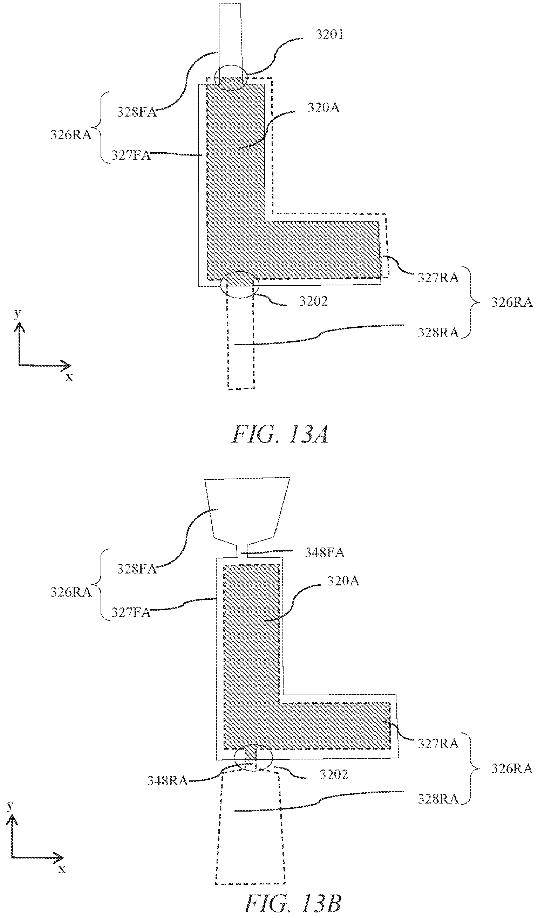

FIGURE 8E further illustrates connection overlap region 3202, as will be discussed further in FIGURE 13B hereinbelow.

**FIGURE 8F** is a schematic diagram illustrating a perspective side view of alternative top and bottom electrodes 317F, 317R for a switchable liquid crystal polar control retarder 301. Features of the embodiment of FIGURE 8F not discussed in further detail may be assumed to correspond to the features with equivalent reference numerals as discussed above, including any potential variations in the features.

FIGURE 8F illustrates that connection electrodes 328FA may provide connection between the distal areas 327FA and a bus bar 325F, and that connection electrodes 328RA may provide connection between the distal areas 327RA and a bus bar 325R. Electrical connection the mark region 320A that corresponds to the overlap of areas 327FA. 327RA may be provided with reduced complexity. Bridging tracks 333F, 333R may be provided for connection to islands 329 in the mark 322 as will be described hereinbelow.

In operation, electrodes 326FA, 326FB, 326RA, 326RB are desirably driven as will be described hereinbelow such that the mark region 320A and mark background region 320B in the region of the overlap of areas of electrodes as described in TABLE 3A.

**TABLE 3A**

| **Front electrode** | **Rear electrode** | **Mark 322 region provided in electrode overlap area** |
|---|---|---|
| 326FA | 326RA | 320A |
| 326FA | 326RB | 320B |
| 326FB | 326RA | |
| 326FB | 326RB | |

Illustrative embodiments for various modes of operation will now be described. It would be desirable to provide driving of the mark 322 in FIGURES 1A-B comprising reflective polariser 302 with at least the properties of the modes illustrated in TABLE 3B.

**TABLE 3B**

| **Electrode** overlap | | **Display properties to an off-axis observer 47** | | | | | |
|---|---|---|---|---|---|---|---|
| **Front electrode** 317F **region** | **Rear electrode 317R region** | **Privacy mode** | **Share mode** | **Mark mode** | **Inverted mark mode** | **Privacy mark mode** | **Inverted privacy mark mode** |
| Distal area 327FA | Distal area 327RA | | | 320A: High *ρ* | 320A: Low *ρ* | 320A: High *ρ_{A}* and & low *P_{A}* | 320A: High *ρ_{A}* and & low *P_{A}* |
| Proximal area 327FB | Distal area 327RA | | | 320B: Low *ρ* | 320B: High *ρ* | 320B: High *ρ*_{B}> *ρ_{A}* & low *P_{B}*<*P_{A}* | 320B: High *ρ_{B}< ρ_{A}* & low *P_{B}*>*P_{A}* |
| Distal area 327FA | Proximal area 327RB | High *ρ* & low P | Low *ρ* & high P | | | | |
| Proximal area 327FB | Proximal area 327RB | | | | | | |
| Connection track 328FA | Proximal area 327RB | | | | | | |
| Proximal area 327FB | Connection track 328RA | | | | | | |

In an illustrative embodiment of High *ρ* & low *P',* high display reflectivity *ρ(θ =45°)* to the off-axis observer 47 at an observation direction with an azimuthal angle *θ* of 45° may be 30% and low off-axis relative luminance. *P(θ =45°)* may be 0.3%.

In an illustrative embodiment of 'Low *ρ* & high *P*', low display reflectivity *ρ(θ =45°)* to the off-axis observer 47 at an observation direction with an azimuthal angle *θ* of 45° may be 6% and high off-axis relative luminance. *P(θ =45°)* may be 10%.

In an illustrative embodiment of 'High *ρ*_{B} > *ρ_{A}'*, high display reflectivities *ρ(θ =45°)* to the off-axis observer 47 at an observation direction with an azimuthal angle *θ* of 45° may be 25% and 30% and in an illustrative embodiment of 'Low *P*_{B} *> P_{A}'* low off-axis relative luminances. *P(θ =45°)* may be 0.4% and 0.3% respectively. Such difference in reflectivity in luminance and reflectivity may be achieved by control of the voltages V_{FA}, V_{FB}, V_{RA}, V_{RB} respectively as will be described further hereinbelow.

It would be desirable to provide driving of the mark 322 in FIGURE 1D-G with at least the properties of the modes illustrated in TABLE 3C. The embodiments of TABLE 3C differ from TABLE 3B in that no reflective polariser 302 is provided so that the reflectivity is not switched between the modes of operation or between the distal mark region 320A and proximal mark background region 320B.

**TABLE 3C**

| **Electrode overlap** | | **Appearance of mark 322 to an off-axis observer 47** | | | |
|---|---|---|---|---|---|
| **Front electrode 317F region** | **Rear electrode 317R region** | **Privacy mode** | **Share mode** | **Privacy mark mode** | **Inverted privacy mark mode** |
| Distal area 327FA | Distal area 327RA | | | Low *P_{A}* | Low *P_{A}* |
| Proximal area 327FB | Distal area 327RA | | | Low *P_{B}* < *P_{A}* | Low *P_{B}* > *P_{A}* |
| Distal area 327FA | Proximal area 327RB | Low P | High P | | |
| Proximal area 327FB | Proximal area 327RB | | | | |
| Connection track 328FA | Proximal area 327RB | | | | |
| Proximal area 327FB | Connection track 328RA | | | | |

Illustrative embodiments of exemplary operating modes will now be described further in TABLE 3D.

Considering the illustrative embodiment of FIGURE 2B. the off-axis observer 47 will see the contrast of the distal mark regions 320A and proximal background regions 320B because of the different reflectivities provided by the illumination of the display. Advantageously a mark 322 will be observed.

Considering the illustrative embodiment of FIGURE 3B, the off-axis observer 47 will see the logo illuminated, while image data provided in the proximal background region 320B is provided with a high security factor S > 1 so image data is not observed.

Considering the illustrative embodiment of FIGURE 4B, the off-axis observer 47 is provided with S > 1.0 so that no image is visible in both distal mark regions 320A and proximal background regions 320B.

Considering the illustrative embodiment of FIGURE 4D. the off-axis observer 47 is provided with S < 0.2 so that an image is visible in both distal mark regions 320A and proximal background regions 320B with desirably high contrast.

Considering the illustrative embodiment of FIGURE 5B, the off-axis observer 47 is provided with S > 1.0 so that no image is visible in both distal mark regions 320A and proximal background regions 320B. The distal and proximal mark regions 320A. 320B are provided with slightly different reflectivities and luminances, so that some contrast of the mark 322 is observed. Advantageously for the on-axis user, the variations in reflectivity and luminance seen on the display are small and a uniform high contrast image is seen.

**TABLE 3D**

| **Illustrative embodiment** | **Mark region** | **Reflectivity, *ρ*** | **Relative luminance, *P*** | **Ratio of illuminance to luminance, *α*** | **Security Factor, *S*** |
|---|---|---|---|---|---|
| FIGURE 2B | 320A | 6% | | | |
| | 320B | 30% | | | |
| FIGURE 3B | 320A | 6% | 10% | 1.0 | 0.08 |
| | 320B | 30% | 0.3% | | 1.5 |
| FIGURE 4B | 320A | 30% | 0.3% | 1.0 | 1.5 |
| | 320B | | | | |
| FIGURE 4D | 320A | 6% | 10% | 1.0 | 0.08 |
| | 320B | | | | |
| FIGURE 5B | 320A | 25% | 0.4% | 1.0 | 1.3 |
| | 320B | 30% | 0.3% | | 1.5 |
| FIGURE 5D | 320A | 5% | 0.4% | 4.0 | 1.2 |
| | 320B | 5% | 0.3% | | 1.3 |

An alternative arrangement of electrodes 326 will now be described.

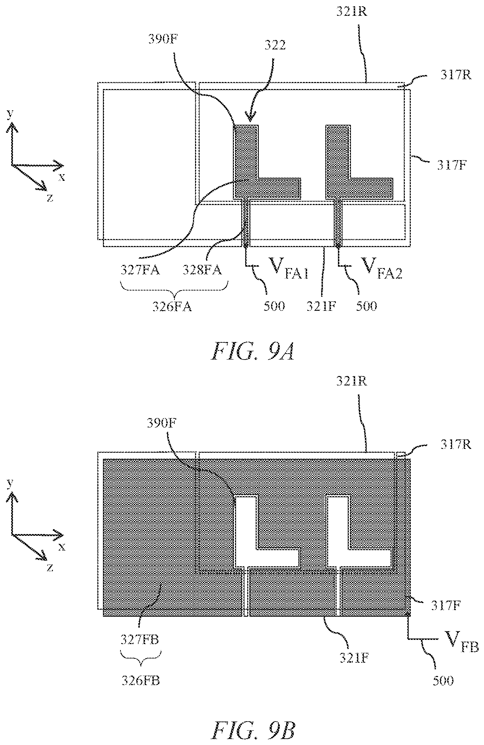

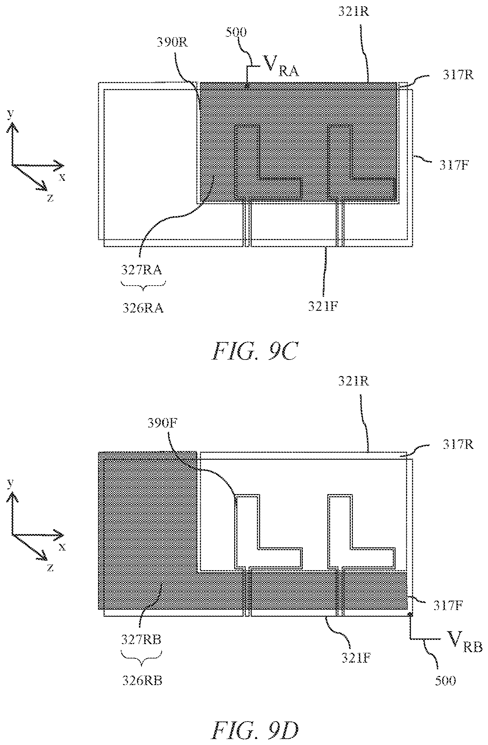

**FIGURE 9A** is a schematic diagram illustrating a top view of alternative electrodes of the switchable liquid crystal polar control retarder and the driving of the top electrode pattern region A by a voltage V_{FA}; **FIGURE 9B** is a schematic diagram illustrating a top view of alternative electrodes of the switchable liquid crystal polar control retarder and the driving of the top electrode pattern region B by a voltage V_{FB}; **FIGURE 9C** is a schematic diagram illustrating a top view of alternative electrodes of the switchable liquid crystal polar control retarder and the driving of the bottom electrode pattern region A by a voltage V_{RA}; and **FIGURE 9D** is a schematic diagram illustrating a top view of alternative electrodes of the switchable liquid crystal polar control retarder and the driving of the bottom electrode pattern region B by a voltage V_{RB}. Features of the embodiment of FIGURES 9A-D not discussed in further detail may be assumed to correspond to the features with equivalent reference numerals as discussed above, including any potential variations in the features.

In the alternative embodiment of FIGURES 9A-D. only the front electrode 317F comprises the electrode 326FA comprising distal area 327FA with the shape of the mark 322A. and connection track 328FA. By comparison with the embodiment of FIGURES 8A-8B, the rear electrode 317R comprises electrode 326RA with area 327RA that does not have the shape of the mark.

The operation and driving of the embodiment of FIGURES 9A-D is similar to or the same as for FIGURES 8A-8D to achieve the desirable mark 322A as described elsewhere herein.

The complexity of the rear electrode 317R may be reduced, advantageously achieving reduced cost.

Further. FIGURES 9A-D illustrate that the characters of the logo may be individually addressed to achieve dynamically modulated patterns from the logo for example. The dynamic modulation may be by gradually adjusting the voltage and/or phase values or may be step changes. The characters or parts of the logo may be addressed together or at different times. The addressing may be provided by adjustment of voltage to respective different connection tracks 328FA, for example providing different addressing signal timing, voltages and/or phases for V_{FA1} and V_{FA2}. Advantageously the visibility of the logo may be increased. Such time modulated patterns may be provided in other of the marks as described elsewhere herein and said time modulation is not limited to the embodiment of FIGURES 9A-D.

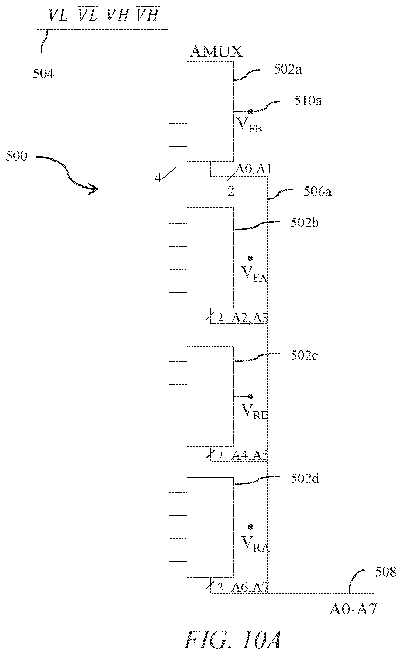

**FIGURE 10A** is a schematic diagram illustrating an electrical circuit of the control system 500 for the driving of the patterned electrodes 317F. 317R of FIGURES 7A-B and FIGURES 8A-B. Features of the embodiment of FIGURE 10A not discussed in further detail may be assumed to correspond to the features with equivalent reference numerals as discussed above, including any potential variations in the features.

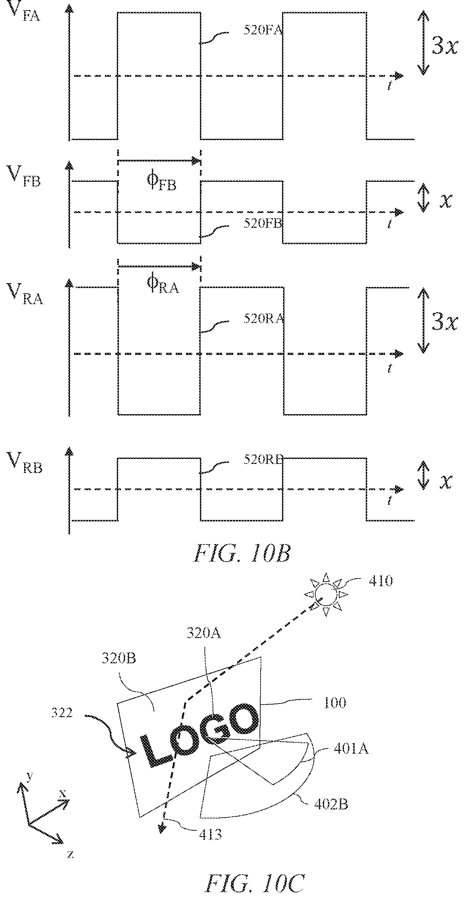

Four voltages are formed into an input bus 504, which delivers signals to each of four multiplexers 502a-d. The voltages on the input bus 504 may be analog signals and may for example take the exemplary form of square waves consisting of two voltages and their inverse pairs as illustrated in FIGURE 10B and FIGURE 10D. Each multiplexer 502a-d selects one of the four input voltages and transfers it to its respective output 510a-d. Which of the four inputs is to be transferred to the output 510a is selected by the 2-bit digital address 506a. Similarly for the other multiplexers and outputs which are not labelled for simplicity. The four 2-bit addresses from each multiplexer 502a-d form an address A0-A7, byte 508. Thus each of the voltages V_{FB}, V_{FA}, V_{RB}, V_{RA} may be independently selected from the four input voltages 504 as determined by the digital address byte 508. Controlling the address byte 508 from, for example, a microprocessor can be used to select which mode the privacy display device 100 operates in as described elsewhere herein.

Returning to the description of TABLE 1, the addressing voltage refers to the voltage applied across the liquid crystal layer 314 to achieve reorientation of the liquid crystal molecules 414 to achieve desirable retardation of light propagating through the cell for the selected mode.

Further the addressing voltage signal 520 provides DC balancing of the output. For a square wave voltage signal 520 in the illustrative example of TABLE 1 for the privacy mode, the square wave would thus provide output at +2.3V and -2.3V.

The driving of the arrangement of FIGURE 1A using the plural electrodes 326FA, 326FB, 326RA, 326RB of FIGURES 8A-D will now be described.

**FIGURE 10B** is a schematic diagram illustrating exemplary voltage signals 520FA, 520FB. 520RA, 520RB for voltages V_{FA}, V_{FB}, V_{RA}, V_{RB} respectively against time, *t* for the addressing of the patterned electrodes 317F, 317R of FIGURES 8A-D: and **FIGURE 10C** is a schematic diagram illustrating a look-down off-axis perspective view of a display device 100 illuminated by an ambient light source 410 wherein the liquid crystal polar control retarder 301 with patterned electrodes 317F, 317R is addressed with the voltage signals 520FA. 520FB, 520RA, 520RB of FIGURE 10B. Features of the embodiments of FIGURES 10B-C not discussed in further detail may be assumed to correspond to the features with equivalent reference numerals as discussed above, including any potential variations in the features.

The control system 500 is arranged to apply respective voltage signals 520FA, 520RA to each of the connection tracks 328FA, 328RA connected to the distal areas 327FA, 327RA of the first and second transmissive electrodes 317F. 317R. The control system 500 is further arranged to apply respective voltage signals 520FB, 520RB to each of the proximal areas 327FB, 327RB. that is the control system 500 is further arranged to apply respective voltage signals 520FB, 520RB to the at least one proximal background region 320B.

The voltage signals 520FA. 520RA, 520FB, 520RB have amplitude and phase that are selected to apply voltages across the first and second transmissive electrodes 317F, 317R that drive the plural regions 320A, 320B of the layer 314 of liquid crystal material 414 into a desired state in accordance with the mode of operation in each of the at least one distal mark region 320A, the parts of the at least one proximal background region 320B aligned with the at least one connection track 328FA, 328RA, and the remainder of the proximal background regions 320B.

Illustrative amplitudes of voltage, V_{FA}, V_{FB}, V_{RA}, V_{RB} and respective phases ϕ_{FA}, ϕ_{FB}, ϕ_{RA}, ϕ_{RB} of the voltage signals is provided in the first data column of TABLE 4 where *x* is a selected voltage level. The overlap voltages, that are DC balanced are further provided.

**TABLE 4**

| | **FIGURES 10B-C** | **FIGURES 10D-E** |
|---|---|---|
| Mark 322 appearance to off-axis observer 47, Mark region 320A | Non-reflective | Reflective |
| Mark 322 appearance to off-axis observer 47, Background region 320B | Reflective | Non-reflective |
| V_{FA} | *3x* | *x* |
| ϕ_{FA} | 0 | 0 |
| V_{FB} | *x* | 5*x* |
| ϕ_{FB} | *π* | 0 |
| V_{RA} | *3x* | *x* |
| ϕ_{RA} | *π* | *π* |
| V_{RB} | *x* | *5x* |
| ϕ_{RB} | 0 | *π* |
| Electrode 326FA-326RA overlap area difference voltage | 6*x* | 2*x* |
| Electrode 326FB-326RB overlap area difference voltage | 2*x* | 10*x* |
| Electrode 326FA-326RB & Electrode 326FB-326RA overlap area difference voltage | *2x* | 6*x* |

Each of the voltage signals 520 have amplitude and phase that are selected to apply voltages V_{F}, V_{R} across the first and second transmissive electrodes 317F, 317R that drive the layer 314 of liquid crystal material 414 into a desired state in accordance with the mode of operation in (i) each of the distal areas 327FA, 327RA overlap. (ii) the overlap between the connection tracks 328FA and the proximal areas 327RB. 327FB respectively and (iii) in the remainder of the proximal areas 327FB, 327RB.

For the illustrative embodiment of TABLE 1, and FIGURES 1D-E the value of *x* is 1.15V. In alternative embodiments comprising different structures of polar control retarder 300, the value of *x* may be adjusted accordingly to achieve desirable high reflectivity in the mark display mode.

In the mark display mode, the mark region 320A is provided by overlap areas of electrode 326FA with electrode 326RA with voltage that is 6.9V. The positive dielectric anisotropy liquid crystal molecules 414 are driven to a state that provides low reflectivity for off-axis observer 47, for example as illustrated in FIGURE 1G.

In the mark display mode of FIGURES 2A-B the background region 320B is provided by the overlap of electrode 326FA with electrode 326RB, overlap of electrode 326FB with electrode 326RB, and overlap of electrodes 326FB with electrode 326RA with voltage that are each 6.9V. The positive dielectric anisotropy liquid crystal molecules 414 are driven to a state that provides low reflectivity for off-axis observer 47, for example as illustrated in FIGURE 1F.

Advantageously the visibility of the connection electrodes 328FA, 328RA is minimised. Large size connection electrodes 328FA. 328RA may be provided, with low resistance. High uniformity of voltage may be achieved across the aperture of the display device 100. Uniformity of transmission and reflectivity in narrow angle and wide angle operation modes may be advantageously achieved.

In the operational share mode and narrow angle mode of the display device 100. the electrodes 317FA. 317FB may be driven with a common voltage signal and the electrodes 317RA. 317RB may for example be connected to ground. Advantageously the complexity of the addressing arrangement may be reduced and visibility of residual mark region 320A reduced.

It may be desirable to provide a reflective mark region 320A and non-reflective background region 320B.

**FIGURE 10D** is a schematic diagram illustrating alternative exemplary voltage signals 520FA, 520FB, 520RA. 520RB for voltages V_{FA}, V_{FB}, V_{RA}, V_{RB} respectively against time, *t* for the addressing of the patterned electrodes 317F, 317R of FIGURES 8A-D; and **FIGURE 10E** is a schematic diagram illustrating a look-down off-axis perspective view of a display device 100 illuminated by an ambient light source 410 wherein the liquid crystal polar control retarder 301 with patterned electrodes 317F, 317R is addressed with the voltage signals 520FA. 520FB, 520RA, 520RB of FIGURE 10D. Features of the embodiments of FIGURES 10D-E not discussed in further detail may be assumed to correspond to the features with equivalent reference numerals as discussed above, including any potential variations in the features.

In the alternative embodiment of FIGURES 10D-E, illustrative amplitudes of voltage V_{FA}, V_{FB,} V_{RA}, V_{RB} and respective phases ϕ_{FA}, ϕ_{FB}, ϕ_{RA}, ϕ_{RB} of the voltage signals is provided in the second data column of TABLE 4. The overlap voltages, that are DC balanced are further provided for the illustrative embodiment of TABLE 1, and FIGURES 1D-E the exemplary value of *x* is 1.15V.

In the mark display mode the mark region 320A is provided by a voltage of 2.3V. The positive dielectric anisotropy liquid crystal molecules 414 are driven to a state that provides high reflectivity for off-axis observer 47. for example as illustrated in FIGURE 1G.

In the mark display mode the background region 320B is provided by the overlap of electrode 326FB with electrode 326RB voltage that is 11.5V; and by the overlap of electrodes 326FA with electrode 326RB or overlap of electrode 326FB with electrode 326RA that are each 6.9V. At such different voltages the positive dielectric anisotropy liquid crystal molecules 414 are driven a substantially saturated alignment state, that is the alignment directions are effectively the same for the two different voltages. High reflectivity for example as illustrated in FIGURE 1F is advantageously provided for the mark region 320A for off-axis observer 47 and the background region 320B has low reflectivity.

The electrode 326FA, 326RA and electrode 326FB, 326RB have different areas according to the shape of mark 322 so that the capacitance associated with the mark regions 320A. 320B are mark shape dependent. Similarly, the sheet resistance of the electrodes means that the series resistance of the electrodes in the two regions driven by the drive circuit are also slightly different. In general, the two regions 320A, 320B present slightly different RC (resistance * capacitance) impedances to the drive circuit. This difference may be corrected by adding resistors in series with the electrodes and/or capacitors in parallel with a pair of electrodes (for example electrode 326FA and electrode 326RA) to improve the matching of the respective RC loads to the drive circuit. The capacitance may be added to the electrode pair with the smallest intrinsic capacitance. The phase and/or amplitude of the respective drive signals may be adjusted to tune the visual appearance of the display. The visibility of the electrodes to the user 47 in share mode, privacy mode and head-on use mode may advantageously be reduced. Balancing the impedance of regions 320A, 320B means that it is possible to drive the regions with the same voltage rather than slightly different voltages in some modes of operation. Alternatively the electrode voltages and/or phases may be adjusted to compensate for the difference in impedance of the two regions 320A, 320B.

It may be desirable to provide control of voltages by means of phase alone.

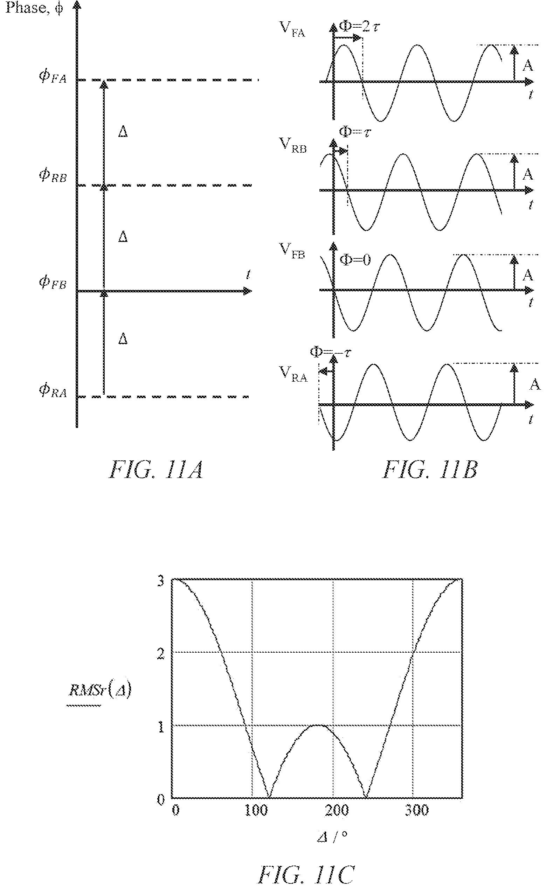

**FIGURE 11A** is a schematic phase diagram of the respective phases for an exemplary driving embodiment of the arrangement of FIGURES 8A-D in the mark display mode by means of phase control; and **FIGURE 11B** is a schematic diagram illustrating exemplary voltage signals for the addressing of the patterned electrodes of FIGURES 8A-D comprising constant amplitude voltages and phase shift control. Features of the embodiments of FIGURES 11A-B not discussed in further detail may be assumed to correspond to the features with equivalent reference numerals as discussed above, including any potential variations in the features.

The operation of a liquid crystal layer driven by a phase controlled signal will now be described.

Considering a pair of electrodes 317F, 317R across a liquid crystal layer 314, for example as illustrated in FIGURES 8A-D, the voltage *V_{F}* is applied to the first electrode 317F and the voltage *V_{R}* is applied to the second electrode 317R. For an amplitude *A,* angular frequency *ω* and phase difference *ϕ,* then the time *t* dependent voltages *V_{F}, V_{R}* are given by the expressions: ${V}_{F} \left(t\right) = A sin \left(ωt\right)$ eqn. 13a ${V}_{R} \left(t\right) = A sin \left(ωt+ϕ\right)$ eqn. 13b

The liquid crystal material 414 of the liquid crystal layer 314 responds to the RMS voltage applied across the layer which can be shown by integration over a cycle, to be: ${V}_{rms} = A \sqrt{1 - cos ϕ}$ eqn. 14

Considering the embodiment of FIGURES 8A-D, an alternative drive scheme may be provided where signals are provided with a constant sinusoidal amplitude A and a phase modification is provided, wherein the respective drive voltages *V_{FA}, V_{FA}*, *V_{FB}, V_{RA}, V_{RB}* are provided with relative phases *ϕ_{FA}, ϕ_{FB}, ϕ_{RA}, ϕ_{RB}* wherein: ${V}_{FA} \left(t\right) = A sin \left(ωt+{ϕ}_{FA}\right)$ eqn. 15 ${V}_{FB} \left(t\right) = A sin \left(ωt+{ϕ}_{FB}\right)$ eqn. 15b ${V}_{RA} \left(t\right) = A sin \left(ωt+{ϕ}_{RA}\right)$ eqn. 15c ${V}_{RB} \left(t\right) = A sin \left(ωt+{ϕ}_{RB}\right)$ eqn. 15d

In the illustrative embodiment of FIGURE 11A, phases *ϕ_{FA,} ϕ_{FB}, ϕ_{RA}, ϕ_{RB}* are illustrated, with respective common phase differences, Δ.

In the alternative embodiment of FIGURE 11B, signals *V_{FA}, V_{FB}*, *V_{RA}, V_{RB}* have equal amplitudes A and varying phase time shifts Φ in multiples of time shift τ corresponding to phase shift Δ. The equal phase differences between adjacent phases *ϕ_{FA,} ϕ_{FB}, ϕ_{RA}, ϕ_{RB}* means they have the same RMS voltage and therefore will drive the liquid crystal cell polar control retarder 301 to the same optical state in respective electrode overlap areas. The phase difference between the electrodes *ϕ_{FA}* and *ϕ_{RA}* corresponding to the mark (logo) region is however 3Δ, resulting in a different RMS voltage and a different optical state of liquid crystal cell polar control retarder 301.

For a desirable RMS addressing voltage *V_{B}* for the proximal mark background region 320B, the phase difference Δ is given by the relation: $Δ = {cos}^{- 1} \left(1-\frac{{{V}_{B}}^{2}}{{A}^{2}}\right)$ eqn. 16 and since the phase difference of the drive waves in the distal mark region 320A is 3Δ, its RMS voltage *V_{A}* is ${V}_{A} = A . √ \left(1-cos\left(3Δ\right)\right)$ eqn. 17 giving a voltage drive RMS ratio V_{A}/V_{B}, = *RMSr:* $RMSr \left(Δ\right) = \sqrt{\frac{1 - cos \left(3Δ\right)}{1 - cos \left(Δ\right)}}$ eqn. 18

FIGURE 11C is a schematic graph illustrating the ratio of the normalised RMS voltage ratio, RMSr as a function of phase step Δ. Features of the embodiment of FIGURE 11C not discussed in further detail may be assumed to correspond to the features with equivalent reference numerals as discussed above, including any potential variations in the features.

The normalised RMS voltage *V_{A}* that drives the distal mark region 320A can be smaller than *V_{B}* that drives the proximal background region 320B or greater up to a maximum of a factor of three.

Continuing the illustrative example of TABLE 1 and FIGURES 2A-B, where the privacy and share voltages are illustrated as both non-zero, the difference between the V_{A} and V_{B} voltages and their ratios can be used to choose an operating point. The phase shift Δ of each of the voltage signals *V_{FA}*, *V_{FB}, V_{RA}, V_{RB}* with common sinusoidal amplitudes A may be adjusted so that the RMS voltage V_{B} is 2.3V to achieve optimum reflectivity, and the RMS voltage V_{A} may be up to 6.9V to achieve a non-reflective distal mark region 320A. In other words, the amplitude A of addressing the respective electrodes 326FA, 326FB, 326RA, 326RB is the same and phase is modified accordingly. Advantageously cost and complexity of the control system may be reduced.

Similar analysis methods may be performed for other than sinusoidal input voltages, for example square waves as will now be described.

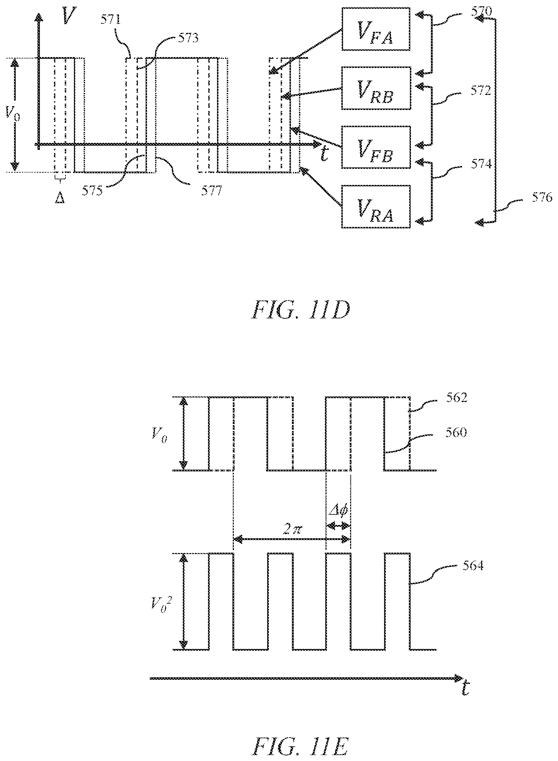

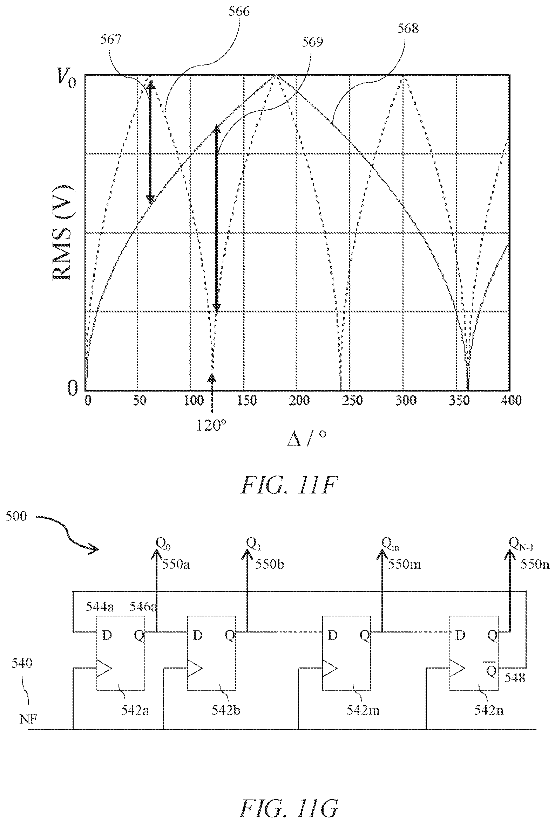

**FIGURE 11D** is a schematic diagram illustrating exemplary digital voltage signals for the addressing of the patterned electrodes of FIGURES 8A-D; the bottom trace of **FIGURE 11E** is a schematic graph illustrating the resultant applied voltage difference across switchable liquid crystal retarder 301 for the arrangement of two phased voltages as illustrated in the top trace of FIGURE 11E; and **FIGURE 11F** is a schematic graph illustrating the RMS voltage in volts as a function of the phase step Δ in degrees for the arrangement of FIGURES 11D. Features of the embodiment of FIGURES 11D-F not discussed in further detail may be assumed to correspond to the features with equivalent reference numerals as discussed above, including any potential variations in the features.

In the alternative embodiment of FIGURE 11D, four digitally phased waveforms with equal amplitude and frequency but separated by phase steps Δ are illustrated. Profiles 571, 573, 575. 577 are arranged for the driving of the electrode areas 326FA, 326RB, 326FB, 326RA respectively, for example as illustrated in FIGURES 8A-D.

Referring to TABLE 3A. the three electrode overlap areas that provide the mark background region 320B have voltage differences 570, 572, 574 and a common phase step Δ between them.

The mark region 320A is by comparison provide by the voltage difference 576 and has a 3Δ step between V_{FA} and V_{RA}. The RMS voltages experienced by the three overlap areas to provide mark background region 320B can be different even though the voltage amplitudes and frequencies of the square waves are the same.

The RMS voltage for digitally phased waveforms with square waves can be calculated in a similar manner to that described in FIGURE 11C.

The drive waveforms 571, 573, 575. 577 can be arbitrarily offset from a common ground which achieves unipolar square wave driving since applied fields to the liquid crystal cell polar control retarder 301are differential. The above simplifies the implementation of a digital drive circuit. Advantageously the cost and complexity of the drive circuit is reduced. DC balancing is achieved across the layer 314 of liquid crystal material 414, advantageously achieving stable operation.

FIGURE 11E illustrates two digital waveform profiles 560 and 562 with amplitude V₀ and phase offset or phase difference Δϕ. When waveform profile 560 is applied to one electrode (for example 326FA) and waveform 562 is applied to an opposing electrode (for example 326RA) across layer 314 of liquid crystal material 414, the liquid crystal material 414 responds to the RMS of the waveform profile 564 corresponding to the voltage difference between profiles 560 and 562. The frequency of waveforms 560, 562 is typically faster than the response time of the liquid crystal material 414 so that advantageously the optical function does not cause any visible flicker.

FIGURE 11F illustrates the profile 568 of voltage difference for the background region 320B with the three overlapping electrode areas illustrated in TABLE 3A. each of which has a common phase difference of Δ. The profile 566 of the voltage difference for the mark region 320A has a phase difference of 3Δ.

Desirable operating points exists at values of A where the difference of voltages between the profile 566 corresponding to background region 320B, and profile 568 corresponding to mark region 320A is large, for example at 60° with voltage difference 567 or 125° with voltage difference 569.

An illustrative control circuit will now be described.

**FIGURE 11G****,** is an exemplary circuit block diagram illustrating an exemplary implementation of a digital phase shift circuit to produce phase shifts of Δ as illustrated in FIGURE 11D. Features of the embodiment of FIGURE 11G not discussed in further detail may be assumed to correspond to the features with equivalent reference numerals as discussed above, including any potential variations in the features.

In the exemplary embodiment of FIGURE 11D the phase shifts are of digital square waves rather than the sine waves of FIGURE 11B. The circuit uses cascaded D type flip-flops in an N stage counter, shown for illustrative purposes as 542a - 542n. The number of stages N may be a positive integer and is selected based on the phase shifts required, (the use of N does not imply a 14-stage counter because N is the 14th letter of the alphabet). The counter connects the Q output 546a of each flip-flop 542a to the D input 544b of the subsequent flip-flop 542b. The flip-flops 542a - 542n are clocked by a frequency 540 which is N times the desired output frequency F. The *Q̅* output of the final flip-flop 542n is fed back to the D input 544a of the first flip-flop 542a to produce a continuously cycling waveform generator. The more flip-flop stages that are used, i.e. the higher N is, the finer the granularity of phases produced, and that the required phases can be "tapped off" from Q₀ to Q_{N-1} as required. This circuit will maintain the phase shifts for any frequency input. If the phase delay was alternatively produced for example by a capacitive timing component, then that timing does not adjust with drift or variation in frequency leading to a drift away from the desired operating point.

This circuit is more resilient to frequency drift and device-to-device variability, advantageously making it more reliable. In addition, the circuit may be produced in integrated circuit form and be more compact than that using a passive capacitor as a timing component.

TABLE 5 is an illustrative embodiment using the circuit of FIGURE 11G to produce a Δ of 123.75° using 32 flip-flops. As the waveforms repeat over angles of 360°, in the calculations the modulus of the angle subtracting as many multiples of 360° as needed to bring the angle under 360° is used.

**TABLE 5**

| **Item** | **Value** | **Illustrative embodiment** |
|---|---|---|
| Number of stages | N | 32 |
| Q₀ output 550a phase shift | 0 ° | 0 ° |
| Q₁ output 550b phase shift | 360/N ° | 11.25° equivalent to 371.25 ° |
| Qₙ₋₁ output 550n phase shift | (N-1)*360 °/N | 348.75 ° |
| Desired output frequency. F | F | 120Hz |
| Flip flop clock frequency, F_{ff} | N*F | 3840Hz |
| Desired Δ | Near to 125 ° | Q₁₁ output =123.75 ° |
| | | Q₂₂ output = 247.5 ° |
| | | Q₃₃ output = 371.25 °which is same as Q₁ (modulo 360 °) |
| Actual Δϕ at Q₁₁ | | 123.75° |
| RMS voltage at Δ, regions 1-3 | ${V}_{rms , 1 - 3} = {V}_{0} \sqrt{\frac{Δ}{180}}$ | V₀ * 0.829 |
| RMS voltage at Δ, region 4 | ${V}_{rms , 4} = {V}_{0} \sqrt{\frac{\left(3.Δ-360\right)}{180}}$ | V₀ * 0.25 |
| Voltage ratio | $R = \frac{{V}_{rms , 1 - 3}}{{V}_{rms , 4}}$ | 3.316 |
| Privacy voltage | | 2.3 |
| Share voltage | | >5 e.g. 7.6 |
| Logo only voltage | | 2.3 |

The selected phase shifts may be tuned or modified to compensate for the difference in RC load between the electrodes 326FA, 326FB. 326RA, 326RB.

It may be desirable to ensure that the mark is visible within the narrow angle light cone 401. Referring to FIGURES 1D-E, the luminance and reflectivity of the regions 320A, 320B may vary differently within the narrow angle light cone 401 such that the mark 322 may become partially visible on at least some parts of the display device 100 to the observer 45. The phase shifts and/or voltages may additionally or alternatively be modified to operate the respective electrodes 326FA, 326FB, 326RA, 326RB to provide no visibility of the mark 322 to the head-on viewer, observer 45 by means of reducing the relative contrast of the two regions 320A, 320B. The difference in security factor *Sₙ* between the regions 320A, 320B to the observer 47 may be modified and the visibility of the mark 322 may be advantageously maintained.

TABLE 5 illustrates an operating point for the phase difference Δ is selected where the ratio between the voltages is finite because the electro optic effect of TABLE 1 has a non-zero voltage for both the privacy and share modes.

In other words, the provision of the four electrodes 326FA. 326FB, 326RA, 326RB and their layout where the front and back connections 328FA. 328RA to the mark region 320A are offset with respect to the front and back background electrodes 327FB, 327RB enables improved performance. In particular the electrode structure enables the mark region 320A connection regions 328FA. 328RA to experience a different voltage difference to the mark region 320A itself so that the connection regions 328FA. 328RA can be arranged to display similar transmission (and reflectivity when the reflective polariser 302 is present) to the background region 320B. This achieves flexibility in how the electrodes 326FA. 326FB, 326RA, 326RB can be driven, as shown in exemplary embodiments below.

In particular at least the following modes can be produced.

In "Uniform Share Mode" (such as FIGURES 4C-D) in which the visibility of the mark 322 is supressed at head-on and off-axis angles, and the display content can be viewed from both narrow and wide angles in respective light cones 401, 402.

In a "Uniform Privacy Mode" (such as FIGURES 4A-B and FIGURE 5C) the visibility of the mark 322 is supressed at head-on and off-axis angles, and the display content is only viewable from narrow angles in light cone 401. and a uniform reflective effect is seen from off-axis angles in light cone 402.

In a "Mark Privacy Mode" (such as FIGURES 5A-B and FIGURE 5D) the visibility of the mark 322 is suppressed for head-on angles but is visible for off-axis angles and is surrounded by a reflective background region 320B that is a background the mark region 320A. The display content is visible to a head-on viewer, but the off-axis viewer cannot see the display content in both the mark region 320A and background region 320B but can see the mark 322 as a contrast of luminance and/or reflectivity between the mark region 320A and background region 320B. Alternatively the mark region 320A may be darker and/or reflective and the background region 320B may be brighter and/or have lower reflectivity so that the sense of the mark 322 is inverse. The contrast of the mark region 320A to the background region 320B may be adjusted to minimise the visibility for the head-on observer 45 in the narrow angle light cone 401 by adjusting the driving voltages amplitude and phase in comparison to the illustrative embodiment of FIGURE 10C and FIGURE 10E for example.

In a "Mark Sleep Mode" (such as FIGURES 2A-B) in which the display device 100 spatial light modulator 48 and/or when present backlight 20 is turned off, the mark 322 is not visible to a head-on viewer 45 but is visible to an off-axis viewer 47. The display device 100 is turned off other than the polar control retarder 300 so that the head-on viewer 45 can see no image content and the off-axis viewer 47 sees a dark background region with a reflective mark region. Alternatively the mark region 320A may be dark and/or reflective and the background region 320B may be bright and/or have lower reflectivity so that the sense of the mark 322 is inverse.

TABLE 6 provides an illustrative embodiment of electrode voltages (amplitude and/or phase) for the uniform modes of operation where the regions 320A. 320B are driven to provide the same response of the layer 314 of liquid crystal material 414.

**TABLE 6**

| | **FIGURES 4C-D** | **FIGURES 4A-B** **(****FIGURE 5C****)** |
|---|---|---|
| Mode type | Uniform Share Mode | Uniform Privacy Mode |
| Mark 322 appearance to off-axis observer 47, Mark region 320A | Non-reflective | Reflective (Low luminance) |
| Mark 322 appearance to off-axis observer 47. Background region 320B | Non-reflective | Reflective (Low luminance) |
| V_{FA} (peak to peak) | 15V | 1.4V |
| ϕ_{FA} | 0 | 0 |
| V_{FB} (peak to peak) | 15V | 1.5V |
| ϕ_{FB} | 0 | 0 |
| V_{RA} (peak to peak) | 15V | 1.4V |
| ϕ_{RA} | 180 | 180 |
| V_{RB} (peak to peak) | 15V | 1.5V |
| ϕ_{RB} | 180 | 180 |
| Electrode 326FA-326RA overlap area difference voltage | 15V | 2.8V |
| Electrode 326FB-326RB overlap area difference voltage | 15V | 3V |
| Electrode 326FA-326RB & Electrode 326FB-326RA overlap area difference voltage | 15V | 0.05V |

TABLE 7 provides an illustrative embodiment of electrode voltages (amplitude and/or phase) for the uniform modes of operation where the regions 320A, 320B are driven to provide different responses of the layer 314 of liquid crystal material 414.

**TABLE 7**

| | **FIGURES 5A-B (FIGURE 5D****)** | **FIGURES 2A-B FIGURES 3A-B** |
|---|---|---|
| Mode type | Mark Privacy Mode | Mark Sleep Mode |
| Mark 322 appearance to off-axis observer 47, Mark region 320A | First reflectivity (First low luminance) | Non-reflective |
| Mark 322 appearance to off-axis observer 47, Background region 320B | Second different reflectivity (Second different low luminance) | Reflective |
| V_{FA} (peak to peak) | 1.9V | 1.5V |
| ϕ_{FA} | 0 | 0 |
| V_{FB} (peak to peak) | 1.5V | 15V |
| ϕ_{FB} | 60 | 0 |
| V_{RA} (peak to peak) | 1.9V | 1.5V |
| ϕ_{RA} | 180 | 180 |
| V_{RB} (peak to peak) | 1.5V | 15V |
| ϕ_{RB} | 240 | 180 |
| Electrode 326FA-326RA overlap area difference voltage | 1.9V | 1.5V |
| Electrode 326FB-326RB overlap area difference voltage | 1.5V | 15V |
| Electrode 326FA-326RB & Electrode 326FB-326RA overlap area difference voltage | 1.2V | 8.25V |

TABLE 7 further shows differences in illustrative voltage driving conditions for the mark sleep mode of FIGURES 2A-B and the mark privacy mode of FIGURES 5A-B. Such differences in driving achieve differences in optical performance in the regions 320A. 320B, for example as shown by the illustrative optical performance conditions of TABLE 3D.

In the mark sleep mode, the voltages V_{FB}, V_{FA}, V_{RB}, V_{RA} are arranged to provide a large contrast between the mark region 320A and background region 320B. Advantageously the mark may be visible with high contrast and over a wide angular range that may approach directions near to the normal direction to the display device 100.

By way of comparison, in the mark privacy mode, it is desirable that the mark 322 is not visible to the head-on observer 45. The voltages V_{FB}, V_{FA}, V_{RB}, V_{RA} are adjusted in amplitude and/or phase to reduce the difference in the alignment of the states of the layer 314 of liquid crystal material 414 between the mark region 320A and background region 320B such that the mark 322 is not visible to the observer 45 in the narrow angle light cone 401. For practical purposes, the contrast of the mark 322 seen by the off-axis observer 47 is reduced in comparison to the sleep mode, however the mark 322 is clearly visible.

In the mark privacy mode there may be some difference in the achieved security factor S within the mark region 320A compared to the background region 320B, however as illustrated in TABLE 3D effective privacy (that is *S* > 1.0) for the entire image is maintained. The observer 45 can use the display without visibility of the mark 322 and the display device 100 can provide visibility of a mark 322 to the observer 47.

The voltages (amplitude and/or phase) of TABLES 6-7 can be adjusted to mitigate the effects of capacitance and resistive differences between the mark and the background regions and the output impedance of the drive circuits. Alternatively the impedance of the two regions can be balanced by the addition of parallel capacitance across electrode pairs and series electrode resistance. This can enable a simpler drive circuit, but in general slightly increases power consumption.

The control of island regions within logos will now be described.

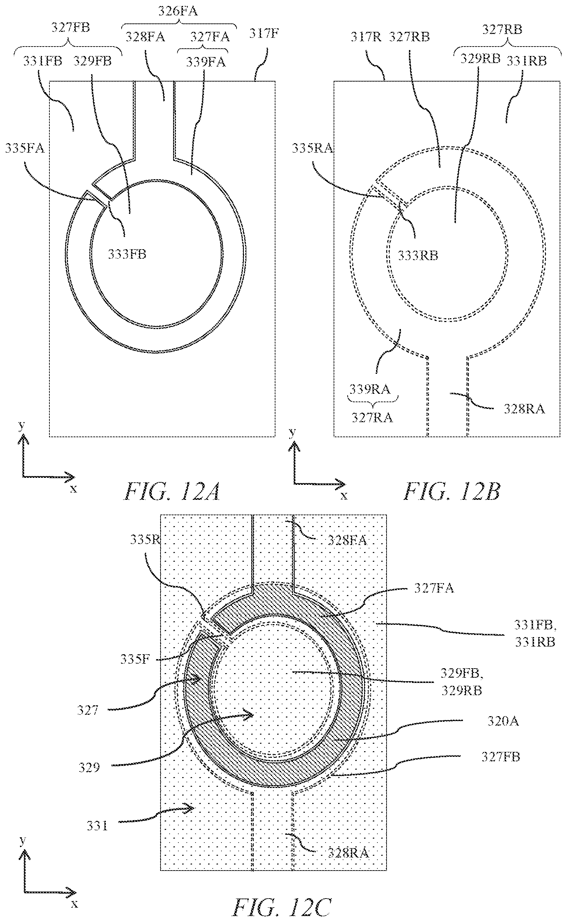

**FIGURE 12A** is a schematic diagram illustrating a top view of the top electrode 317F of the switchable liquid crystal polar control retarder 301 for a mark with an island region 329; **FIGURE 12B** is a schematic diagram illustrating a top view of the bottom electrode 317R of the switchable liquid crystal polar control retarder 301 for a mark with an island region 329; and **FIGURE 12C** is a schematic diagram illustrating a top view of the alignment of top and bottom electrodes 317F, 317R of FIGURES 12A-B of the switchable liquid crystal polar control retarder 301 for a mark with an island region 329. Features of the embodiments of FIGURES 12A-C not discussed in further detail may be assumed to correspond to the features with equivalent reference numerals as discussed above. including any potential variations in the features.

Considering FIGURE 12A. the area 327FA comprises a peripheral region 339FA that extends around an island region 329FB. Outer region 331FB is connected to island region 329FB by bridging track 333FB. The peripheral region 339FA has bridging slits 335FA through which the bridging track 333FB runs. Connection track 328FA is connected to peripheral region 339FA.

Considering FIGURE 12B, the area 327RA comprises a peripheral region 339RA that extends around an island region 329RB. Outer region 331RB is connected to island region 329RB by bridging track 333RB. The peripheral region 339RA has bridging slits 335RA through which the bridging track 333RB runs. Connection track 328RA is connected to peripheral region 339RA.

FIGURE 12C illustrates the alignment of the first and second transmissive electrodes 317F. 317R. Peripheral regions 339FA, 339RA are aligned across the layer 314 of liquid crystal material 414 and have bridging slits 335FA, 335RA respectively that are aligned. In the mark display mode, the bridging tracks may provide loss of visibility of the mark region 320A. The visibility of the bridging slits is advantageously reduced.

The plural addressable areas 327A, 327B include at least one island region 329 and at least one peripheral region 331 extending around the island region 329. Areas of the first and second transmissive electrodes 317F, 317R that are aligned with the at least one peripheral region 331 have bridging slits 335 that are aligned across the layer 314 of liquid crystal material 414 and through which extend bridging tracks 333 connected to areas of the first and second transmissive electrodes 317F, 317R that are aligned with the at least one island region 329.

Referring to FIGURE 12A, the area 327FB includes island region 329FB and peripheral region 331FB extending around the island region 329FB. Bridging slit 335F is arranged to connect the peripheral region 33 1FB to the island region 329FB.

Referring to FIGURE 12B, the area 327RB includes island region 329RB and peripheral region 33 IRB extending around the island region 329RB. Bridging slit 335R is arranged to connect the peripheral region 33 1RB to the island region 329RB.

Referring to FIGURE 12C. the peripheral regions 331FB, 331RB that are aligned across the layer 314 of liquid crystal material 414 have bridging slits 335F, 335R respectively that are aligned. In the mark display mode, the bridging tracks may provide loss of visibility of the mark region 320A. The visibility of the bridging slits is advantageously reduced. In other embodiments, not shown, the bridging slits 335F, 335R may not be aligned. Such an arrangement may be provided to achieve improved aesthetics of the design of the mark 322.

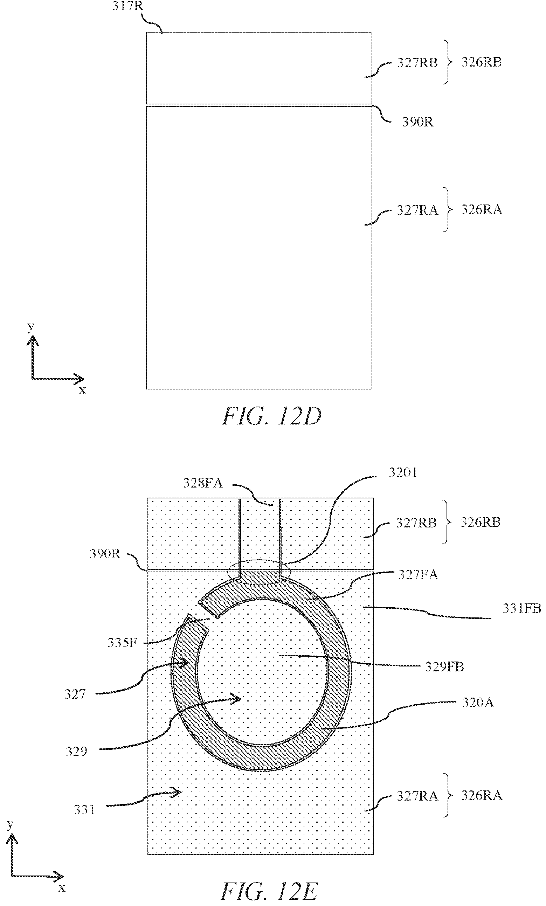

**FIGURE 12D** is a schematic diagram illustrating a top view of the bottom electrode of the switchable liquid crystal polar control retarder for a mark with an island region; and FIGURE **12E** is a schematic diagram illustrating a top view of the alignment of top and bottom electrodes of FIGURE 12A and FIGURE 12D of the switchable liquid crystal polar control retarder for a mark with an island region. Features of the embodiment of FIGURES 12D-E not discussed in further detail may be assumed to correspond to the features with equivalent reference numerals as discussed above, including any potential variations in the features.

In the alternative embodiment of FIGURE 12D, the rear electrode 317R comprises a simpler structure than that illustrated in FIGURE 12B, advantageously achieving reduced complexity and cost. Further the size of the electrode 326RB in FIGURE 12E illustrates that the electrode overlap between electrodes 326FA and electrode 326RA provide the distal mark region 320A.

In other embodiments not shown, the gap 390R may be shaped to align with the shape of the desired distal mark region 320A, to reduce the shape error in the region 3201 that is the overlap of the connection track 328FA with the electrode 326RA. Advantageously increased fidelity of the mark 322 may be achieved.

**FIGURE 13A** is a schematic diagrams illustrating a top view of misalignment of top and bottom electrodes for a switchable liquid crystal polar control retarder. Features of the embodiment of FIGURE 13A not discussed in further detail may be assumed to correspond to the features with equivalent reference numerals as discussed above, including any potential variations in the features.

In mark display mode. overlapping electrode 326FA, 326FB provide the mark region 320A. Misalignments of the distal areas 327FA, 327RA may provide some degradation of the mark 322A outline, for example in connection overlap regions 3201, 3202. It would be desirable to minimise said degradation.

**FIGURE 13B** is a schematic diagrams illustrating a top view of alternative top and bottom electrodes 317F. 317R for a switchable liquid crystal polar control retarder 300. Features of the embodiment of FIGURE 13B not discussed in further detail may be assumed to correspond to the features with equivalent reference numerals as discussed above. including any potential variations in the features.

The connection tracks 328FA, 328RA have a neck 348FA, 348RA respectively of reduced width adjacent to the at least one distal area 327FA, 327RA to which it is connected. Advantageously the size of the degradation region 3202 is thus reduced. Further the size of the distal areas 327FA, 327RA may be different to further provide reduced degradation, that is overlap region 3201 may be omitted for example.

Further the width of the connection track 328FA. 328RA may be increased, reducing resistance other than at the neck. Voltage drops across the connection tracks 328FA, 328RA may be reduced, and uniformity of operational wide angle and narrow angle modes advantageously increased.

Alternative arrangements of connection tracks will now be described.

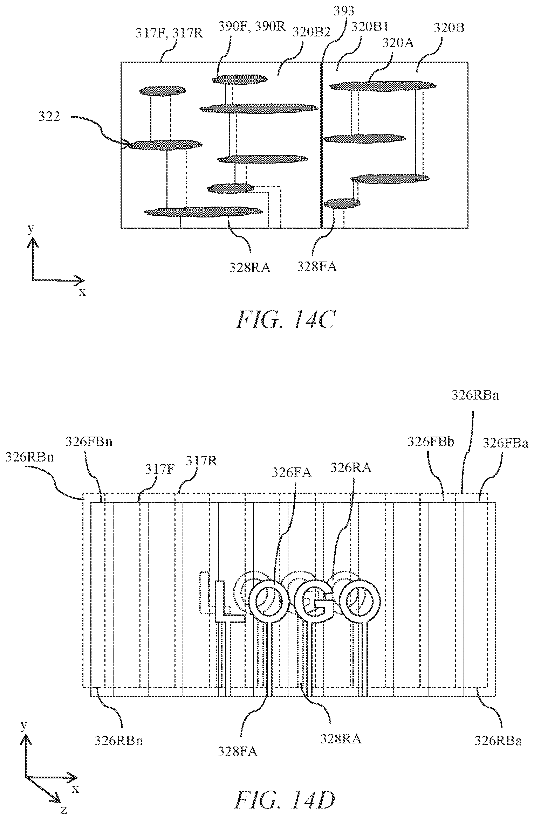

**FIGURE 14A** is a schematic diagram illustrating a top view of an arrangement of marks 322 and connection tracks 328; **FIGURE 14B** is a schematic diagrams illustrating a top view of an arrangement of marks 322 and connection tracks 328 wherein the display device 100 is arranged in an automotive dashboard 610; and **FIGURE** 14C is a schematic diagram illustrating a top view of an arrangement of distal mark regions 320A and comprising first and second proximal background regions 320B1, 320B2. Features of the embodiments of FIGURES 14A-C not discussed in further detail may be assumed to correspond to the features with equivalent reference numerals as discussed above, including any potential variations in the features.

In the alternative embodiment of FIGURE 14A, the cloud symbol represents a symbolic mark which may be used as an alternative to the LOGO text illustrated elsewhere herein. In comparison to FIGURE 8E, multiple marks mark regions 320A are provided with differing size. The marks 320A are each connected by means of separate connection tracks 328FA. 328RA as illustrated elsewhere herein.

In the alternative embodiment of FIGURE 14B, the connection tracks 328FA. 328RA are provided to daisy-chain the mark regions 320A together in groups. In comparison to the embodiment of FIGURE 14A, the number of connection tracks 328 and the drive system may be provided with reduced complexity and cost.

FIGURE 14B further illustrates that the marks 320A may be arranged to match mark symbols 620 provided (perhaps by printing) on the surface of the dashboard 610. Advantageously the aesthetic appearance of the display as seen by the off-axis driver may be blended with the aesthetics of the automotive cabin when the display is in mark mode such as illustrated in FIGURES 2A-B or in the privacy mark mode such as illustrated in FIGURES 5A-D.

In the alternative embodiment of FIGURE 14C. first and second proximal background regions 320B1, 320B2 wherein the corresponding electrode areas 327FB1 and 327FB2 and electrode areas 327RBI, 327RB2 are separated by gaps 393. Such an arrangement may provide separate switching of parts of the display device 100. Some parts of the display device 100 may operate in different modes to other parts of the display device 100. Advantageously the observers 45. 47 may share some information in some parts of the display device 100 and the observer 47 may not see other parts of the display device 100.

It may be desirable to modify the proportion of the area of the display device which provides privacy and share mode operation.

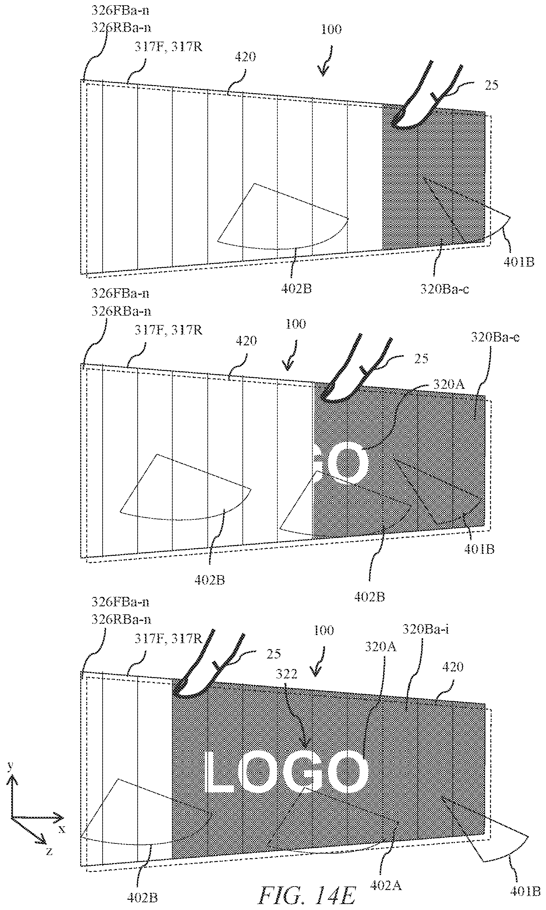

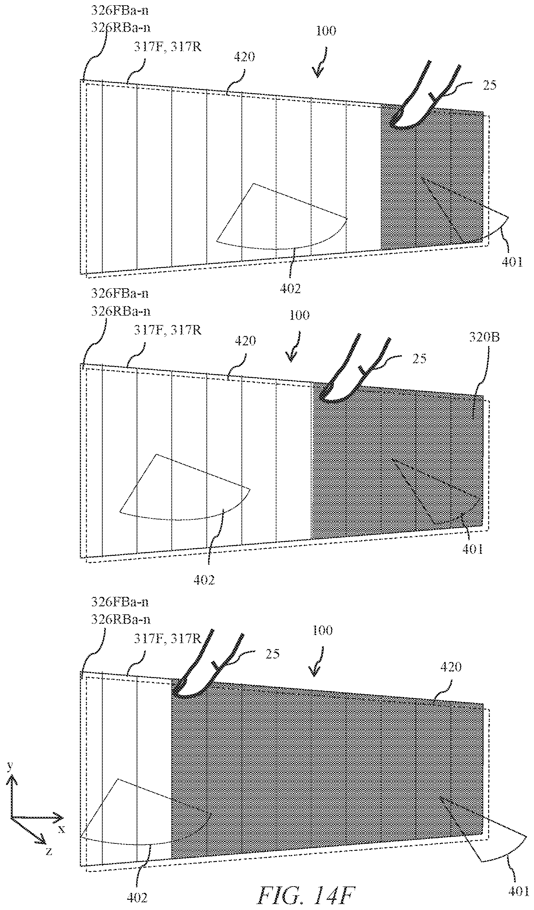

**FIGURE 14D** is a schematic diagram illustrating a top view of the electrodes 317F, 317R of a switchable liquid crystal polar control retarder 301 comprising a segmented array of addressable electrodes 326FBa-n and 326RBa-n; **FIGURE 14E** is a schematic diagram illustrating the operation of a display device 100 comprising a segmented array of addressable electrodes of FIGURE 14D comprising a mark 322 and a touch screen 420; and **FIGURE 14F** is a schematic diagram illustrating the operation of a display device 100 comprising a segmented array of addressable electrodes and a touch screen 420. Features of the embodiments of FIGURES 14D-F not discussed in further detail may be assumed to correspond to the features with equivalent reference numerals as discussed above. including any potential variations in the features.

In the alternative embodiment of FIGURE 14D, the electrodes 326FB. 326RB are segmented to provide segmented areas 326FBa-n and 326RBa-n respectively.

One mode of operation of the arrangement of FIGURE 14D is illustrated in FIGURE 14E. Touch screen 420 is provided so that the finger 25 of a user determines the split between privacy and share modes of operation. In the upper diagram, the finger is located so as to indicate that the right hand three segmented background regions 320Ba-c are driven in privacy mode with narrow angle light cone 401B output from the background region 320B. In the other segments, then the wide angle light cone 402B is provided across the remaining area of the display device 100. In the middle diagram, the finger 25 is located so that more segments 320Ba-n are driven to provide narrow angle light cone 401B in the background region 320Ba-c. In the mark regions 320A. then part of the mark 322 is revealed with wide angle light cone 402A. In the lower diagram, the finger 25 is located so that more segments 320Ba-n are driven to provide narrow angle light cone 401 in the background region 320Ba-i and the whole of the mark 322 is revealed. The relative proportion of the display device 100 area that is used by the observers 45, 47 may be controlled. Advantageously increased flexibility of display use may be provided. Such an arrangement may be particularly desirable in ultra-high aspect ratio displays, for example for use in pillar-to-pillar type automotive displays. In alternative arrangements, the control of the relative area may be set by other means, for example depending on the application or image content, detected presence of user 45. The segmented regions of electrodes 326FBa-n, 326RBa-n may further be arranged in cooperation with segmented backlights 20, for example mini-LED backlights such as illustrated in FIGURE 7A hereinabove.

In an alternative embodiment of FIGURE 14F the mark 322 may be undriven so that uniform privacy or share mode operation may be achieved.

**FIGURE 15A** is a schematic diagram illustrating a side view of a switchable liquid crystal retarder 301 operating at zero volts and comprising offset gaps 390F, 390R for top and bottom electrodes 317F, 317R: and **FIGURE 15B** is a schematic diagram illustrating a side view of a switchable liquid crystal retarder 301 operating in a driven mode and comprising offset gaps 390F, 390R for top and bottom electrodes 317F, 317R. Features of the embodiment of FIGURE 15B not discussed in further detail may be assumed to correspond to the features with equivalent reference numerals as discussed above, including any potential variations in the features.

FIGURES 15A-B further illustrate the alignment layers 417F. 417R that are arranged between the electrodes 317F. 317R and the material 414 of the liquid crystal layer 314. Illustrative alignment layers are described in TABLES 1-2 hereinabove.

Each of the first and second transmissive electrodes 317F, 317R are patterned to provide plural addressable areas 327A, 327B separated by gaps 390. the plural addressable areas 327A, 327B of the first and second transmissive electrodes 317F, 317R being aligned across the layer 314 of liquid crystal material 414.

In the narrow angle and wide angle operational modes, it is desirable that the liquid crystal material 414 aligns to a substantially uniform state across the gaps 390F, 390F.

The width, γ_{B}, γ_{R} of the gaps 390F, 390R may be at most the twice the thickness *t* of the layer 314 of liquid crystal material 414 , and preferably at most the thickness *t* of the layer of liquid crystal material. In such embodiments, the liquid crystal material 414 may be provided with alignment direction 419 in the region of the gap 390 that is similar to the alignment direction 415 in the region of the gaps 390 between the areas 327FA, 327FB and areas 327RA, 327RB of the electrodes 317F, 317R respectively. Visibility of the gaps 390F, 390R may advantageously be minimised and uniform images without residual visibility of the mark 322 achieved. for example as illustrated in FIGURE 4B and FIGURE 4D.

When a voltage is applied across the liquid crystal layer 314, the material realigns according to the resultant rms electric field. It is desirable to minimise the misalignment. Further, the gaps 390F, 390R separating plural addressable areas 327A, 327B of the first and second transmissive electrodes 317F, 317R that are aligned across the layer 314 of liquid crystal material 414 are offset. The offset distance *δ* may be at least the thickness t of the layer 314 of liquid crystal material 414 and preferably at least twice the thickness t of the layer 314 of liquid crystal material 414. The misalignment of the alignment direction 417 of the liquid crystal material 414 is reduced and gap visibility advantageously reduced.

**FIGURE 15C** is a schematic diagram illustrating a side view of a polar control retarder operating in privacy mode and comprising aligned gaps for top and bottom electrodes 317F, 317R. Features of the embodiment of FIGURE 15C not discussed in further detail may be assumed to correspond to the features with equivalent reference numerals as discussed above, including any potential variations in the features.

By way of comparison with FIGURES 15A-B, the gaps 390F, 390R may be aligned. Visibility of the electrode gaps may be confined to a smaller region.

Alternative illustrative embodiments of the polar control retarder 300 to that illustrated in TABLE 1 and TABLE 2 will now be described.

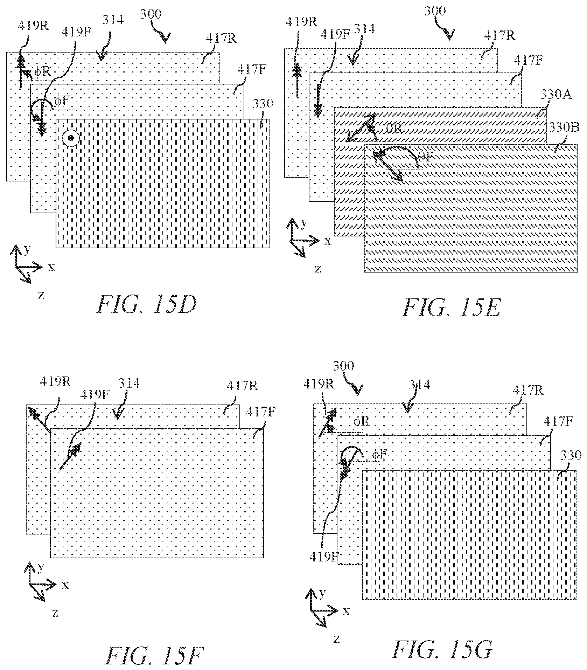

**FIGURE 15D** is a schematic diagram illustrating a perspective front view of the alignment directions of a polar control retarder 300 comprising a passive retarder 330 comprising a negative C-plate retarder; **FIGURE** 15E is a schematic diagram illustrating a perspective front view of the alignment directions of a polar control retarder 300 comprising a passive retarder comprising crossed positive A-plate retarders 330A. 330B; FIGURE **15F** is a schematic diagram illustrating a perspective front view of the alignment directions of a polar control retarder 300 comprising twisted liquid crystal layer 314; and **FIGURE** 15G is a schematic diagram illustrating a perspective front view of the alignment directions of a polar control retarder comprising rotated alignment layers 417F, 417R and a passive retarder 330. Features of the embodiments of FIGURES 15D-F not discussed in further detail may be assumed to correspond to the features with equivalent reference numerals as discussed above, including any potential variations in the features.

The directions ϕF, ϕR of the in-plane alignment of the first and second alignment layers 417F, 417R is illustrated by arrows 419F, 419R respectively. where the alignment layers 417F, 417R may be homogeneous or homeotropic as illustrated in the illustrative (but non-exhaustive) embodiments of TABLE 8.

Passive retarders 330 may comprise at least one C-plate retarder as illustrated in FIGURE 15D. Alternatively passive retarders 330 may be a combination of retarders such as crossed positive A-plates 330A, 330N with direction θF of 135° and direction θR of 45° for example as illustrated in FIGURE 15E. Alternatively passive retarders 330 may be omitted as illustrated in FIGURE 15F for the example of a twisted layer 314 of liquid crystal material 414.

In the alternative illustrative embodiments of FIGURE 15G, the alignment directions ϕF, ϕR for alignment layers 417F, 417R respectively may each be rotated for example by 10° or 15° in comparison to the embodiment of FIGURE 15D as described in U.S. Patent No. 11,099,448 Advantageously in operation. such an arrangement may provide a peak luminance that is offset from the normal of the plane of the display device 100. Considering FIGURE 6A for example. such an offset may be away from the direction of the driver observer 47 and may be arranged to advantageously achieve improved security factor S for a driver leaning towards the display device 100.

In the present embodiments, the passive retarders 330 may be at least one of a negative C-plate, a positive C-plate, a positive A-plate, or an O-plate. Desirable ranges for the values of retardance of the layer 314 of liquid crystal material 414 and the retardance of passive retarders are described further in U.S. Patent No. 10,976.578.

**TABLE 8**

| | Passive retarder 330 | Alignment layer 417F type | In-plane alignment direction 419F | Alignment layer 417R type | In plane alignment direction 419R |
|---|---|---|---|---|---|
| FIGURE 15D | Negative C | Homogeneous | 90° | Homogeneous | 270° |
| | | Homogeneous | 90° | Homeotropic | 270° |
| | | Homeotropic | 90° | Homeotropic | 270° |
| FIGURE 15E | Crossed Positive A | Homogeneous | 90° | Homogeneous | 270° |
| | | Homogeneous | 90° | Homeotropic | 270° |
| | | Homeotropic | 90° | Homeotropic | 270° |
| FIGURE 15F | - | Homogeneous | 135° | Homogeneous | 45° |
| FIGURE 15G | Negative C/ Crossed positive A | Homogeneous | 80° | Homogeneous | 260° |
| | | Homogeneous | 75° | Homeotropic | 255° |

It may be desirable to reduce the cost of the assembly of the aligned electrodes 326FA, 326RA of the liquid crystal retarder 301.

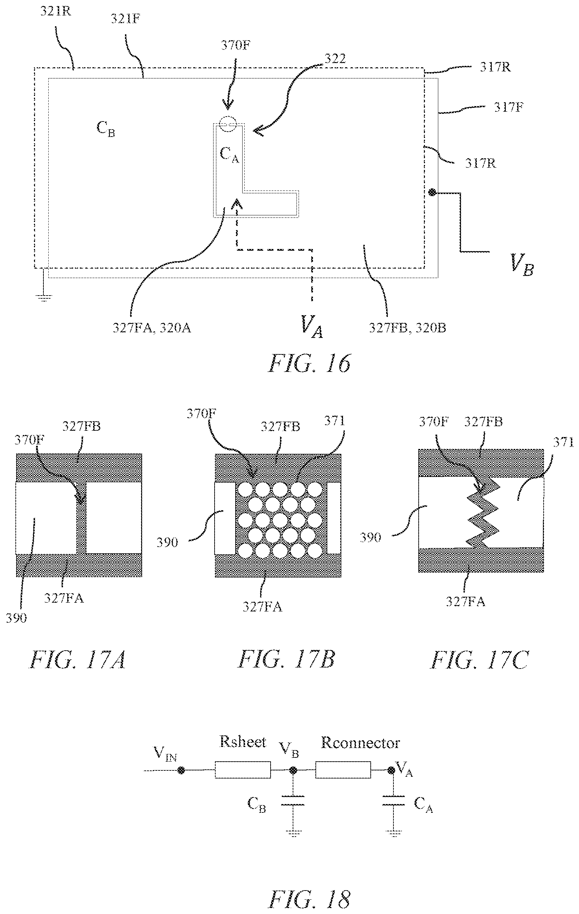

**FIGURE** 16 is a schematic diagram illustrating a top view of alternative electrodes of the switchable liquid crystal polar control retarder 301. Features of the embodiment of FIGURE 16 not discussed in further detail may be assumed to correspond to the features with equivalent reference numerals as discussed above, including any potential variations in the features.

In the alternative embodiment of FIGURE 16, one of the first and second transmissive electrodes 317F, 317R is patterned to provide plural addressable areas 327A, 327B separated by gaps 390, and the other of the first and second transmissive electrodes 317F, 317R is not patterned.

Most generally, the plural regions 320A. 320B include at least one distal region 320A that is not adjacent to an outer edge 321F, 321R of the first and second transmissive electrodes 317F, 317R and at least one proximal region 320B that is adjacent to the outer edge 321F, 321R of the first and second transmissive electrodes 317F, 317R, wherein areas 327FA of at least one of the first and second transmissive electrodes 317F, 317R that are aligned with the at least one distal region 320A are connected to areas 327FB of the same transmissive electrode 317F that are aligned with the at least one proximal region 320B by a connector 370F that is configured to provide a resistance between the connected areas 327FA. 327FB.

In other words. the plural areas of the electrodes 317F, 317R include at least one distal addressable area 327A, 327B that is not adjacent to an outer edge 321F of the first transmissive electrode 317F, and at least one proximal area 327FB that is adjacent to an outer edge 321 of the first transmissive electrode 317F.

In alternative embodiments. not shown, the electrode arrangement of the first transmissive electrode 317F may be further provided on the second transmissive electrode 317R and a further connector 370R provided that is configured to provide a resistance between the connected areas 327RA, 327RB of the second transmissive electrodes 317R.

In other words, the at least one distal area 327F is connected to the at least one proximal addressable area 327B by a connector 370F that is configured to provide a resistance between the at least one distal area 327FA and the at least one proximal area 327FB.

In the embodiment illustrated in FIGURE 16, the second transmissive electrode 317R is uniform. Advantageously cost of fabrication and of alignment is reduced.

**FIGURES 17A-C** are schematic diagrams illustrating a top view of connector 370F of FIGURE 16, Features of the embodiments of FIGURES 17A-C not discussed in further detail may be assumed to correspond to the features with equivalent reference numerals as discussed above, including any potential variations in the features. High resistance tracking can be provided. for example by providing narrow electrode channels, regions 371 of removed transparent conductor material in a connector 370F or by zig-zag connector 370F profiles.

The driving of regions 320A, 320B will now be described in further detail.

**FIGURE 18** is a schematic circuity diagram illustrating the driving of the voltages across the electrodes of FIGURE 16,

A voltage V_{IN} is applied to the sheet transparent electrode that comprises the proximal electrode addressable area 327B of the electrode 317F. For a low sheet resistance, the voltage V_{B} across the liquid crystal layer 314 in the proximal electrode addressable area 327B is substantially the same as V_{IN} and charges capacitor C_{B}. The resistance of the connector 370F provides a voltage drop to the area 327FA and a different capacitance C_{A} in the mark region 320A. By design of the connector 370 resistance, and selection of addressing frequency of the drive voltage, the voltage seen across the liquid crystal material in the area 327FA may be controlled to achieve a different reflectivity than for the area 327FB.

Advantageously the complexity and cost of the electrodes 317F, 317R of the liquid crystal retarder 314 may be reduced.

In other words a display device 100 for use in ambient illumination 410 comprising: a spatial light modulator 48 arranged to output light, wherein the spatial light modulator 48 comprises an output polariser 218 arranged on the output side of the spatial light modulator 48, the output polariser 218 being a linear polariser, a view angle control arrangement comprising: an additional polariser 318 arranged on the output side of the output polariser 218. the additional polariser 318 being a linear polariser; a reflective polariser 302 arranged between the output polariser 218 and the additional polariser 318, the reflective polariser 302 being a linear polariser; and at least one polar control retarder 300 arranged between the reflective polariser 302 and the additional polariser 318, the at least one polar control retarder 300 including a switchable liquid crystal retarder 301 comprising a layer 314 of liquid crystal material 414, and first and second transmissive electrodes 317F, 317R on opposite sides of the layer 314 of liquid crystal material 414, wherein at least one of the first and second transmissive electrodes 317F, 317R is patterned to provide plural addressable areas 327A. 327B separated by gaps 390, at least one of the regions being in a shape of a mark region 320A for display to an off-axis observer 47, wherein the plural addressable areas 327A, 327B include at least one distal region that is not adjacent to an outer edge 321 of the first and second transmissive electrodes 317F, 317R and at least one proximal region that is adjacent to an outer edge 321, wherein the at least one distal addressable area 327A is connected to the at least one proximal addressable area 327B by a connector 370 that is configured to provide a resistance between the at least one distal addressable area 327A and the at least one proximal addressable area 327B.

Alternative electrode arrangements for the mask region 320A and background region 320B will now be described.

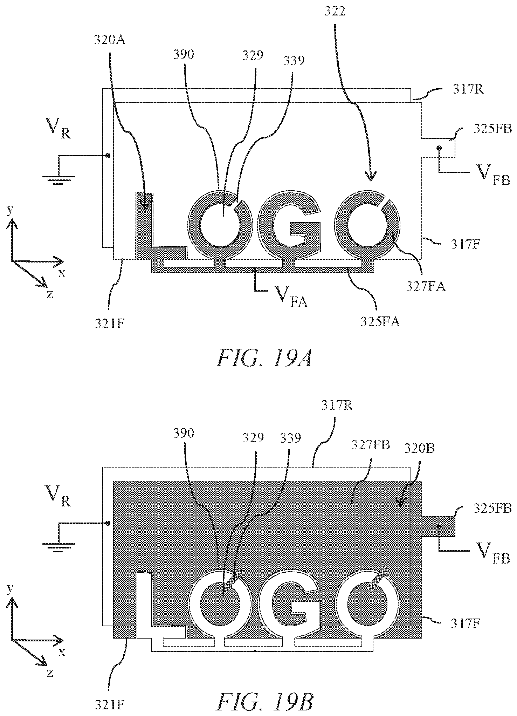

**FIGURE 19A** is a schematic diagram illustrating a top view of the electrodes 317F, 317R of the switchable liquid crystal polar control retarder 300 and the driving of the top electrode pattern region A by a voltage V_{FA}; and **FIGURE 19B** is a schematic diagram illustrating a top view of the electrodes of the switchable liquid crystal polar control retarder and the driving of the top electrode pattern region B by a voltage V_{FB}. Features of the embodiment of FIGURES 19A-B not discussed in further detail may be assumed to correspond to the features with equivalent reference numerals as discussed above. including any potential variations in the features.

FIGURE 19A illustrates a proximal area 327FA that is driven with voltage V_{FA} by connector 347FA that is outside the outer edge 321F of the electrode 317F; and FIGURE 19B illustrates a proximal area 327FB that is driven with voltage V_{FB} by connector 347FB that is outside the outer edge 321F of the electrode 317F. A common uniform electrode 317R is arranged on the opposite side of the liquid crystal layer 314.

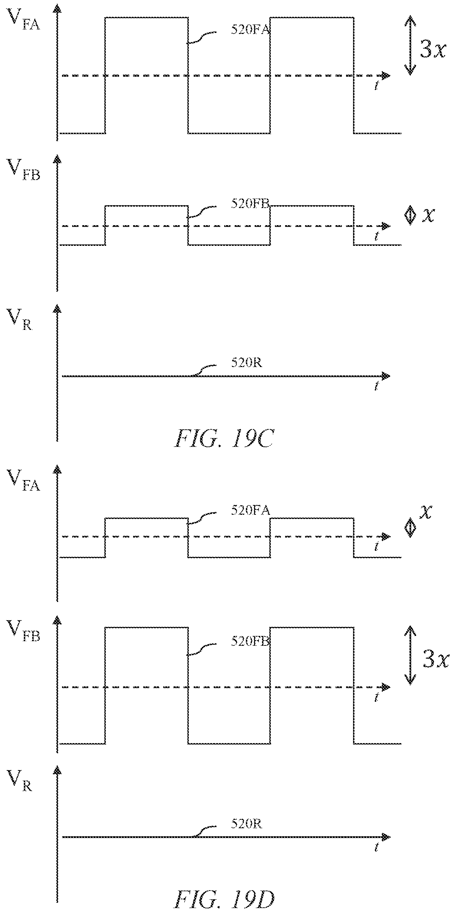

**FIGURE 19C** is a schematic diagram illustrating exemplary voltage signals 520FA, 520FA, 520R for the addressing of the electrodes 317F, 317R of FIGURES 19A-B for a reflective background region 320B. Features of the embodiment of FIGURE 19C not discussed in further detail may be assumed to correspond to the features with equivalent reference numerals as discussed above, including any potential variations in the features.

In the embodiment of FIGURE 19C. the electrode 317R is grounded, electrode area 327FA provides the mark region 320A that is driven with low reflectivity and electrode area 327FB provides the mark background region 320B. Thus the display of FIGURE 2B for example may be provided. The complexity of the addressing electrodes 317F, 317R is advantageously reduced and cost reduced.

**FIGURE 19D** is a schematic diagram illustrating exemplary voltage signals for the addressing of the patterned electrodes of FIGURES 19A-B for a reflective mark region. Features of the embodiment of FIGURE 19D not discussed in further detail may be assumed to correspond to the features with equivalent reference numerals as discussed above, including any potential variations in the features. In the alternative embodiment of FIGURE 19D, the mark region 320A is provided as reflective by the driving of the electrode area 327FA by waveform 520FA and the mark background region 320B is provided as non-reflective by the driving of the electrode addressable area 327B by waveform 520FB.

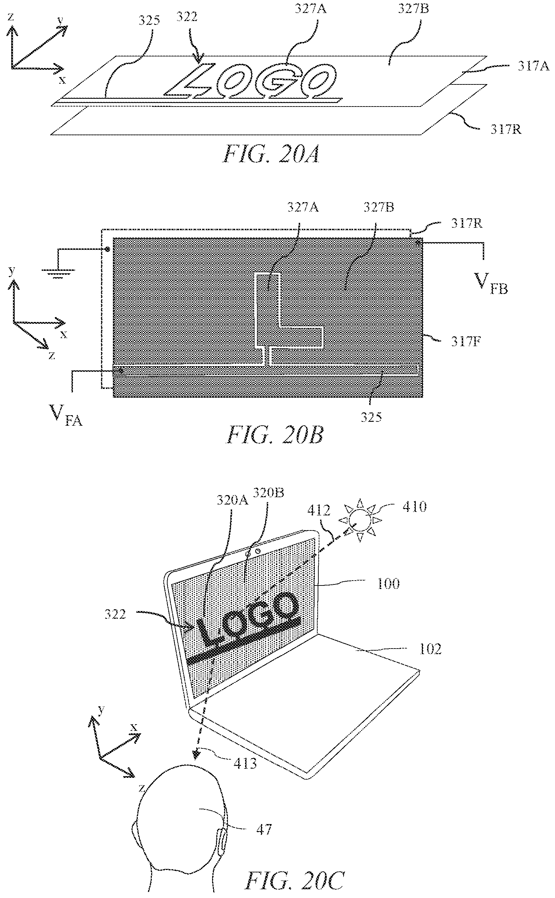

**FIGURE** 20A is a schematic diagram illustrating a perspective side view of alternative top and bottom clectrodes 317F. 317R for a switchable liquid crystal polar control retarder 301; and **FIGURE 20B** is a schematic diagram illustrating a top view of the electrodes of the switchable liquid crystal polar control retarder 301 of FIGURE 20A. Features of the embodiment of FIGURES 20A-B not discussed in further detail may be assumed to correspond to the features with equivalent reference numerals as discussed above, including any potential variations in the features.

One of the first and second transmissive electrodes 317F, 317R is patterned to provide plural addressable areas 327A, 327B separated by gaps 390, and the other of the first and second transmissive electrodes 317F, 317R is not patterned.

**FIGURE** 20C is a schematic diagram illustrating a look-down off-axis perspective view of a laptop computer 102 illuminated by an ambient light source 410 comprising a switchable privacy display device 100 comprising the patterned electrode liquid crystal polar control retarder 301 of FIGURE 20A and FIGURE 20B wherein no light 400 is output from the spatial light modulator 48. Features of the embodiment of FIGURE 20C not discussed in further detail may be assumed to correspond to the features with equivalent reference numerals as discussed above, including any potential variations in the features.

In comparison to the arrangement of FIGURE 19A, the bus bar connection electrode 325 is provided within the active area and forms part of the mark region 320A that is displayed in off-axis locations to the off-axis observer 47. Advantageously the complexity and cost of the liquid crystal retarder 301 is reduced.

The operation of the polar control retarders for on-axis and off-axis light will now be described.

**FIGURE 21A** is a schematic diagram illustrating in side view the operation of the arrangement of FIGURE 2 for transmitted light from the spatial light modulator 48 in the share mode of operation. In the embodiments that will be described below, light ray 445 that is normal to the display (or in a head-on direction) is transmitted by the display polariser 219 with a polarisation state 360 that is unmodified by the polar control retarders 300A, 300B and polarisers 318A, 302 and 318B. Such light is transmitted with high luminance.

In share mode, rays 447 with a non-zero polar angle to the normal direction are also transmitted with the same polarisation state 360 that is substantially not modified by the polar control retarders 300A, 300B and polarisers 318A, 302 and 318B. The polar profile of luminance from the spatial light modulator 48 may be substantially unmodified. Advantageously the display may be visible from a wide range of polar viewing positions and viewable by multiple display users.

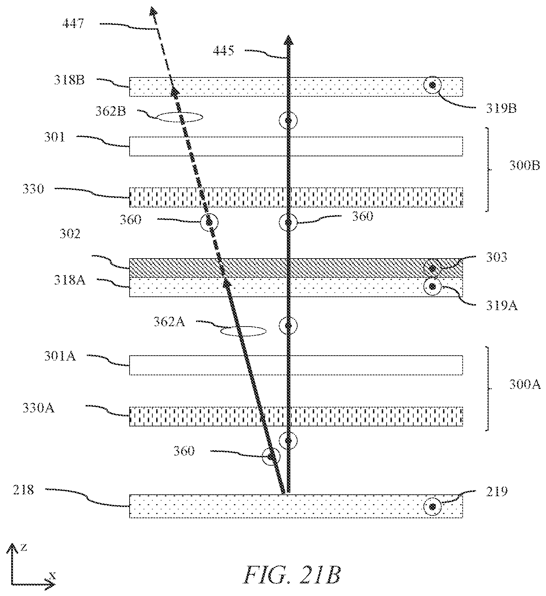

**FIGURE 21B** is a schematic diagram illustrating in side view the operation of the arrangement of FIGURE 2 for transmitted light from the spatial light modulator 48 in a privacy mode of operation with high reflectivity of ambient light. Head-on light ray 445 has a polarisation state 360 that is substantially unmodified by polar control retarders 300A, 300B. By comparison, off-axis light ray 447 has an output from the first polar control retarder that has an imparted phase difference to provide in general an elliptical state 362A. On incidence with first additional polariser 318A the luminance of the ray 447 is reduced with output state 360. Said light ray 447 is transmitted through reflective polariser 302 with small loss and is incident on the second polar control retarder 300B at which further phase modulation is provided and an output polarisation state 362B is achieved. Such state 362B is at least in part absorbed by second additional polariser 318B. Ray 447 is thus transmitted at off-axis polar locations with reduced luminance compared to the ray 447 in FIGURE 21A.

The operation of the reflective polariser 302 will now be described.

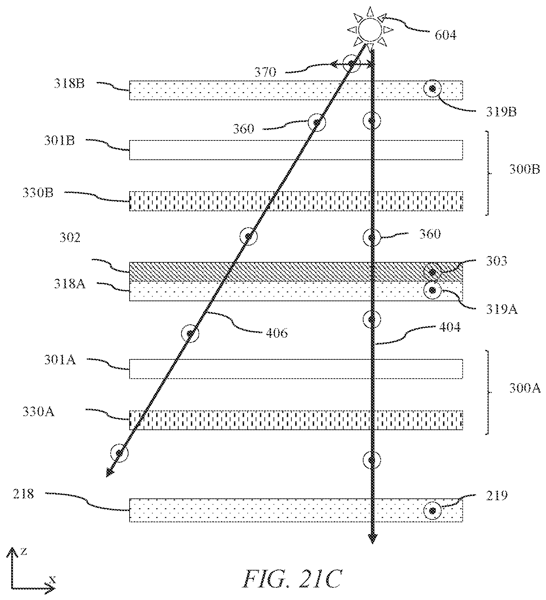

**FIGURE** 21C is a schematic diagram illustrating in side view the operation of the arrangement of FIGURE 18A for incident ambient light 604 in the share mode of operation. Light rays 404, 406 are incident on the display device 100 with substantially unpolarised state 370. The polariser 318B provides a polarisation state 360 that is incident on the first polar control retarder and is substantially unmodified for head-on ray 404 and off-axis ray 406. Thus the light rays are substantially not reflected by the display are absorbed in the spatial light modulator 48 and backlight 20 if present. The display reflectivity is maintained at a low level for a wide range of viewing directions and advantageously a high contrast image is seen by multiple display users.

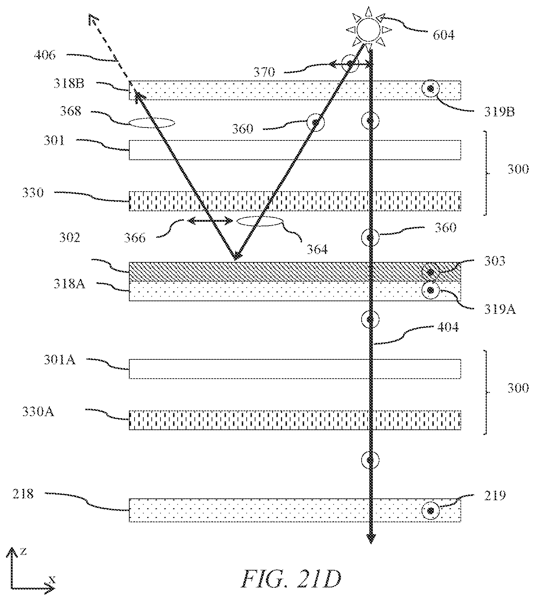

**FIGURE 21D** is a schematic diagram illustrating in side view the operation of the arrangement of FIGURE 18A for ambient light in a privacy mode of operation with high reflectivity of ambient light. Head-on incident ambient light ray 404 is transmitted with substantial reflection from the reflective polariser 302. Features of the embodiments of FIGURES 21A-D not discussed in further detail may be assumed to correspond to the features with equivalent reference numerals as discussed above, including any potential variations in the features.

By comparison light ray 406 undergoes a phase modulation at the polar control retarder 300B such that state 364 illuminates the reflective polariser. The resolved polarisation state 366 that is orthogonal to the electric vector transmission direction 303 of the reflective polariser 302 is reflected and is passed through the polar retarder such that polarisation state 368 is incident on to the second additional polariser. The component of the state 368 that is parallel to the electric vector transmission direction of the polariser 318B is thus transmitted. To an off-axis observer 47. the display appears to have increased reflectivity. Said increased reflectivity advantageously achieves increased security factor, S as described above.

As may be used herein, the terms "substantially " and "approximately" provide an industry-accepted tolerance for its corresponding term and/or relativity between items. Such an industry-accepted tolerance ranges from zero percent to ten percent and corresponds to. but is not limited to, component values, angles, et cetera. Such relativity between items ranges between approximately zero percent to ten percent.

While various embodiments in accordance with the principles disclosed herein have been described above, it should be understood that they have been presented by way of example only. and not limitation. Thus, the scope of this invention should not be limited by any of the above-described exemplary embodiments, but should be defined only in accordance with the appended claims. Furthermore, the above advantages and features are provided in described embodiments, but shall not limit the application of such issued claims to processes and structures accomplishing any or all of the above advantages.

Additionally, the section headings herein are provided for consistency with the suggestions under 37 CFR 1.77 or otherwise to provide organizational cues. These headings shall not limit or characterize the embodiment(s) set out in any claims that may issue from this disclosure. Specifically and by way of example, although the headings refer to a "Technical Field." the claims should not be limited by the language chosen under this heading to describe the so-called field. Furtₕer. a description of a technology in the "Background" is not to be construed as an admission that certain technology is prior art to any embodiment(s) in this disclosure. Neither is the "Summary" to be considered as a characterization of the embodiment(s) set forth in issued claims. Furthermore. any reference in this disclosure to "invention" in the singular should not be used to argue that there is only a single point of novelty in this disclosure. Multiple embodiments may be set forth according to the limitations of the multiple claims issuing from this disclosure. and such claims accordingly define the embodiment(s), and their equivalents, that are protected thereby. In all instances, the scope of such claims shall be considered on their own merits in light of this disclosure, but should not be constrained by the headings set fortₕ herein.

## Claims

1. A display device for use in ambient illumination comprising:
a spatial light modulator arranged to output light, wherein the spatial light modulator comprises an output polariser arranged on the output side of the spatial light modulator, the output polariser being a linear polariser;
a view angle control arrangement comprising:
an additional polariser arranged on the output side of the output polariser, the additional polariser being a linear polariser;
a reflective polariser arranged between the output polariser and the additional polariser, the reflective polariser being a linear polariser; and
at least one polar control retarder arranged between the reflective polariser and the additional polariser, the at least one polar control retarder including a switchable liquid crystal retarder comprising a layer of liquid crystal material, and first and second transmissive electrodes on opposite sides of the layer of liquid crystal material, wherein at least one of the first and second transmissive electrodes is patterned in areas separated by gaps to provide plural addressable regions of the layer of liquid crystal material, at least one of the plural regions being in a shape of a mark for display to an observer; and
a control system arranged to control the spatial light modulator and to apply voltages across the first and second transmissive electrodes for driving the layer of liquid crystal material,
wherein the control system is arranged to be operable in plural modes of operation, including:
a wide-angle operational display mode, in which the control system controls the spatial light modulator to display an operational image and applies voltages across the first and second transmissive electrodes that drive the layer of liquid crystal material into the same state in different regions such that the operational image is visible at a wide angle and a narrow angle, and the mark is not visible at the narrow angle or the wide angle;
at least one narrow-angle operational display mode, in which the control system controls the spatial light modulator to display an operational image and applies voltages across the first and second transmissive electrodes that drive the layer of liquid crystal material into states in different regions such that the operational image is visible at the narrow angle but not at the wide angle, and the mark is not visible at the narrow angle; and
at least one mark display mode in which the control system applies voltages across the first and second transmissive electrodes that drive the layer of liquid crystal material into different states in different regions such that the mark is visible.

2. A display device according to claim 1, wherein the at least one mark display mode includes a mark display mode in which the control system controls the spatial light modulator to display no image and applies voltages across the first and second transmissive electrodes that drive the layer of liquid crystal material into different states in different regions such that the mark is visible at the wide angle but not at the narrow angle.

3. A display device according to claim 1 or 2, wherein the at least one mark display mode includes a mark display mode in which the control system controls the spatial light modulator to display an illumination image for illuminating the mark and applies voltages across the first and second transmissive electrodes that drive the layer of liquid crystal material into the different states in different regions such that the mark is visible at the wide angle and at the narrow angle.

4. A display device according to any one of the preceding claims, wherein the at least one narrow-angle operational display mode includes a narrow-angle operational display mode in which the control system controls the spatial light modulator to display an operational image and applies voltages across the first and second transmissive electrodes that drive the layer of liquid crystal material into the same state in different regions such that the mark is not visible at the wide angle.

5. A display device according to any one of the preceding claims, wherein the at least one narrow-angle operational display mode includes a narrow-angle operational display mode in which the control system controls the spatial light modulator to display an operational image and applies voltages across the first and second transmissive electrodes that drive the layer of liquid crystal material into different states in different regions such that the mark is visible at the wide angle.

6. A display device according to any one of the preceding claims, wherein the mark is an icon or text.

7. A display device according to any one of the preceding claims, wherein the gaps have a width of at most the twice the thickness of the layer of liquid crystal material, and preferably at most the thickness of the layer of liquid crystal material.

8. A display device according to any one of the preceding claims, wherein each of the first and second transmissive electrodes are patterned to provide plural areas separated by gaps, wherein the gaps that are aligned across the layer of liquid crystal material are offset, wherein the offset is at least the thickness of the layer of liquid crystal material, and preferably at least twice the thickness of the layer of liquid crystal material.

9. A display device according to claim 8, wherein
the plural regions include at least one island region and at least one peripheral region extending around the island region, and
areas of the first and second transmissive electrodes that are aligned with the at least one peripheral region have bridging slit that are aligned across the layer of liquid crystal material and through which extend bridging tracks connected to areas of the first and second transmissive electrodes that are aligned with the at least one island region.

10. A display device according to any one of claims 8 or 9, wherein
the plural regions include at least one distal region that is not adjacent to an outer edge of the first and second transmissive electrodes and at least one proximal region that is adjacent to the outer edge of the first and second transmissive electrodes, and
areas of the first and second transmissive electrodes that are aligned with the at least one proximal region have at least one connection slit through which extend at least one connection track connected to areas of the first and second transmissive electrodes that are aligned with the at least one distal region, the at least one connection track extending to the outer edge of the first and second transmissive electrodes, the control system being connected to the at least one connection track at the outer edge for applying voltages to the at least one distal region.

11. A display device according to claim 10, wherein the at least one connection track connected to the areas of the first and second transmissive electrodes that are aligned with the at least one distal region are not aligned with each other across the layer of liquid crystal material.

12. A display device according to claim 11, wherein the control system is arranged to apply respective voltage signals to the at least one connection track and to the at least one proximal region having amplitude and phase that are selected to apply voltages across the first and second transmissive electrodes that drive the plural regions of the layer of liquid crystal material into a desired state in accordance with the mode of operation in each of the at least one distal region, the parts of the at least one proximal region aligned with the at least one connection track, and the remainder of the proximal regions.

13. A display device according to any one of claims 1 to 7, wherein one of the first and second transmissive electrodes is patterned in areas separated by gaps, and the other of the first and second transmissive electrodes is not patterned.

14. A display device according to any one of the preceding claims, wherein the plural regions include at least one distal region that is not adjacent to an outer edge of the first and second transmissive electrodes and at least one proximal region that is adjacent to the outer edge of the first and second transmissive electrodes, wherein areas of at least one of the first and second transmissive electrodes that are aligned with the at least one distal region are connected to areas of the same transmissive electrode that are aligned with the at least one proximal region by a connector that is configured to provide a resistance between the connected areas.

15. A display device according to any one of the preceding claims, wherein the operational image is visible, or is not visible, when a security factor Sₙ defined at the angle in question is, for all the regions. less than 1.0, or at least 1.0, respectively, where the security factor Sₙ is given by the equation: ${S}_{n} = {log}_{10} \left[1+{ρ}_{n}.α/\left(π.{P}_{n}\right)\right]$ wherein:
*ρₙ* is the reflectivity of the display device at the angle in question;
*Pₙ* is the ratio of the luminance of the display device at the angle in question to the maximum luminance of the display device;
π is a solid angle in units of steradians; and
α is a factor having a value of 4.0 steradians,
and wherein the mark is visible, or is not visible when the security factor Sₙ defined at the angle in question is different, or is the same, respectively, in the at least one of the plural regions in a shape of a mark and in the other regions.

## Patentansprüche

1. Anzeigevorrichtung für die Verwendung bei Umgebungsbeleuchtung, umfassend:
einen räumlichen Lichtmodulator, der angeordnet ist, um Licht auszugeben, wobei der räumliche Lichtmodulator einen Ausgabepolarisator umfasst, der auf der Ausgabeseite des räumlichen Lichtmodulators angeordnet ist, wobei der Ausgabepolarisator ein linearer Polarisator ist;
eine Steueranordnung für den Betrachtungswinkel, umfassend:
einen zusätzlichen Polarisator, der auf der Ausgabeseite des Ausgabepolarisators angeordnet ist, wobei der zusätzliche Polarisator ein linearer Polarisator ist;
einen reflektierenden Polarisator, der zwischen dem Ausgabepolarisator und dem zusätzlichen Polarisator angeordnet ist, wobei der reflektierende Polarisator ein linearer Polarisator ist; und
wenigstens einen Polarsteuerverzögerer, der zwischen dem reflektierenden Polarisator und dem zusätzlichen Polarisator angeordnet ist, wobei der wenigstens eine Polarsteuerverzögerer einen schaltbaren Flüssigkristallverzögerer, der eine Schicht aus Flüssigkristallmaterial umfasst, und eine erste und eine zweite durchlässige Elektrode auf gegenüberliegenden Seiten der Schicht aus Flüssigkristallmaterial beinhaltet, wobei wenigstens eine der ersten und der zweiten durchlässigen Elektrode auf durch Spalten getrennten Flächen strukturiert ist, um mehrere adressierbare Bereiche der Schicht aus Flüssigkristallmaterial bereitzustellen, wobei wenigstens einer der mehreren Bereiche die Form eines Zeichens zum Anzeigen für einen Betrachter aufweist; und
ein Steuersystem, das dazu angeordnet ist, um den räumlichen Lichtmodulator zu steuern und Spannungen über die erste und die zweite durchlässige Elektrode hinweg anzulegen, um die Schicht aus Flüssigkristallmaterial anzusteuern,
wobei das Steuersystem angeordnet ist, um in mehreren Betriebsmodi betriebsfähig zu sein, die beinhalten:
einen Weitwinkelbetriebsanzeigemodus, in dem das Steuersystem den räumlichen Lichtmodulator steuert, um ein Betriebsbild anzuzeigen, und Spannungen über die erste und die zweite durchlässige Elektrode hinweg anlegt, die die Schicht aus Flüssigkristallmaterial in verschiedenen Bereichen in denselben Zustand ansteuern, sodass das Betriebsbild in einem Weitwinkel und in einem Engwinkel sichtbar ist, und das Zeichen in dem Engwinkel oder in dem Weitwinkel nicht sichtbar ist;
wenigstens einen Engwinkelbetriebsanzeigemodus, in dem das Steuersystem den räumlichen Lichtmodulator steuert, um ein Betriebsbild anzuzeigen, und Spannungen über die erste und die zweite durchlässige Elektrode hinweg anlegt, die die Schicht aus Flüssigkristallmaterial in verschiedenen Bereichen in Zustände ansteuern, sodass das Betriebsbild in dem Weitwinkel jedoch nicht in dem Engwinkel sichtbar ist, und das Zeichen in dem Engwinkel nicht sichtbar ist; und
wenigstens einen Zeichenanzeigemodus, in dem das Steuersystem Spannungen über die erste und die zweite durchlässige Elektrode hinweg anlegt, die die Schicht aus Flüssigkristallmaterial in verschiedenen Bereichen in verschiedene Zustände ansteuern, sodass das Zeichen sichtbar ist.

2. Anzeigevorrichtung nach Anspruch 1, wobei der wenigstens eine Zeichenanzeigemodus einen Zeichenanzeigemodus beinhaltet, in dem das Steuersystem den räumlichen Lichtmodulator steuert, um kein Bild anzuzeigen, und Spannungen über die erste und die zweite durchlässige Elektrode hinweg anlegt, die die Schicht aus Flüssigkristallmaterial in verschiedenen Bereichen in verschiedene Zustände ansteuern, sodass das Zeichen in dem Weitwinkel jedoch nicht in dem Engwinkel sichtbar ist.

3. Anzeigevorrichtung nach Anspruch 1 oder 2, wobei der wenigstens eine Zeichenanzeigemodus einen Zeichenanzeigemodus beinhaltet, in dem das Steuersystem den räumlichen Lichtmodulator steuert, um ein Beleuchtungsbild zum Beleuchten des Zeichens anzuzeigen, und Spannungen über die erste und die zweite durchlässige Elektrode hinweg anlegt, die die Schicht aus Flüssigkristallmaterial in verschiedenen Bereichen in verschiedene Zustände ansteuern, sodass das Zeichen in dem Weitwinkel und in dem Engwinkel sichtbar ist.

4. Anzeigevorrichtung nach einem der vorstehenden Ansprüche, wobei der wenigstens eine Engwinkelbetriebsanzeigemodus einen Engwinkelbetriebsanzeigemodus beinhaltet, in dem das Steuersystem den räumlichen Lichtmodulator steuert, um ein Betriebsbild anzuzeigen, und Spannungen über die erste und die zweite durchlässige Elektrode hinweg anlegt, die die Schicht aus Flüssigkristallmaterial in verschiedenen Bereichen in denselben Zustand ansteuern, sodass das Zeichen in dem Weitwinkel nicht sichtbar ist.

5. Anzeigevorrichtung nach einem der vorstehenden Ansprüche, wobei der wenigstens eine Engwinkelbetriebsanzeigemodus einen Engwinkelbetriebsanzeigemodus beinhaltet, in dem das Steuersystem den räumlichen Lichtmodulator steuert, um ein Betriebsbild anzuzeigen, und Spannungen über die erste und die zweite durchlässige Elektrode hinweg anlegt, die die Schicht aus Flüssigkristallmaterial in verschiedenen Bereichen in verschiedene Zustände ansteuern, sodass das Zeichen in dem Weitwinkel sichtbar ist.

6. Anzeigevorrichtung nach einem der vorstehenden Ansprüche, wobei das Zeichen ein Symbol oder Text ist.

7. Anzeigevorrichtung nach einem der vorstehenden Ansprüche, wobei die Spalten eine Breite von höchstens dem Doppelten der Dicke der Schicht aus Flüssigkristallmaterial und vorzugsweise höchstens der Dicke der Schicht aus Flüssigkristallmaterial aufweisen.

8. Anzeigevorrichtung nach einem der vorstehenden Ansprüche, wobei jede der ersten und der zweiten durchlässigen Elektrode strukturiert ist, um mehrere durch Spalten getrennte Flächen bereitzustellen, wobei die Spalten, die über die Schicht aus Flüssigkristallmaterial hinweg ausgerichtet sind, versetzt sind, wobei der Versatz wenigstens die Dicke der Schicht aus Flüssigkristallmaterial ist und vorzugsweise wenigstens das Doppelte der Dicke der Schicht aus Flüssigkristallmaterial ist.

9. Anzeigevorrichtung nach Anspruch 8, wobei
die mehreren Bereiche wenigstens einen Inselbereich und wenigstens einen sich um den Inselbereich herum erstreckenden Randbereich beinhalten, und
Flächen der ersten und der zweiten durchlässigen Elektrode, die an dem wenigstens einen Randbereich ausgerichtet sind, Brückenschlitze aufweisen, die über die Schicht aus Flüssigkristallmaterial hinweg ausgerichtet sind und durch die sich Brückenspuren erstrecken, die mit Flächen der ersten und der zweiten durchlässigen Elektrode verbunden sind, die an dem wenigstens einen Inselbereich ausgerichtet sind.

10. Anzeigevorrichtung nach einem der Ansprüche 8 oder 9, wobei
die mehreren Bereiche wenigstens einen distalen Bereich, der nicht an einen Außenrand der ersten und der zweiten durchlässigen Elektrode angrenzt, und wenigstens einen proximalen Bereich beinhalten, der an den Außenrand der ersten und der zweiten durchlässigen Elektrode angrenzt, und
Flächen der ersten und der zweiten durchlässigen Elektrode, die an dem wenigstens einen proximalen Bereich ausgerichtet sind, wenigstens einen Verbindungsschlitz aufweisen, durch den sich wenigstens eine Verbindungsspur erstreckt, die mit Flächen der ersten und der zweiten durchlässigen Elektrode verbunden ist, die an dem wenigstens einen distalen Bereich ausgerichtet sind, wobei sich die wenigstens eine Verbindungsspur bis zu dem Außenrand der ersten und der zweiten durchlässigen Elektrode erstreckt, wobei das Steuersystem mit der wenigstens einen Verbindungsspur an dem Außenrand verbunden ist, um Spannungen an den wenigstens einen distalen Bereich anzulegen.

11. Anzeigevorrichtung nach Anspruch 10, wobei die wenigstens eine Verbindungsspur, die mit den Flächen der ersten und der zweiten durchlässigen Elektrode verbunden ist, die an dem wenigstens einen distalen Bereich ausgerichtet sind, über die Schicht aus Flüssigkristallmaterial hinweg nicht aneinander ausgerichtet sind.

12. Anzeigevorrichtung nach Anspruch 11, wobei das Steuersystem angeordnet ist, um jeweilige Spannungssignale an die wenigstens eine Verbindungsspur und an den wenigstens einen proximalen Bereich mit einer Amplitude und einer Phase anzulegen, die ausgewählt sind, um über die erste und die zweite durchlässige Elektrode hinweg Spannungen anzulegen, die die mehreren Bereiche der Schicht aus Flüssigkristallmaterial in einen gewünschten Zustand gemäß dem Betriebsmodus in jedem des wenigstens einen distalen Bereichs, der an der wenigstens einen Verbindungsspur ausgerichteten Teile des wenigstens einen proximalen Bereichs und des Rests der proximalen Bereiche ansteuern.

13. Anzeigevorrichtung nach einem der Ansprüche 1 bis 7, wobei eine der ersten und der zweiten durchlässigen Elektrode in durch Spalten getrennten Flächen strukturiert ist und die andere der ersten und der zweiten durchlässigen Elektrode nicht strukturiert ist.

14. Anzeigevorrichtung nach einem der vorstehenden Ansprüche, wobei die mehreren Bereiche wenigstens einen distalen Bereich, der nicht an einen Außenrand der ersten und der zweiten durchlässigen Elektrode angrenzt, und wenigstens einen proximalen Bereich beinhalten, der an den Außenrand der ersten und der zweiten durchlässigen Elektrode angrenzt, wobei Flächen wenigstens einer der ersten und der zweiten durchlässigen Elektrode, die an dem wenigstens einen distalen Bereich ausgerichtet sind, mit Flächen derselben durchlässigen Elektrode, die an dem wenigstens einen proximalen Bereich ausgerichtet sind, über ein Verbindungselement verbunden sind, das dazu konfiguriert ist, einen Widerstand zwischen den verbundenen Flächen bereitzustellen.

15. Anzeigevorrichtung nach einem der vorstehenden Ansprüche, wobei das Betriebsbild sichtbar ist oder nicht sichtbar ist, wenn ein in dem betreffenden Winkel definierter Sicherheitsfaktor Sₙ für alle Bereiche kleiner als 1,0 bzw. wenigstens 1,0 ist, wobei der Sicherheitsfaktor Sₙ durch die Gleichung gegeben ist: ${S}_{n} = {log}_{10} \left[1+{ρ}_{n}.α/\left(π.{P}_{n}\right)\right]$ wobei:
*ρₙ* das Reflexionsvermögen der Anzeigevorrichtung in dem betreffenden Winkel ist;
*Pₙ* das Verhältnis der Leuchtdichte der Anzeigevorrichtung in dem betreffenden Winkel zu der maximalen Leuchtdichte der Anzeigevorrichtung ist;
*π* ein Raumwinkel in Einheiten von Steradiant ist; und
*α* ein Faktor mit einem Wert von 4,0 Steradiant ist,
und wobei das Zeichen sichtbar ist oder nicht sichtbar ist, wenn der Sicherheitsfaktor Sₙ, der in dem betreffenden Winkel definiert ist, in dem wenigstens einen der mehreren Bereiche in einer Form eines Zeichens und in den anderen Bereichen verschieden ist bzw. derselbe ist.

## Revendications

1. Dispositif d'affichage pour une utilisation en illumination ambiante comprenant :
un modulateur de lumière spatial agencé pour fournir en sortie de la lumière, dans lequel le modulateur de lumière spatial comprend un polariseur de sortie agencé sur le côté sortie du modulateur de lumière spatial, le polariseur de sortie étant un polariseur linéaire ;
un agencement de commande d'angle de vue comprenant :
un polariseur supplémentaire agencé sur le côté sortie du polariseur de sortie, le polariseur supplémentaire étant un polariseur linéaire ;
un polariseur réfléchissant agencé entre le polariseur de sortie et le polariseur supplémentaire, le polariseur réfléchissent étant un polariseur linéaire ; et
au moins un retardateur de commande polaire agencé entre le polariseur réfléchissant et le polariseur supplémentaire, l'au moins un retardateur de commande polaire comportant un retardateur à cristaux liquides commutable comprenant une couche de matériau à cristaux liquides, et des première et deuxième électrodes transmissives sur des côtés opposés de la couche de matériau à cristaux liquides, dans lequel au moins l'une des première et deuxième électrodes transmissives comporte un motif dans des zones séparées par des écartements pour fournir plusieurs régions adressables de la couche de matériau à cristaux liquides, au moins l'une des plusieurs régions étant sous une forme d'un repère pour un affichage à un observateur ; et
un système de commande agencé pour commander le modulateur de lumière spatial et pour appliquer des tensions aux bornes des première et deuxième électrodes transmissives pour piloter la couche de matériau à cristaux liquides,
dans lequel le système de commande est agencé pour pouvoir fonctionner dans plusieurs modes de fonctionnement, comportant :
un mode d'affichage fonctionnel à grand angle, dans lequel le système de commande commande le modulateur de lumière spatial pour afficher une image fonctionnelle et applique des tensions aux bornes des premières et deuxième électrodes transmissives qui pilotent la couche de matériau à cristaux liquides dans le même état dans différentes régions de telle sorte que l'image fonctionnelle est visible selon un grand angle et un petit angle, et le repère n'est pas visible selon le petit angle ou le grand angle ;
au moins un mode d'affichage fonctionnel à petit angle, dans lequel le système de commande commande le modulateur de lumière spatial pour afficher une image fonctionnelle et applique des tensions aux bornes des première et deuxième électrodes transmissives qui pilotent la couche de matériau à cristaux liquides dans des états dans différentes régions de telle sorte que l'image fonctionnelle est visible selon le petit angle, mais pas selon le grand angle, et le repère n'est pas visible selon le petit angle ; et
au moins un mode d'affiche de repère dans lequel le système de commande applique des tensions aux bornes des première et deuxième électrodes transmissives qui pilotent la couche de matériau à cristaux liquides dans différents états dans différentes régions de telle sorte que le repère est visible.

2. Dispositif d'affichage selon la revendication 1, dans lequel l'au moins un mode d'affichage de repère comporte un mode d'affichage de repère dans lequel le système de commande commande le modulateur de lumière spatial pour n'afficher aucune image et applique des tensions aux bornes des première et deuxième électrodes transmissives qui pilotent la couche de matériau à cristaux liquides dans différents états dans différentes régions de telle sorte le repère est visible selon le grand angle, mais pas selon le petit angle.

3. Dispositif d'affichage selon la revendication 1 ou 2, dans lequel l'au moins un mode d'affichage de repère comporte un mode d'affichage de repère dans lequel le système de commande commande le modulateur de lumière spatial pour afficher une image d'illumination pour illuminer le repère et applique des tensions aux bornes des première et deuxième électrodes transmissives qui pilotent la couche de matériau à cristaux liquides dans les différents états dans différentes régions de telle sorte que le repère est visible selon le grand angle et selon le petit angle.

4. Dispositif d'affichage selon l'une quelconque des revendications précédentes, dans lequel l'au moins un mode d'affichage fonctionnel à petit angle comporte un mode d'affichage fonctionnel à petit angle dans lequel le système de commande commande le modulateur de lumière spatial pour afficher une image fonctionnelle et applique des tensions aux bornes des première et deuxième électrodes transmissives qui pilotent la couche de matériau à cristaux liquides dans le même état dans différentes régions de telle sorte que le repère n'est pas visible selon le grand angle.

5. Dispositif d'affichage selon l'une quelconque des revendications précédentes, dans lequel l'au moins un mode d'affichage fonctionnel à petit angle comporte un mode d'affichage fonctionnel à petit angle dans lequel le système de commande commande le modulateur de lumière spatial pour afficher une image fonctionnelle et applique des tensions aux bornes des première et deuxième électrodes transmissives qui pilotent la couche de matériau à cristaux liquides dans différents états dans différentes régions de telle sorte que le repère est visible selon le grand angle.

6. Dispositif d'affichage selon l'une quelconque des revendications précédentes, dans lequel le repère est une icône ou un texte.

7. Dispositif d'affichage selon l'une quelconque des revendications précédentes, dans lequel les écartements ont une largeur d'au maximum deux fois l'épaisseur de la couche de matériau à cristaux liquides, et de préférence d'au maximum l'épaisseur de la couche de matériau à cristaux liquides.

8. Dispositif d'affichage selon l'une quelconque des revendications précédentes, dans lequel chacune des première et deuxième électrodes transmissives comporte un motif pour fournir plusieurs zones séparées par des écartements, dans lequel les écartements qui sont alignés en travers de la couche de matériau à cristaux liquides sont décalés, dans lequel le décalage est d'au moins l'épaisseur de la couche de matériau à cristaux liquides, et de préférence d'au moins deux fois l'épaisseur de la couche de matériau à cristaux liquides.

9. Dispositif d'affichage selon la revendication 8, dans lequel
les plusieurs régions comportent au moins une région d'îlot et au moins une région périphérique s'étendant autour de la région d'îlot, et
des zones des première et deuxième électrodes transmissives qui sont alignées avec l'au moins une région périphérique ont des fentes de pontage qui sont alignées en travers de la couche de matériau à cristaux liquides et à travers lesquelles s'étendent des pistes de pontage reliées à des zones des première et deuxième électrodes transmissives qui sont alignées avec l'au moins une région d'îlot.

10. Dispositif d'affichage selon l'une quelconque des revendications 8 ou 9, dans lequel
les plusieurs régions comportent au moins une région distale qui n'est pas adjacente à un bord externe des première et deuxième électrodes transmissives et au moins une région proximale qui est adjacente au bord externe des première et deuxième électrodes transmissives, et
des zones des première et deuxième électrodes transmissives qui sont alignées avec l'au moins une région proximale ont au moins une fente de liaison à travers laquelle s'étend au moins une piste de liaison reliée à des zones des première et deuxième électrodes transmissives qui sont alignées avec l'au moins une région distale, l'au moins une piste de liaison s'étendant jusqu'au bord externe des première et deuxième électrodes transmissives, le système de commande étant relié à l'au moins une piste de liaison au niveau du bord externe pour appliquer des tensions à l'au moins une région distale.

11. Dispositif d'affichage selon la revendication 10, dans lequel l'au moins une piste de liaison reliée aux zones des première et deuxième électrodes transmissives qui sont alignées avec l'au moins une région distale n'est pas alignée avec les autres en travers de la couche de matériau à cristaux liquides.

12. Dispositif d'affichage selon la revendication 11, dans lequel le système de commande est agencé pour appliquer des signaux de tension respectifs à l'au moins une piste de liaison et à l'au moins une région proximale ayant une amplitude et une phase qui sont sélectionnées pour appliquer des tensions aux bornes des première et deuxième électrodes transmissives qui pilotent les plusieurs régions de la couche de matériau à cristaux liquides dans un état souhaité conformément au mode de fonctionnement dans chacune de l'au moins un région distale, des parties de l'au moins une région proximale alignée avec l'au moins une piste de liaison, et du reste des régions proximales.

13. Dispositif d'affichage selon l'une quelconque des revendications 1 à 7, dans lequel l'une des première et deuxième électrodes transmissives comporte un motif dans des zones séparées par des écartements, et l'autre des première et deuxième électrodes transmissives ne comporte pas de motif.

14. Dispositif d'affichage selon l'une quelconque des revendications précédentes, dans lequel les plusieurs régions comportent au moins une région distale qui n'est pas adjacente à un bord externe des première et deuxième électrodes transmissives et au moins une région proximale qui est adjacente au bord externe des première et deuxième électrodes transmissives, dans lequel des zones d'au moins l'une des première et deuxième électrodes transmissives qui sont alignées avec l'au moins une région distale sont reliées à des zones de la même électrode transmissive qui sont alignées avec l'au moins une région proximale par un dispositif de liaison qui est configuré pour fournir une résistance entre les zones reliées.

15. Dispositif d'affichage selon l'une quelconque des revendications précédentes, dans lequel l'image fonctionnelle est visible, ou n'est pas visible, lorsqu'un facteur de sécurité Sₙ défini selon l'angle en question est, pour toutes les régions, inférieur à 1,0, ou d'au moins 1,0, respectivement, le facteur de sécurité Sₙ étant donné par l'équation : ${S}_{n} = {log}_{10} \left[1+{ρ}_{n}.α/\left(π.{P}_{n}\right)\right]$ où :
*ρₙ* est la réflectivité du dispositif d'affichage selon l'angle en question ;
*Pₙ* est le rapport entre la luminance du dispositif d'affichage selon l'angle en question et la luminance maximale du dispositif d'affichage ;
π est un angle solide en unités de stéradians ; et
α est un facteur ayant une valeur de 4,0 stéradians,
et dans lequel le repère est visible, ou n'est pas visible lorsque le facteur de sécurité Sₙ défini selon l'angle en question est différent, ou est identique, respectivement, dans l'au moins une des plusieurs régions sous une forme d'un repère et dans les autres régions.
